# EUROPEAN PATENT APPLICATION

(11) **EP 0 774 725 A2**
(43) Date of publication of application: **21.05.1997**
(21) Application number: 96304925.9
(22) Date of filing: 03.07.1996
(51) Int. Cl.: G06F 17/60

(54) **Method and apparatus for distributing conditional work flow processes among a plurality of users**

(30) Priority: 14.11.1995 US 557531
(71) Applicant: Dun & Bradstreet Software Services, Inc., Atlanta, Georgia 30326-1276 (US)
(72) Inventor: Rossi, Charles, Northborough, Massachusetts 01532 (US); Vinter, Stephen, Ashland, Massachusetts 01721 (US); Conte, Leonard, Northborough, Massachusetts 01532 (US); Chang, S. Jay, Acton, Massachusetts 01720 (US); Botzer, Robert, Framingham, Massachusetts 01701 (US); McAllister, Sandra, Lancaster, Massachusetts 01523 (US); Dorden, Joanne, Grafton, Massachusetts 01519 (US)
(74) Representative: Brunner, Michael John

(57) **Abstract**

In accordance with the teachings of the present invention, a new computerized information flow distribution technology (work flow) is provided. One feature of the present invention allows the use of conditional logic in determining how information is routed among users. Specifically, conditional logic may be used to determine what the next step in the workflow should be, to determine who the next step should be assigned to, to select which approvers on an approval list are used, etc. Various types of conditional comparisons may be made in order to perform this functionality. Yet another feature of the present invention allows the use of a graphical tool for creating and mapping the work flow processes.

## Description

This invention relates generally to automated information flow technology and, in particular, to a system for maintaining and conditionally distributing information between a plurality of users in a transactional based information flow environment.

The use of computer systems as a means of gathering and distributing information has become commonplace in modem organizations. Prior art computer systems typically use "document based" technology to gather and distribute the organization's information in the form of computer documents stored as files.

In recent years, advancements in "document based" computer system technology have been made which facilitate the flow of information between individuals within the organization. One common procedure, known as "work flow" allows work-related information to flow among individuals within the organization. The information flows in a "document-based" form that typically follows a model of a manual work flow process, where documents are physically routed from one individual to another. Further, the "document based" computing procedure provides a means for the individuals (users of the computer system) to add, delete or change information within the computer document. The revised document is then disseminated or flowed to other users within the organization following the manual work flow model.

An example of such a work flow is the routing of a document within an organization for the purpose of obtaining an approval. In a computer system for implementing a purchase order flow, a first user, such as a purchasing agent, initially creates a purchase order document. The creation of the purchase order document may include adding purchase order information to a computerized purchase order document image, drafting a purchase order computer document or a combination of both. After the purchase order document is created and at the command of the purchasing agent, the document may then be electronically routed to the second user, such as the purchasing manager, who could simply approve/disapprove the document or may add, delete or change information in the document prior to giving his/her approval. Finally, the document may be electronically routed to a third user, such as a finance or engineering manager, who may either approve or disapprove the purchase order document. The document may then be electronically routed back to the purchasing agent, who may then act upon the document accordingly.

A drawback associated with the above prior art technology is that an entire document image, or at least all the information contained within the document, must be accessed by each individual in the information flow. This will occur even if any one of the individuals is only interested in some, but not all, of the information in the document. For example, the purchasing manager might only be interested in information related to the quantity and vendor of a requested part, while the finance manager might only be interested in the quantity and cost of the part. Nonetheless, both the original paper order system and its computerized implementation provide all of the information in the purchase order to everyone, rather than only the information relevant to each individuals specific needs. Where large documents are involved, each individual may be then forced to sift through much information irrelevant to his or her job function.

Moreover, where documents contain sensitive information, which typically is reserved for only for specific individuals, prior art information flow systems require the creation of multiple documents with varying security authorizations and particular routing schemes for each of these documents. Thus, the prior art computerized information flow technologies are riddled with inefficiencies.

Another shortcoming associated with the above prior art technology is that the "document based" information is routed on an "ad hoc" basis. In other words, the routing of the "document based" information is controlled exclusively by the user who last added, deleted or changed information in the document. Therefore, the prior art systems rely on the users using the system to promptly and correctly route the documents to other individuals within the organization.

Limitations related to this prior art "ad hoc" technology include the possibility of users losing, misplacing, or misdirecting documents. Moreover, this prior art technology may result in time lags, procedural steps being missed, and people being left out of the process. Accountability is also a problem since many prior art systems provide no effective way to determine who is responsible for the problems caused with improper routing of a document.

Certain of the shortcomings of prior art systems have been improved upon by recent developments in work flow technology, including the inventions disclosed and claimed in co-pending U.S. Patent Application Serial No. 08/213,022, filed March 14, 1994, and U.S. Patent Application Serial No. 08/475,575, filed June 7, 1995, both commonly assigned to the assignee of the present patent application. U.S. Patent Application Serial No. 08/213,022 and U.S. Patent Application Serial No. 08/475,575 are incorporated herein by reference thereto.

U.S. Patent Application Serial No. 08/213,022 is directed to a new work flow technology which introduces a process and apparatus for facilitating the flow of information between various computer users of networked computers to complete predefined procedures within an organization. The invention of this prior co-pending patent application facilitates the flow of information by providing a unique method for logically and automatically routing information through a predefined sequence of activities to users who need the information and can act on the information. While the invention of Application Serial No. 08/213,022 represents a significant improvement over prior art work flow techniques, it is still limited in certain respects. For example, although the work flow processes using this prior invention allow users on various interconnected computers to all participate in the defined work flow, the actual work flow definitions must generally be created on a central computer system (server), resulting in the possibility of bottlenecks. Moreover, if this central computer system becomes inoperational for some reason, the entire work flow processes risk coming to a halt, even though other computers scattered throughout the network remain operational.

U.S. Patent Application Serial No. 08/475,575 is directed to a new workflow technology that overcomes some of the limitations described above. For example, this application describes a process and apparatus for distributing work flow over a plurality of computer systems, thereby minimizing the potential for bottlenecks and allowing work flow to continue even in the presence of a failure of one or more of the servers.

Nonetheless, the previously described systems still are limited in certain respects. For example, work flow models may be created utilizing certain conditional logic, but this conditional logic is limited in its breadth. Further, the creation of the work flow model in previous systems is a somewhat cumbersome process, requiring the system administrator or developer to manually create the various dependencies within the work flow scheme.

The above illustrates just some of the problems associated with the prior art technology. These drawbacks and other shortcomings are effectively overcome by the present invention, as described in further detail below.

In accordance with the teachings of the present invention, a new computerized information flow distribution technology is provided. The present invention improves on a new method and apparatus for distributing information between a plurality of individuals with an organization, which was disclosed in co-pending U.S. Patent Applications Serial No. 08/213,022 and Serial No. 08/475,575, and which are incorporated herein by reference. Like these previous patent applications, the present invention continues to utilize "transactional based automated information flow" technology.

The technology is "transactional based" because it is based on relational database transaction technology, providing fine-grained serializability correctness for concurrent and atomic access to widely dynamic and diverse data elements stored in distributed repositories. This technology improves on the prior art "document based" technology which provides access to document-based data only. . Therefore, the "transactional based" technology improves on the "document based" technology because it provides diverse types of interrelated data to be concurrently accessible using a high-capacity, highly performant implementation.

The technology is "automated" because the information entered by one user is logically and automatically distributed through a predefined sequence to users who need the information. This technology improves on the "ad hoc" technology which only distributes information to other users designated by the user who last added, deleted or changed the information and only upon specific instructions from the user. Therefore, the "automated" technology improves on the "ad hoc" information flow technology because it allows information within an organization to be promptly, accurately, and sequentially routed to users through an information flow process predefined by the organization.

The "transactional based automated information flow" computer system of the present invention may be used in almost any organization, regardless of the location of the users within the organization. For example, users may be located across the country or even around the world.

In a preferred embodiment, the present invention may include one or more storage facilities (*e.g*., servers) located at each location within the organization. Further, in order to optimize the distribution of the "transactional based automated information flow" across the various storage facilities, the present invention uses replication techniques. These techniques are used to ensure that the storage facilities within the organization are periodically updated with information needed by the users of the computer system. In a preferred embodiment, the computer system includes a central storage facility, zero or more remote storage facilities, and a means for replicating data periodically. The central storage facility may be connected to the remote storage facilities through a hard-wired connection, a telecommunications link, or the like.

In one embodiment, the computer system provide 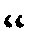 Platform data 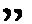 which is used to provide a common set of services to applications, including workflow and security. Platform data consists of two types of data elements: 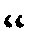 replicated data 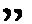 , for which identical copies reside at each storage facility in the computer system, and 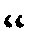 distributed data 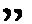 , which is partitioned and dispersed among each storage facility.

The central storage facility is used to store original copies of replicated platform data which is generally information that all or most of the users need to access in a primarily read-only mode. Specifically, the platform data often contains administration data used by the entire organization. An organization may locate the central storage facility anywhere within the organization but typically will choose a location in close proximity to the administrator of the computer system.

The remote storage facilities are used to store read-only copies of the replicated platform data, as well as original copies of the application data. The application data is typically application programs and data that only certain users or groups of users need to access. Since the remote storage facilities store platform and application data, an organization will typically locate a remote storage facility in close proximity to the certain users who utilize the application data.

Distributed platform data is the data that is associated with each user, such as their desktop. Initially, all users and their corresponding platform data are located on the central storage facility. Tools enable administrators to move users to remote storage facilitaties, thereby moving their corresonding platform data to these locations. Only one copy of a user's platform data exists at a time.

The means for replicating is preferably a computer program which periodically distributes updated platform data from the central storage facility to the remote storage facilities. The preferred replicating means is the proprietary replication service provided by the database vendor. In the case of Sybase, this is the Sybase Replication Server. Additionally, an Asynchronous Remote Procedure Call (ARPC) mechanism is used to ensure reliable updates involving data in a remote or multiple storage facilities.. Whenever the platform data is scheduled for replication, the platform data from the original copy stored at the central storage facility is copied to the to each remote storage facility.

Accordingly, the present invention eliminates problems associated with many prior art computer systems in which all users within an organization access the same copy of platform data from the same central storage facility. Specifically, the "single point of failure" drawback experienced with these prior art systems is practically eliminated in that a failure at the central storage facility will have little effect on a user accessing platform data from a particular remote storage facility providing no application data from the central storage facility is needed. Further, the bottleneck problems experienced when many users of the prior art computer systems attempt to access platform data at the central storage facility at the same time is substantially diminished. This results because smaller groups of users are now able to access the platform data from particular remote storage facilities assigned to the group. Moreover, the computer time for accessing the platform data from a central storage facility at a geographically remote location in the prior art computer systems is also diminished as platform data may now be stored on remote storage facilities located in close proximity to particular groups of users.

Another feature of the present invention allows the use of conditional logic in determining how information is routed among users. Specifically, conditional logic may be used to determine what the next step in the workflow should be, to determine who the next step should be assigned to, to select which approvers on an approval list are used, etc. Various types of conditional comparisons may be made in order to perform this functionality.

Yet another feature of the present invention allows the use of a graphical tool for creating and mapping the work flow processes.

The aforementioned and other aspects of the present invention are described in the detailed description and attached illustrations which follow.

FIGS. 1A, 1E, 1F and 1H depict various configurations of a client/server network, on which the present invention may be implemented.

FIG. 2 depicts a flow diagram of the basic information flow process according to the present invention.

FIG. 3 depicts a computer screen, according to a preferred embodiment of the present invention, displaying a user's drawer, folders and lists.

FIG. 4 depicts a computer screen, according to a preferred embodiment of the present invention, displaying an activity window.

FIG. 5 depicts an example of an activity and associated events.

FIG. 6 depicts the primary information contained in a next step according to a preferred embodiment of the present invention.

FIG. 7 depicts a computer screen, according to a preferred embodiment of the present invention, displaying a user's To Do Lists in the user's To Do List folder and an exemplary user's personalized To Do list containing next activities.

FIG. 8 depicts a computer screen, according to a preferred embodiment of the present invention, displaying a user's To Do Lists in the user's To Do list folder and an exemplary work group To Do list containing next activities.

FIG. 9 depicts an illustrative example of the basic information flow process depicted in FIG. 2.

FIG. 10 depicts the structure of a table according to a preferred embodiment of the present invention.

FIGS. 11-15 depict illustrative examples of tables used in a preferred embodiment of the present invention, including the tables relationships.

FIG. 16A depicts a computer screen, according to a preferred embodiment of the present invention, displaying the File mode where the user may select the New command to create an activity list.

FIG. 16B depicts a computer screen, according to a preferred embodiment of the present invention, displaying the New Browser Objects window, where the user may name an activity list and select the location for the activity list.

FIG. 16C depicts a computer screen, according to a preferred embodiment of the present invention, displaying the Browser mode which reveals all folders and lists for a user's drawer, where a user may select to add lists to folders.

FIG. 16D depicts a computer screen, according to a preferred embodiment of the present invention, displaying the Browser list window, where the user may select the Customize Activity List command to add an activity to an activity list.

FIG. 16E depicts a computer screen, according to a preferred embodiment of the present invention, displaying the Customize Activity List window, where the window reveals a list of activities the user may access.

FIG. 16F depicts a computer screen, according to a preferred embodiment of the present invention, displaying the New Browser Objects window where the user may name a To Do List and Select the location for the To Do list.

FIG. 16G depicts a computer screen, according to a preferred embodiment of the present invention, displaying the Browser mode which reveals all folders and lists for a user's drawer, where the user may select a To Do List in which to add a next activity category.

FIG. 16H depicts a computer screen, according to a preferred embodiment of the present invention, displaying a To Do List containing a plurality of next activity categories.

FIG. 16I depicts a computer screen, according to a preferred embodiment of the present invention, displaying the Browser list window, where the user may select the Move command to move a next activity category from the current To Do List to another To Do List.

FIG. 16J depicts a computer screen, according to a preferred embodiment of the present invention, displaying the Move mode list window which reveals a list of possible To Do Lists for the user to choose to move a next activity category.

FIG. 16K depicts a computer screen, according to a preferred embodiment of the present invention, displaying a To Do List containing a next activity which has been moved by the user to this To Do List.

FIG. 16L depicts a computer screen, according to a preferred embodiment of the present invention, displaying a To Do List containing individual next activities, where the user may select to move an individual next activity to another To Do List.

FIG. 16M depicts a computer screen, according to a preferred embodiment of the present invention, displaying the Browser list window, where the user may select the Move command to move an individual next activity from the current To Do List to another To Do List.

FIG. 16N depicts a computer screen, according to a preferred embodiment of the present invention, displaying the Move mode list window which reveals a list of possible To Do Lists for the user to choose to move an individual next activity.

FIG. 16O depicts a computer screen, according to a preferred embodiment of the present invention, displaying a To Do List after an individual next activity has been moved to another To Do List.

FIG. 16P depicts a computer screen, according to a preferred embodiment of the present invention, displaying a To Do List containing an individual next activity which has been moved to the To Do List from another To Do List.

FIG. 17A depicts a computer screen, according to a preferred embodiment of the present invention, displaying the Browser mode which reveals all folders and lists for a user's drawer, where a user may select to access a list, where the Sample Class Registration list has been selected and revealed, and where the Class Registration activity has been selected.

FIG. 17B depicts a computer screen, according to a preferred embodiment of the present invention, displaying an illustrative example of a Class Registration activity window.

FIG. 17C depicts a computer screen, according to a preferred embodiment of the present invention, displaying the Set Task Priority option in the Options mode, where the user creating a task may set the priority of the task as low, medium or high.

FIG. 17D depicts a flow diagram of a preferred embodiment for saving information in connection with an activity, determining the event associated with the activity, and accessing the Trigger Event function stored procedure.

FIG. 18 depicts a flow diagram of a preferred embodiment of the Trigger Event function stored procedure which determines the next steps for the flow of information process, in particular next activity(s) and user(s) responsible for performing the next activity(s).

FIG. 19 depicts a computer screen, according to a preferred embodiment of the present invention, displaying an illustrative example of a second Class Registration activity window.

FIG. 20 depicts a computer screen, according to a preferred embodiment of the present invention, displaying the Browser mode list window where the user may access a To Do List, where the "New To Do List" To Do List has been accessed, and where a list of next activity categories for the To Do List is revealed in the Summary To Do Category window.

FIG. 21 depicts a computer screen, according to a preferred embodiment of the present invention, displaying the Browser mode list window where the user may access a To Do List, where the "New To Do List" To Do List has been accessed, and where a list of next activities for the To Do List is revealed in the Detailed To Do Category window.

FIG. 22A depicts a computer screen, according to a preferred embodiment of the present invention, displaying the Summary To Do Category window where the "Select Payment Type for Class" next activity has been selected.

FIG. 22B depicts a computer screen, according to a preferred embodiment of the present invention, displaying an illustrative example of a Class Payment next activity window.

FIG. 22C depicts a computer screen, according to a preferred embodiment of the present invention, displaying an Options mode list accessed from the Class Registration activity window, where the user may select the Next Step command to access the next activity that occurs sequentially after the Class Registration activity and which the user is responsible for performing.

FIG. 23 depicts a flow diagram of a preferred embodiment of the Next Step procedure which determines the next activity that occurs sequentially after the just completed activity or next activity and which the user is responsible for performing.

FIG. 24 depicts a computer screen, according to a preferred embodiment of the present invention, displaying an illustrative example of a Class Payment next activity window which is the sequentially subsequent next activity after the just completed Class Registration activity and which the user is also responsible for performing.

FIG. 25 depicts a computer screen, according to a preferred embodiment of the present invention, displaying an Options mode list accessed from the Class Registration activity window, where the user may select the Next Task command to access a next activity to the computer screen based on priority settings.

FIG. 26 depicts a flow diagram of a preferred embodiment of the Next Task procedure which determines a next activity to display on the computer screen based on priority settings.

FIG. 27 depicts a computer screen, according to a preferred embodiment of the present invention, displaying an illustrative example of a Class Payment next activity which was selected by the Next Task procedure as a next activity that the user is responsible for performing.

FIG. 28 depicts a computer screen, according to a preferred embodiment of the present invention, displaying an illustrative example of a "New To Do List" To Do List containing two class payment activities, represented by the "Select payment type for Class" Category, which have been completed (done).

FIG. 29 depicts a computer screen, according to a preferred embodiment of the present invention, displaying the Workflow Workbench mode accessed by an administrator of the computer system of the present invention which displays an activity or corresponding event so that the administrator may define information flow procedures.

FIG. 30 depicts a computer screen, according to a preferred embodiment of the present invention, displaying the Zoom options list window, where the administrator may select an option to set up next steps in defining an information flow procedure.

FIG. 31 depicts a computer screen, according to a preferred embodiment of the present invention, displaying the Step Assignments window which was selected from the Zoom options list window, where next steps may be assigned by the administrator.

FIG. 32 depicts a computer screen, according to a preferred embodiment of the present invention, displaying the Step Assignments window of FIG. 31, where the administrator has partially selected next steps for the given activity.

FIG. 33 depicts a computer screen, according to a preferred embodiment of the present invention, displaying the Options mode list, where the Zoom option has been selected so that a next activity may be selected.

FIG. 34 depicts a computer screen, according to a preferred embodiment of the present invention, displaying a To Do Category window accessed from the Zoom option, where a next activity is selected by the administrator.

FIG. 35 depicts a computer screen, according to a preferred embodiment of the present invention, displaying the Step Assignments window of FIG. 31, where the users responsible for the next activity have been selected by the administrator.

FIG. 36 depicts a computer screen, according to a preferred embodiment of the present invention, displaying an illustrative example of a Workflow Workbench window where next steps have been defined to complete an information flow procedure.

FIG. 37 depicts a computer screen, according to a preferred embodiment of the present invention, displaying the Preferences window which allows the user to select specific features relevant to his or her To Do List, including refresh task counts at certain time intervals and notify the user when a new next activity has been added to his or her To Do List.

FIG. 38A depicts a computer screen, according to a preferred embodiment of the present invention, displaying a Summary To Do Category window, where completed next activities may be deleted manually.

FIG. 38B depicts a computer screen, according to a preferred embodiment of the present invention, displaying a Detailed To Do Category window, where completed next activities may be deleted manually.

FIG. 39 depicts a computer screen, according to a preferred embodiment of the present invention, displaying a Summary To Do Category window, where the user may obtain detailed information on a particular next activity.

FIG. 40 depicts a computer screen, according to a preferred embodiment of the present invention, displaying a To Do Informational window which reveals detailed information on a particular next activity.

FIGS. 41 through 52 depict various diagrams illustrating how the present invention may be implemented in a distributed manner.

FIGS. 54 through 74 depict various diagrams illustrating how the present invention may be implemented with conditional logic and with a graphical work flow mapping tool.

### DETAILED DESCRIPTION OF THE INVENTION:

### Distributed Work Flow

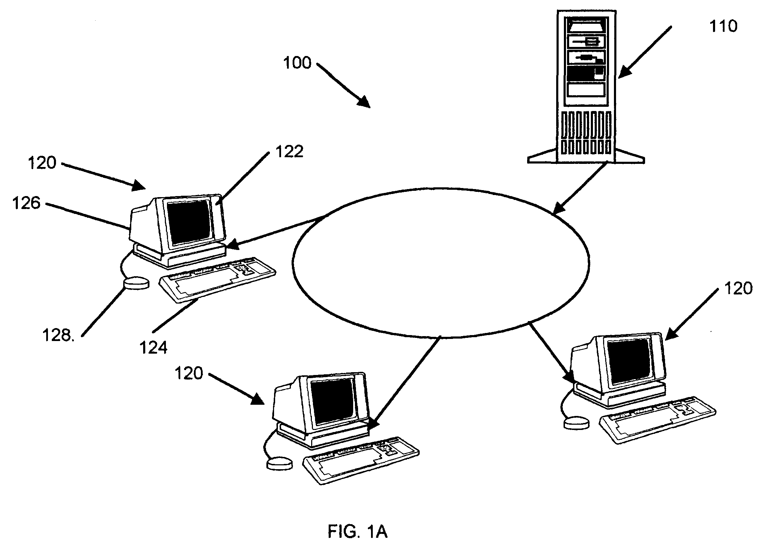

The computer system 100 of the present invention is preferably implemented on a client/server network 100 as shown in FIG. 1A. The client/server network 100 includes a server 110, such as an HP/UX, Data General DG-UX, Microsoft NT, IBM RS/6000, or an OS/2 server, connected to a plurality of clients 120, also known as end user workstations. Each end user workstation preferably includes a monitor 126, a screen 122, a keyboard 124, a mouse 128, and a memory device. The end user workstations 120 may be an IBM compatible PC running MS-DOS and Microsoft Windows or their equivalent. The preferred client/server network of the present invention is a Novell Netware or a PC LAN. Though these are the preferred clients, servers, and client/server networks, as may be appreciated by one of ordinary skill in the art, suitable equivalents may be used.

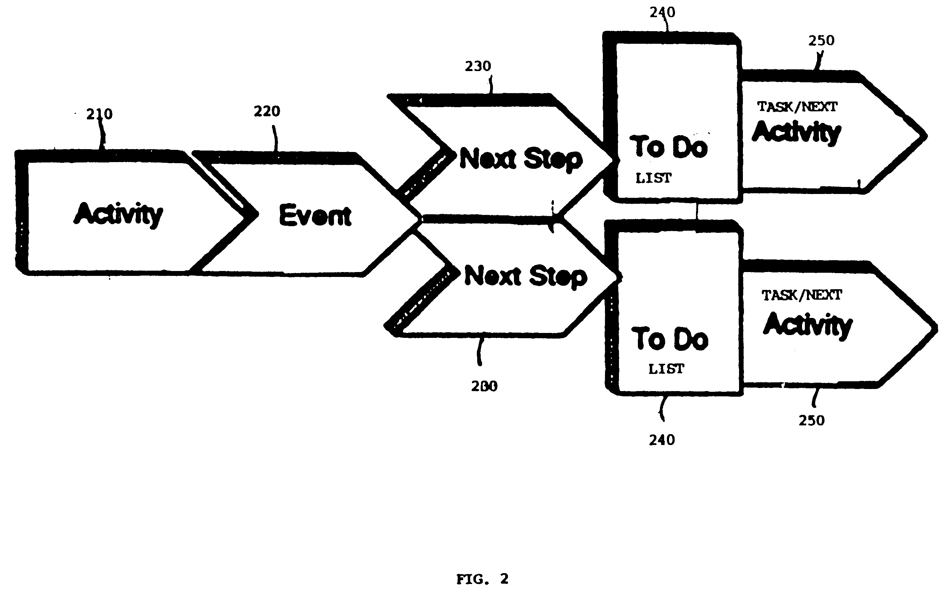

Referring to FIG. 2, a flow chart is shown which depicts the basic flow process for the present invention. This flow process assures that information is routed through the organization's predefined information flow path to the users who need it.

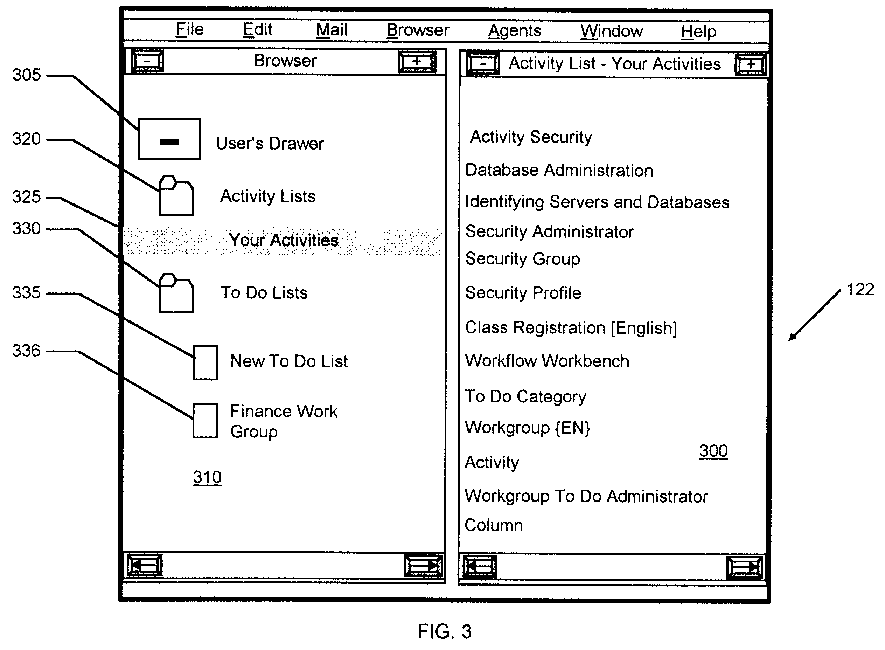

In a preferred embodiment, a user may access the computer system 100 of the present invention from an end user workstation 120 (see FIG. 1A), utilizing the particular user interface, such as the Windows Graphical User Interface (GUI), provided by the computer workstation's 120 operating system and environment. As shown in FIG. 3, the computer system of the present invention searches the user's drawer 305 to provide an Activity Lists folder 320 and a To Do List folder 330 on the user's computer terminal screen 122. These are preferably displayed in a Browser mode window 310.

The Activity Lists folder 320 may contain one or more lists of activities that the user may select and act upon. In this example, the Activity Lists folder 320 contains a "Your Activities" To Do List 325. The To Do Lists folder 330 may contain one or more lists of tasks to be completed by the user or the user's work group. In this example, the To Do List folder 330 contains a "New To Do List" To Do List 335 and a "Finance Workgroup" To Do List 336. The Activity Lists folder 320, To Do Lists folder 330 and the contents of both folders may be displayed using a commercially available graphic user interface such as Microsoft Windows.

In this example, the user selects a list from either the Activity Lists folder 320 or To Do Lists folder 330. If the user selects the "Your Activities" list 325, the system provides a list of available activities 300 for the "Your Activities" list 325. This selection may be made, for example, by clicking over the chosen activity 210 with the mouse 128 or by cursoring over the chosen activity 210 with the tab key and hitting the return key on the keyboard 124.

In response to the user's selection of a list, the system displays a list 300 of available activities or tasks. For this example, the user's "Your Activities" list 325 contains such activities as Activity Security, Database Administration and Class Registration [English]. The user may then select an activity 210 from the list 300. The system responds to the selection by displaying a screen relating to the activity 210 to be acted upon.

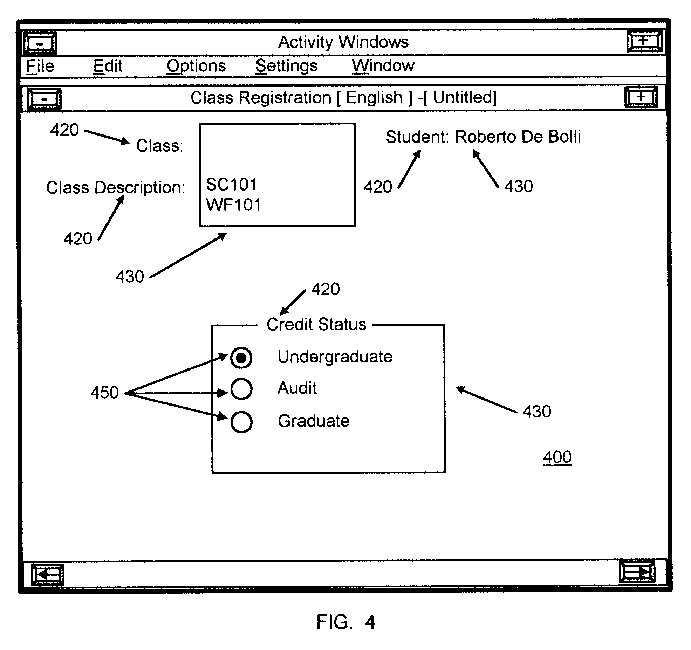

FIG. 4 illustrates a screen which the system displays in response to the user choosing the Class Registration [English] activity 210 from his or her "Your Activities" list 325 (see FIG. 3). The Class Registration activity is displayed in an activity window 400, which preferably reveals information in the form of headings 420 and values 430.

To illustrate, the activity window 400 for a user attempting to register for a class may reveal the headings 420 as class, student, class description and credit status. Examples of values 430 associated with the credit status heading 420 are undergraduate, graduate, and audit. The activity window 400 also typically includes prompts, also referred to as blank fields, 450. Examples of prompts 450 in the activity window 400 are shown to the left of the undergraduate, graduate, and audit values 430 under the credit status heading 420. These prompts 450 may be filled in to represent information input by the user. In this example, the student/user has filled in the prompt 450 to the left of the undergraduate value 430. In a preferred embodiment of the present invention, other information may be entered by the student/user by simply clicking over the chosen value 430 with the mouse 128 (see FIG. 1A) or cursoring over the chosen value 430 with the tab key on the keyboard 124 (see FIG. 1A).

Referring back to FIG. 2, after all of the information or data required for activity 210 has been entered by the user, the user acts to indicate to the system that the chosen activity 210 has been completed and the data supplied by the user during performance of activity 210 should be saved. In a preferred embodiment, the user may make their indication using the mouse 128 to "click over" a "save file" icon on the computer screen 122 which, in a preferred embodiment, resembles a floppy disk (not shown). Alternatively, the user may depress the keyboard "Control" and "S" keys simultaneously (see FIG. 1A). After the data relating to activity 210 has been saved and the user indicates that the activity 210 has been completed, the system triggers one of the events 220 associated with the activity 210.

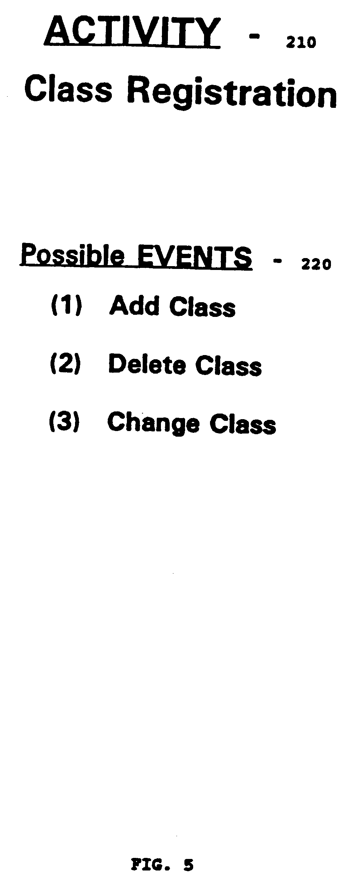

An event 220 is a representation of a set of conditions stored in the computer system in accordance with the present invention. Whenever the set of conditions for an event is satisfied, the corresponding event is triggered. Each activity 210 has one or more events 220 associated with it. Additional software stored in the computer system, which, for example, may be written in Power Builder, COBOL, or C programming languages, chooses an appropriate one of the events 220 for execution. Three events that may be executed during the course of the performance of an activity are, for example, "add," "delete" and "change." As illustrated in FIG. 5, three events identified when a user has selected the class registration activity may be "add class," "delete class," or "change class." Each of these events may be chosen for execution in response to a corresponding action by the user.

Referring back to FIG. 2, when an event 220 is chosen, a stored procedure makes a determination of all possible next steps 230 which are associated with that event 220. After the event 220 determines which next steps 230 are associated with it, the event makes a further determination as to which next steps 230 are to be chosen. This determination assures that a next user or group of users is able to perform a next activity 250, also referred to as a task 250, associated with the information entered by the user and/or data input from an automated process, such as an MRP system.

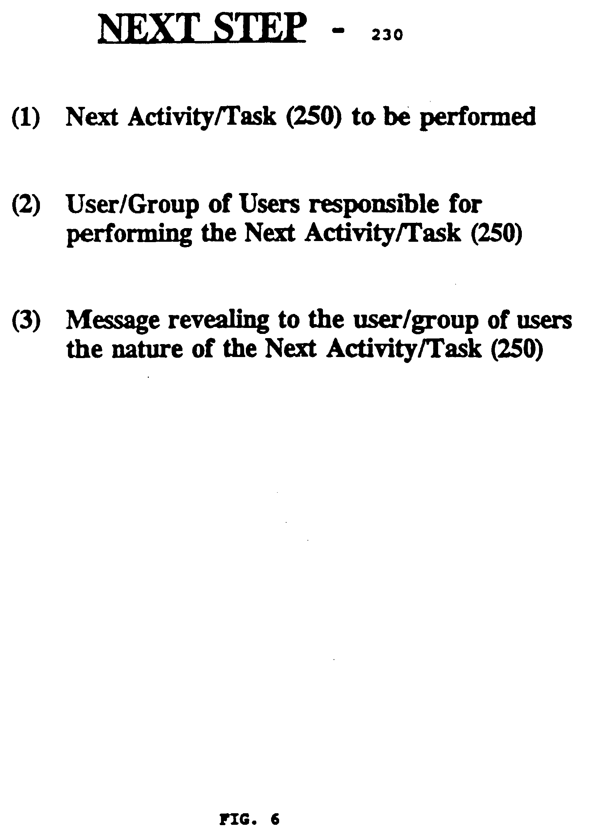

As shown in FIG. 6, a next step 230 may include the following information: (1) the next activity/task 250 to be performed; (2) the user/group of users responsible for performing the next activity/task 250; and (3) a message revealing to the user/group of users the nature of the next activity/task 250 to be acted upon. The next step 230 may also contain information or data disclosing the name of the entity within the organization in which the user/group of users fall under, which is ultimately responsible for performing the next activity/task 250. The list of information shown in FIG. 6, as described, is merely exemplary of the types of information that may be included in the next step 230.

Referring back to FIG. 2, based on the information contained in the chosen next steps 230, the computer system sends a message, representative of an associated category of next activity/task 250, to the To Do List 240 of the user or the group of users responsible for performing the next activity/task 250. Once the message is added to the To Do List 240 for the user or the group of users, the next activity/task 250 may be selected, viewed, and acted upon by the user associated with the To Do List 240 in a similar fashion as described for selecting the initial activity 210 which started the flow of the current information.

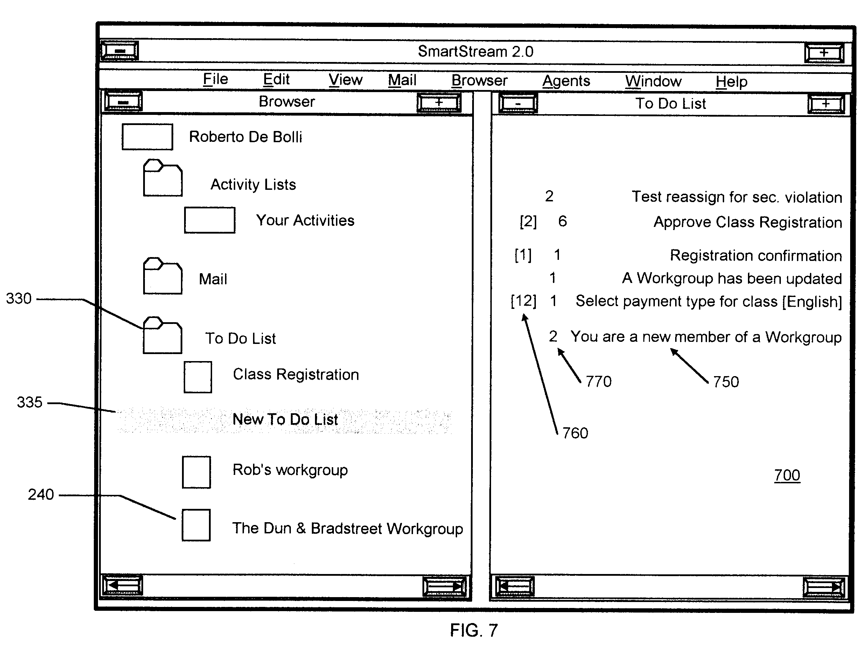

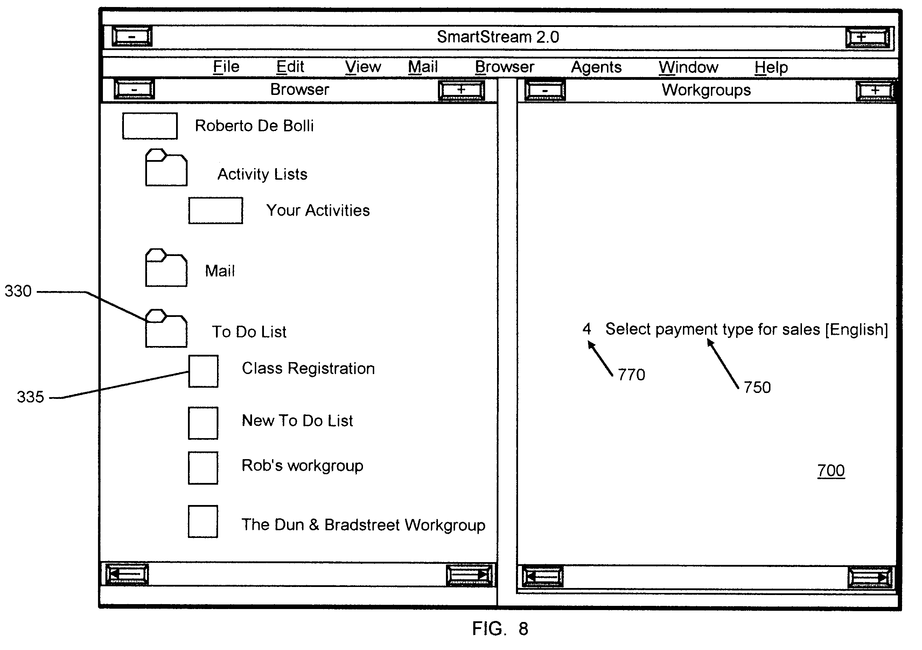

As shown in FIG. 7, a user may select a next activity/task 250 (see FIG. 2) from one or more To Do lists 240 located in the user's To Do List folder 330. In a preferred embodiment, a user may select a message 750 from a user's To Do List 700 personalized for the user. Alternatively, he or she may select a message 750 from the work group's To Do List 800 (see FIG. 8). In this example, the user selects the "New To Do List" 335 from the To Do Lists Folder 330.

To illustrate, the "New To Do List" 335 represents the user's personalized To Do List 700 set up for the user. Types of next activities/tasks 250 represented as messages 750 available to this user in his or her "New To Do List" To Do List window 700 are "Approve class registrations", "Registration confirmation," and "Select payment type for class [English]". These messages 750 represent next activities/tasks 250 categories subsequent to the initial activity 210 of class registration. In a preferred embodiment, the To Do list window 700 also displays the number of done/completed 760 and new 770 next activities/tasks 250 to the left of each message 750. In this example, the To Do list window 700, to the left of the "Approve class registrations" message 750, reveals that there are eight next activities/tasks 250 for this category, where six are new 770 and two are done 760.

Referring to FIG. 8, the user may also select a next activity/task 250 from a work group To Do List 700. This work group To Do List may be used when it does not matter which user among a group of users completes the next activity/task 250. For this example, the user has selected the Class Registration work group To Do List 336 from the To Do Lists folder 330. The message 750 revealed in the Class Registration work group To Do List is "Select payment type for class." This message 750 represents a next activity/task 250 subsequent to a prior user registering for a class. The user has four new 770 next activity/tasks 250 associated with this message 750.

Once the user selects the next activity/task 250 from the user's personalized To Do List 700 (see FIG. 7) or the user's work group To Do List 700 (see FIG. 8), referring to FIG. 2, the process for the flow of information which occurred after the initial activity 210 was selected may be repeated. As described above, the process would include the user entering relevant information into the activity window 400 (see FIG. 4) for the next activity/task 250, the user triggering an event 220, one or more next steps 230 being determined, and a corresponding message 750 (see FIG. 7) being added to the To Do List 240 of the user or work group responsible for performing the next activity/task 250. This cycle, inclusive of the user accessing the next activity/task 250 from the relevant To Do List 240, may continue until each piece of information is pushed entirely through the organization's predefined information flow path.

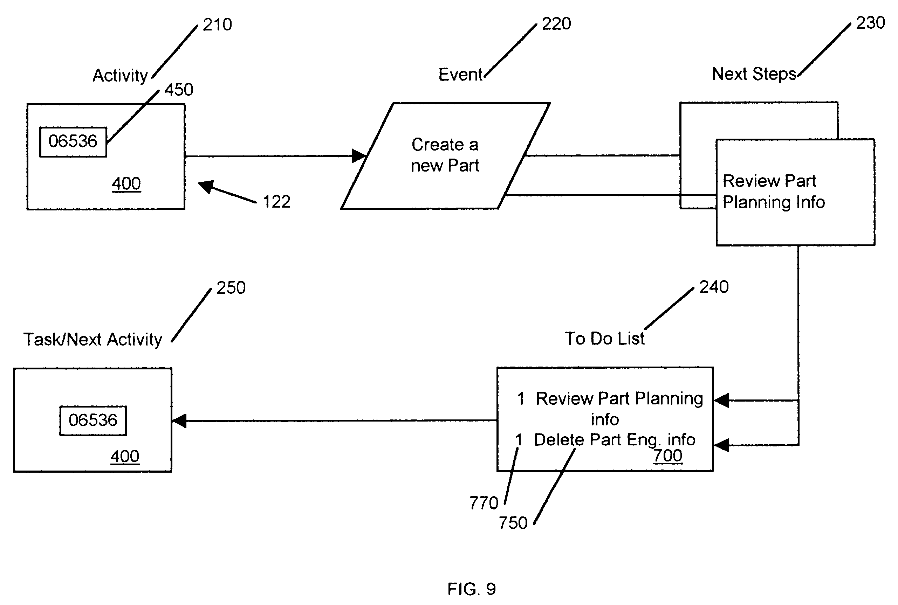

An example of the information flow process of the present invention is illustrated in FIG. 9. This example shows how the information flow process of the present invention is implemented, where the activity to be performed is to add a new part to a system for controlling a manufacturing operation.

In this example, the user (e.g., an engineer) chooses the "Part" activity 210 from his or her activity list (not shown) in order to create a new part for a manufacturing process within the organization. In response to this choice, the system displays a "Part" activity screen on the engineer's terminal screen 122 within activity window 400. This window 400 includes a prompt area 450, in which the engineer enters the number of the part (i.e., "06536").

When the engineer appropriately signals the system that the activity 210 is complete, the system responds by triggering execution of one of the events 220 associated with the activity 210. In this example, the event 220 triggered is the "Create a new Part" event 220.

The software "create a new part" event 220 then makes decisions based upon the addition of the part number to determine the next steps 230 to be undertaken in this flow process. For this example, the next steps 230 are "Review Part Planning information" to be done by the manufacturing manager and "approve part planning" (not shown) to be done by the quality department manager.

The "review part planning information" message 750, representative of a next activity/task 250 category, is then displayed by the system in the manufacturing manager's To Do List 240. In this example, the manufacturing manager has two messages 750, "Review part planning info" and "Define Part Eng. info.", listed in his personalized ("Things to do") To Do List window 700. The manufacturing manager may then select the "Review Part Planning info." message from his To Do List window 700, and the next activity/task 250 associated with this message is displayed in the manager's next activity/task window 400. Finally, this process for the flow of information through the organization is repeated as the manager enters relevant information into the window 400 for the next activity/task 250. The present invention then triggers an event 220 for determining the next steps 230 in the organizations procedure, and a message 750 representative of a next activity/task 250 category is added to another user's or work group's To Do List 240. As discussed above, this cycle continues until each piece of information is routed entirely through the organization's predefined information flow path (i.e., appropriately acted upon by all appropriate personnel in the organization in the proper sequence).

Set forth below is a description of the computer software for implementing a presently preferred embodiment of the present invention. As one of ordinary skill in the art would understand and appreciate, the following is merely one way of implementing the invention and many equivalent ways exist to achieve the same functions and results of the invention.

Referring to FIG. 1A, application programs are created using PowerBuilder code (application development software available from Powersoft, of Burlington, Massachusetts) and are stored on the client side 120 of the client/server network 100. Tables and stored procedures are created using SQL (Structured Query Language) code and are stored on the server side 110. Though PowerBuilder and SQL are the preferred software tools for the present invention, one of ordinary skill in the art would appreciate that the present invention could be implemented with many other equivalent types of software and/or development tools.

In a preferred embodiment, the PowerBuilder software is the preferred tool for creating the main application program of the present invention and the specific application programs to execute the windows 400 (see FIG. 4) for each activity 210 and next activity/task 250 (see FIG. 2). On the other hand, the SQL software is used primarily to create tables and stored procedures which interact with the tables and the PowerBuilder application programs to send information (e.g., data) back and forth on the network 100 (see FIG. 1A). In a preferred embodiment, the stored procedures are compiled and then interpreted by SQL engines.

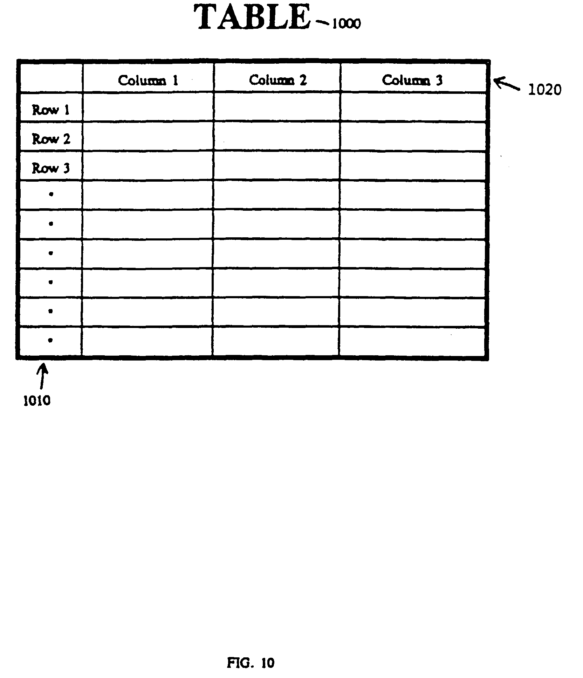

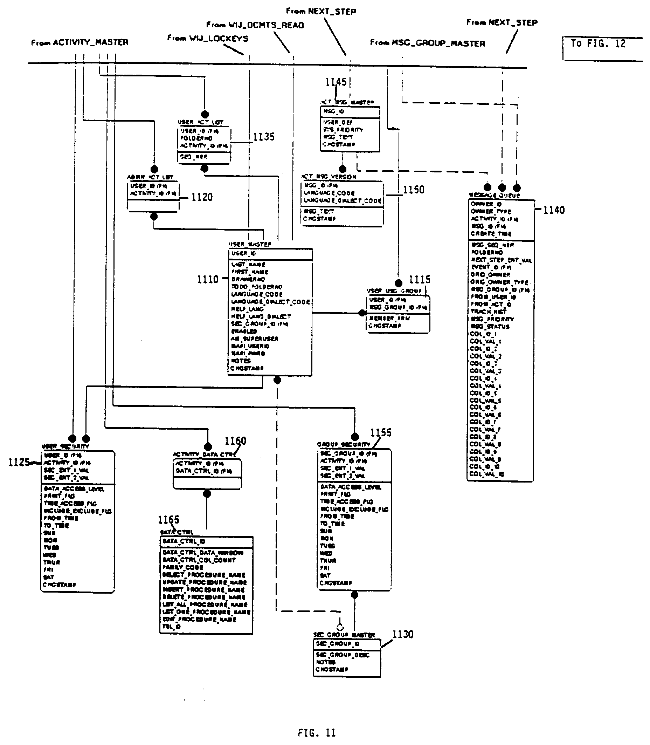

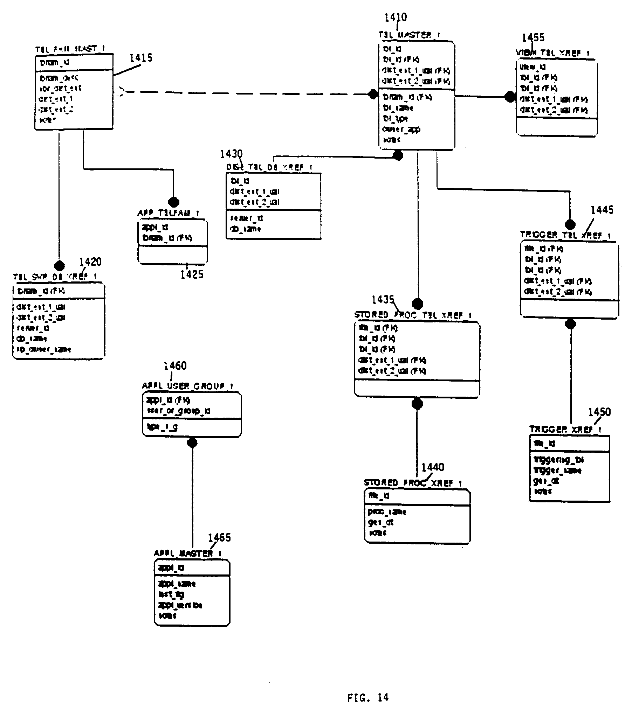

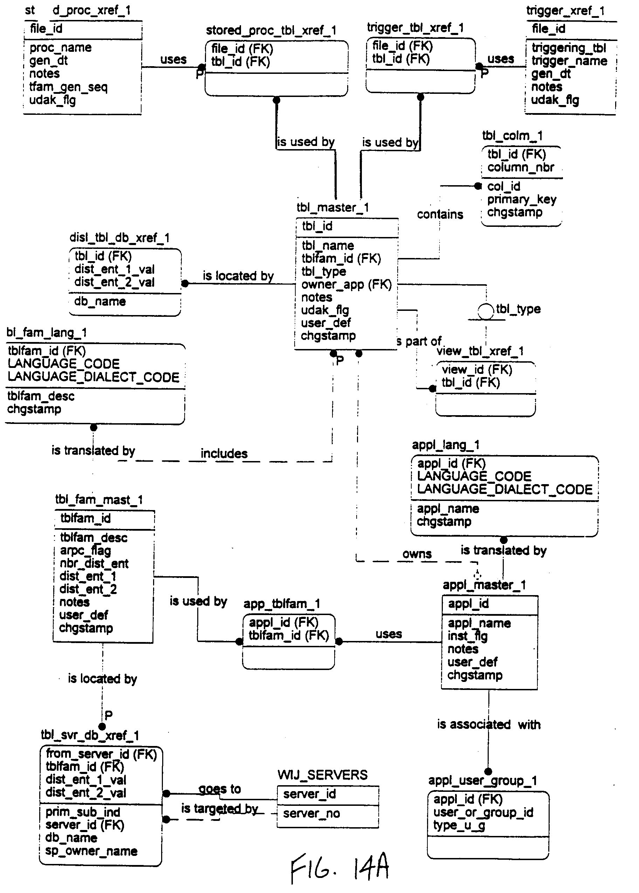

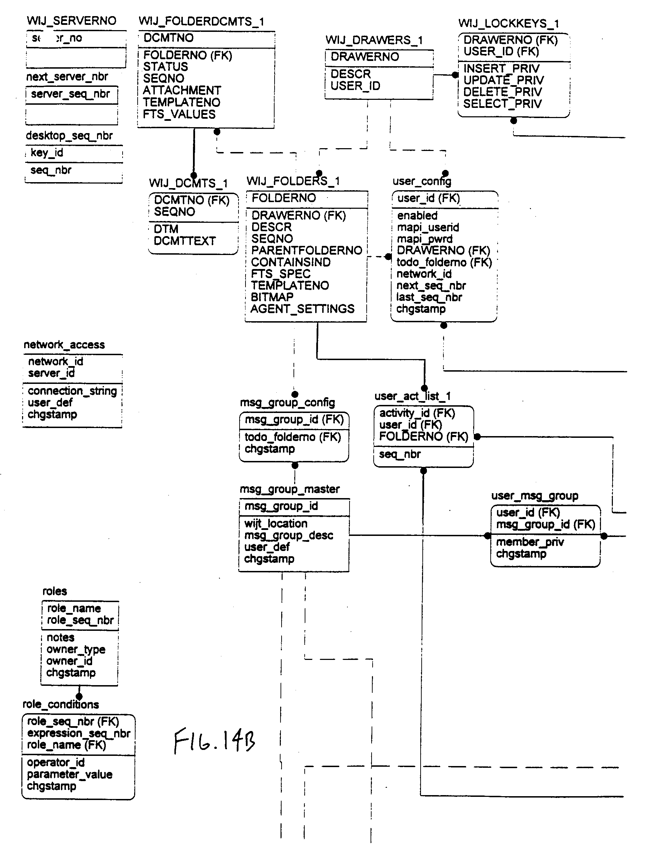

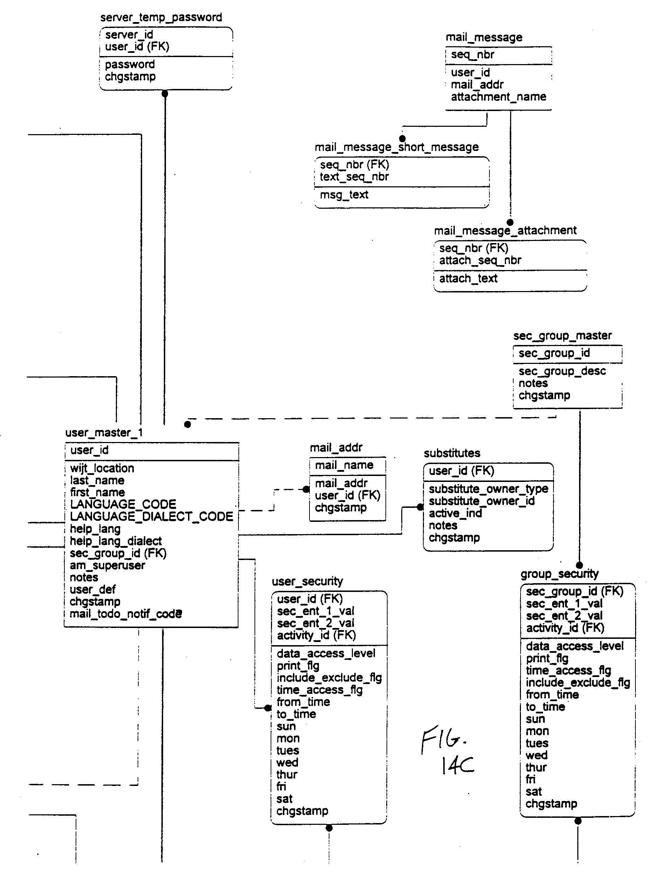

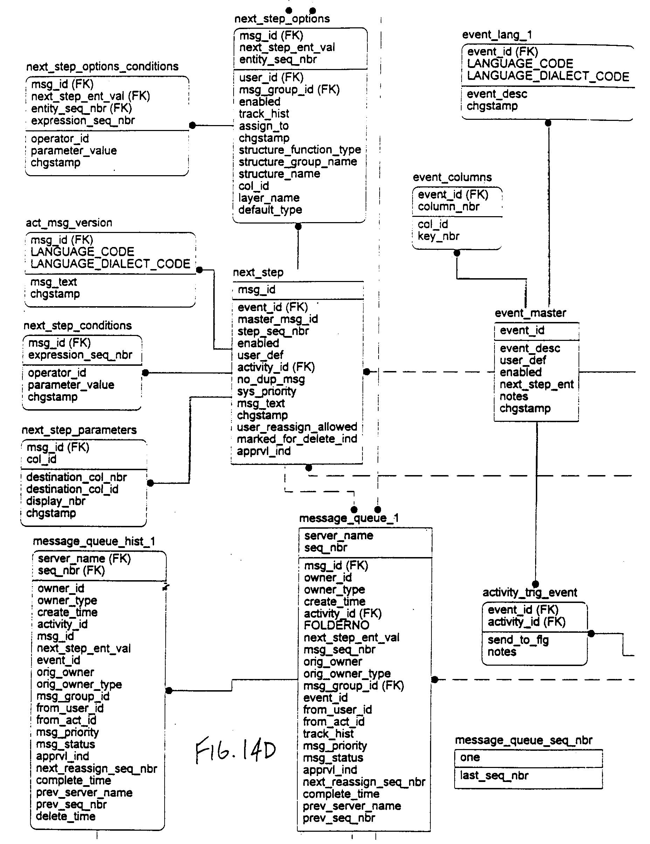

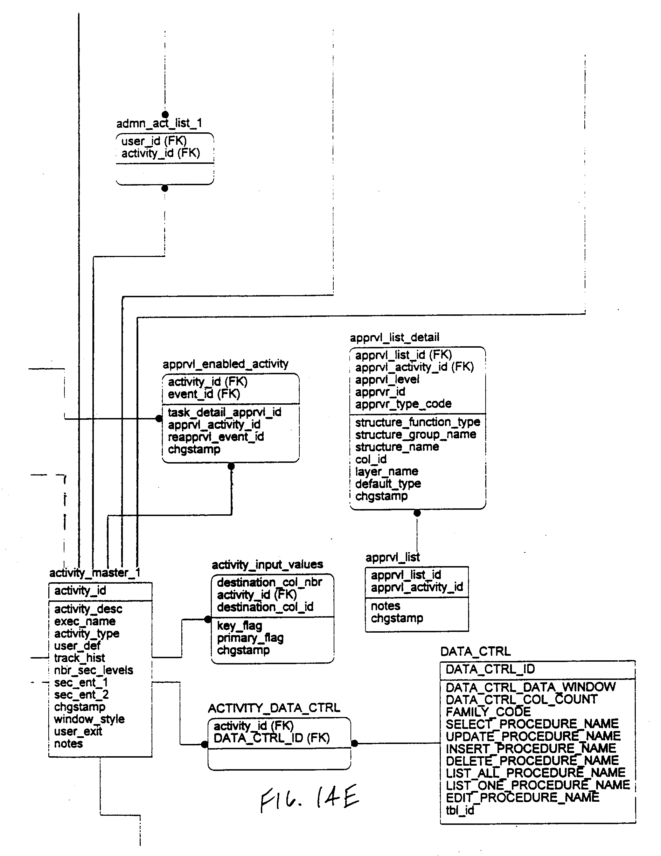

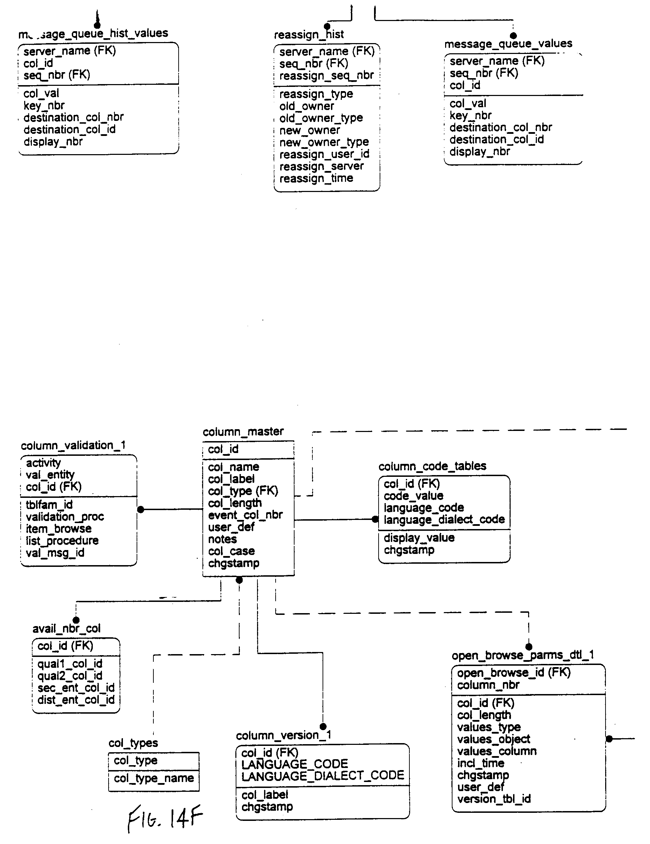

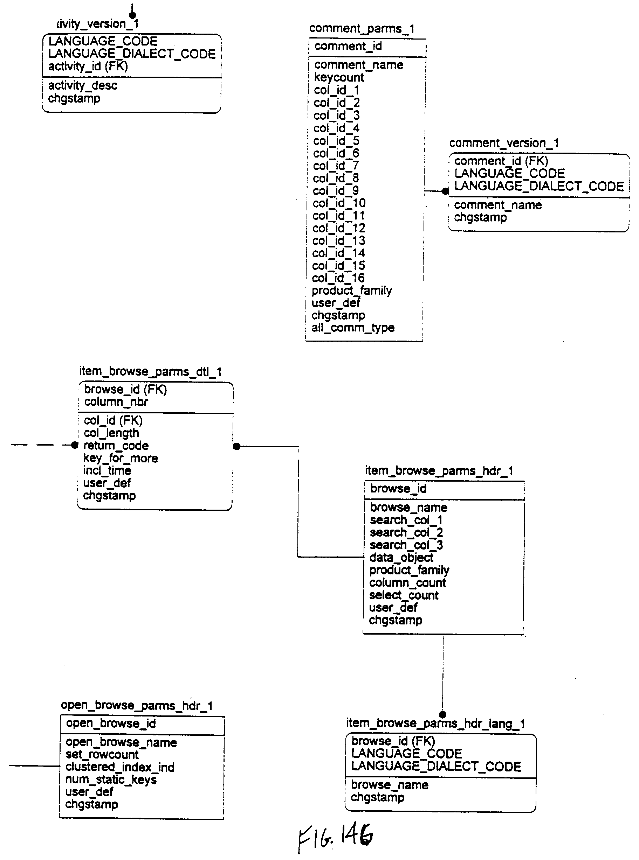

Referring to FIG. 10, data may be stored in a table 1000, also known as a database structure, in rows 1010, also referred to as records, and columns 1020, also referred to as fields. Examples of tables utilized by the present invention and the relationships of these tables with one another are illustrated by FIGS. 11, 12, 13, 14 and 15. In yet another embodiment, the tables that are utilized by the present invention and the relationships of these tables with one another are illustrated in FIGS. 14A, 14B, 14C, 14D, 14E, 14F and 14G, whereby like-named tables from FIGS. 11, 12, 13, 14 and 15 share a similar function as those depicted in FIGS. 14A, 14B, 14C, 14D, 14E, 14F and 14G.

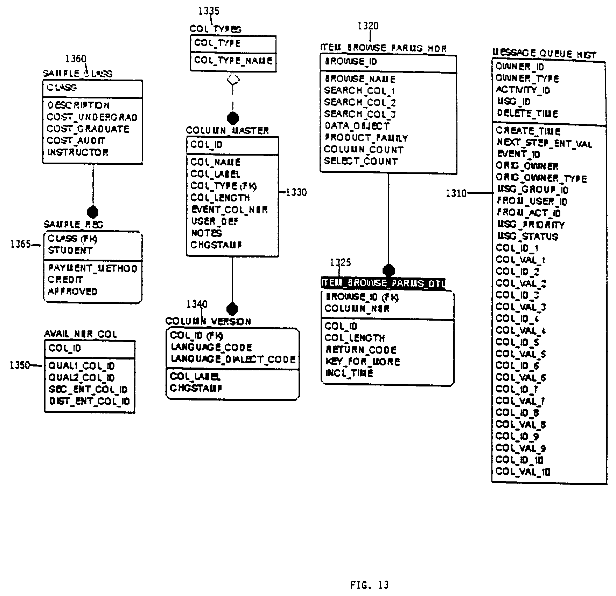

The COLUMN_MASTER table 1330 (see FIG. 13) is used for mapping most of the columns in the tables by having certain information related to the columns in each table stored in this table. In a preferred embodiment, information on the column includes the column identifier (COL_ID), which is a numerical value representative of the position for that column in the COLUMN_MASTER table 1330; the column name (COL_NAME), which is the name the column is referred to in the other tables; the column label (COL_LABEL), which is the label used for viewing in the various windows; the column type (COL_TYPE), such as database datatype (i.e., character, integer, datetime, etc.); the column length (COL_LENGTH), which represents the size of the column; and the event column number (EVENT_COL_NBR), which is used to correlate an event identifier (EVENT_ID) in the EVENT_MASTER table 1220 with its particular column identifiers (COL_Ids).

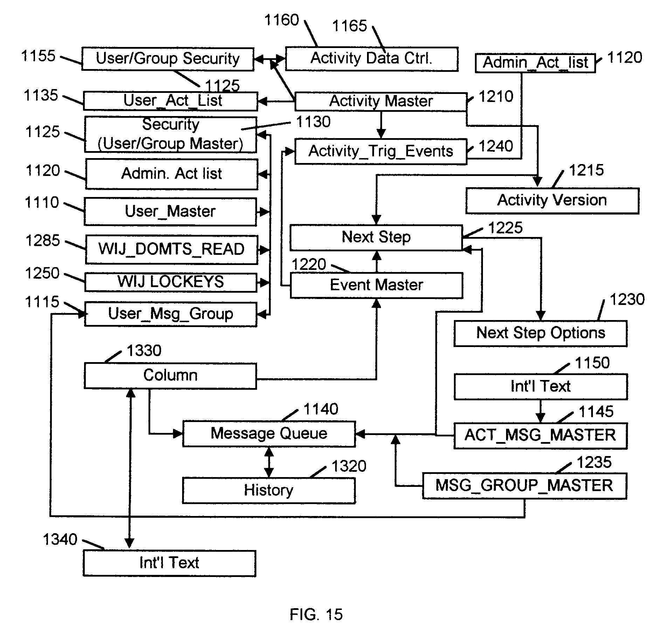

FIG. 15 shows some of the primary tables 1000 used in a preferred embodiment of the present invention. Each line between two tables indicates that information (e.g., data) between these tables 1000 is shared in a one-to-many relationship. The head of the arrow (black dots in FIGS. 11-14) at one end of each line positioned next to one of the tables 1000 indicates that the table may have many rows (records) which are associated with one row (record) of the table 1000 positioned at the other end of the line.

Set forth below is a description of how, in a preferred embodiment, the applications programs, stored procedures, and tables 1000 interact to implement the information flow process of the present invention.

The software of the present invention is activated to begin executing when a user logs onto the computer system (e.g., client/server network) 100 from his or her end user workstation (e.g., an IBM compatible PC) 120 as described for FIG. 1A. After the user logs onto the system, the screen 122 on the user's terminal 126, as shown in FIG. 3, reveals the Browser mode window 310 which is preferably created with PowerBuilder software.

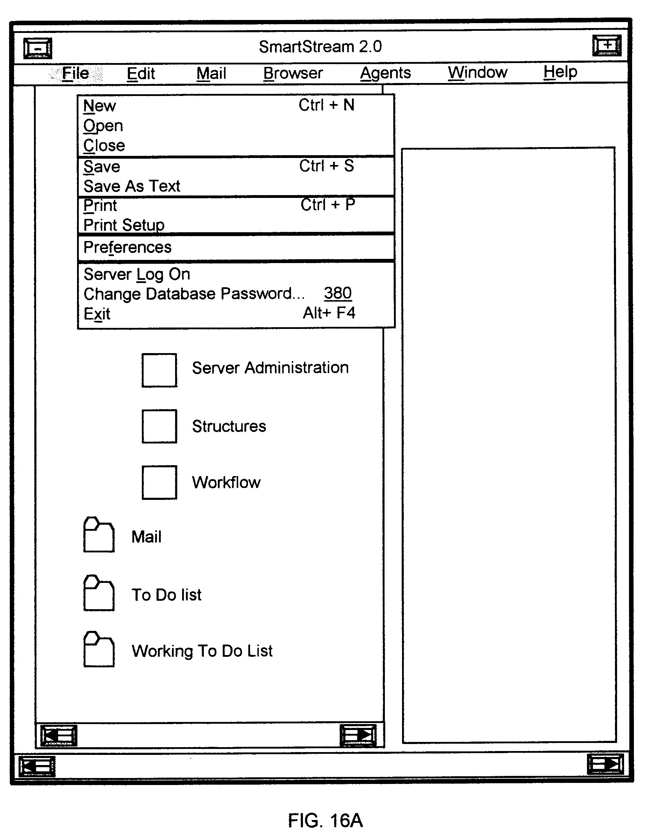

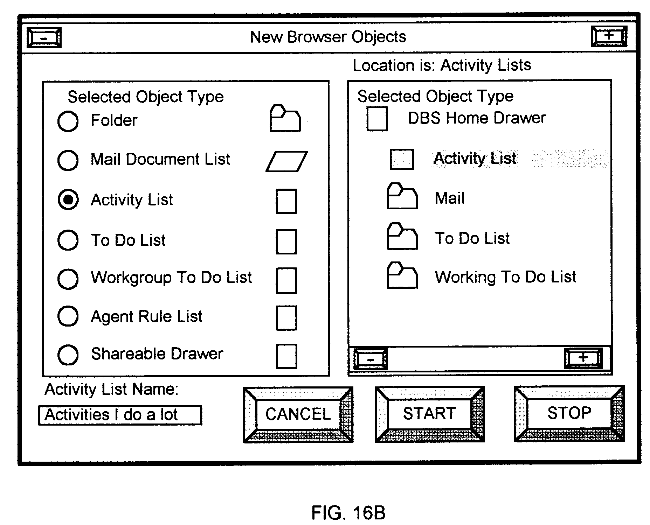

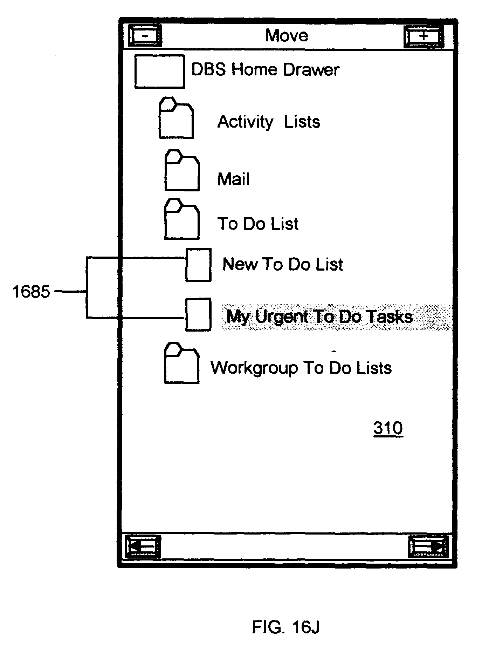

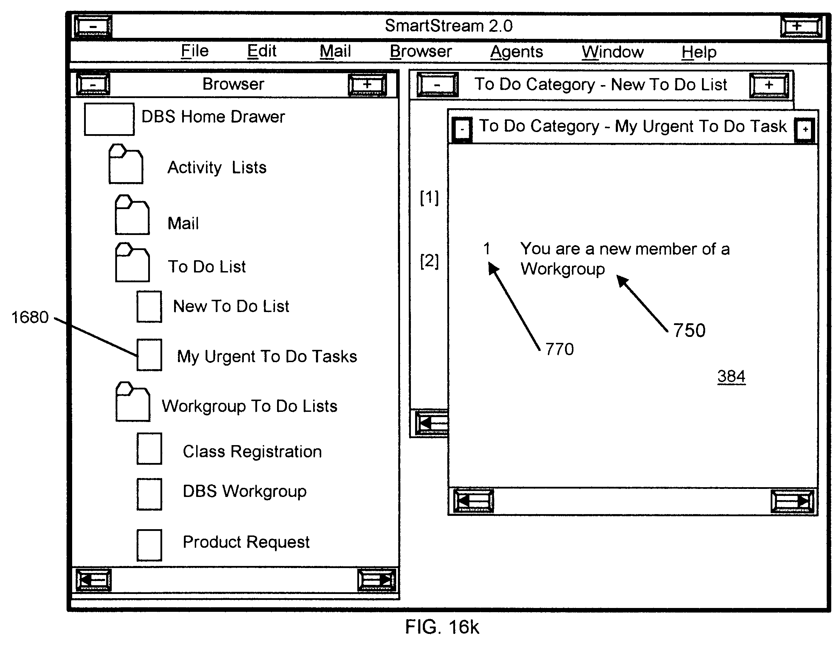

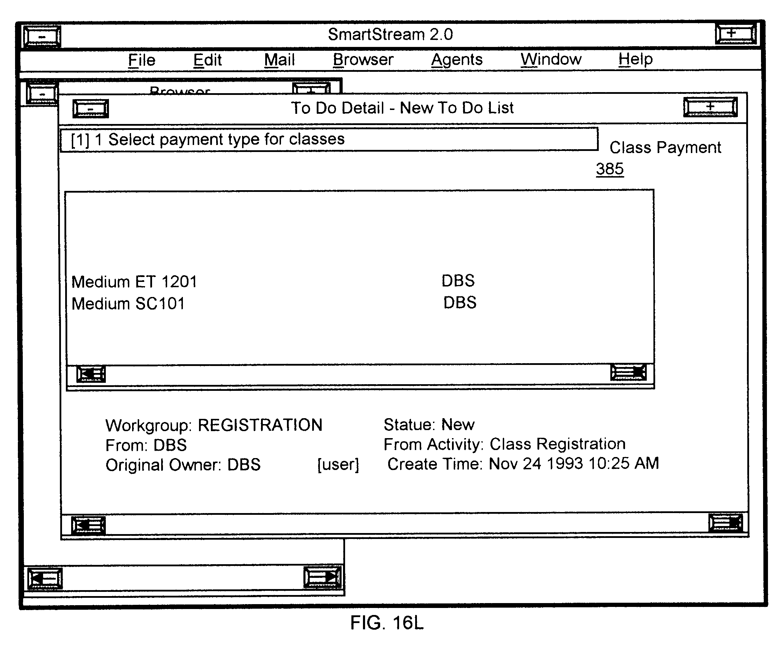

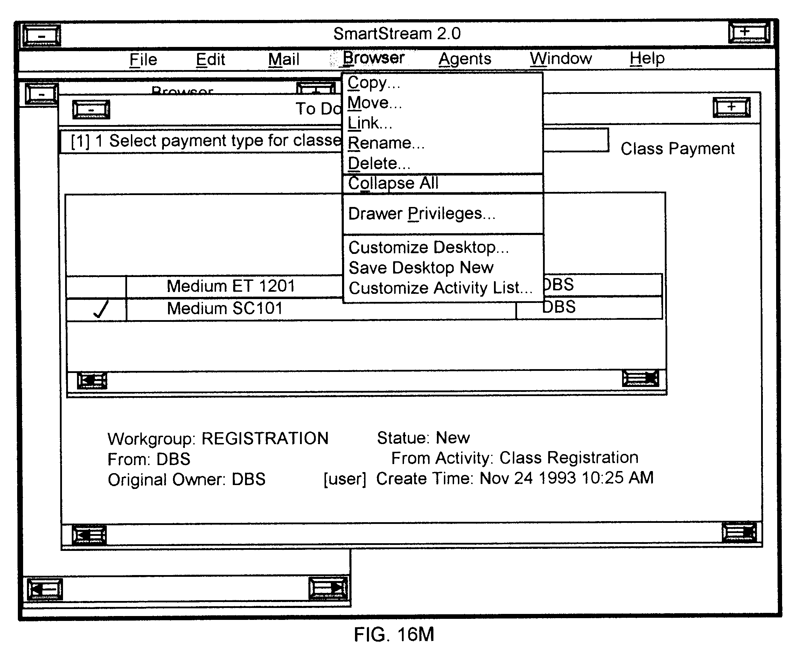

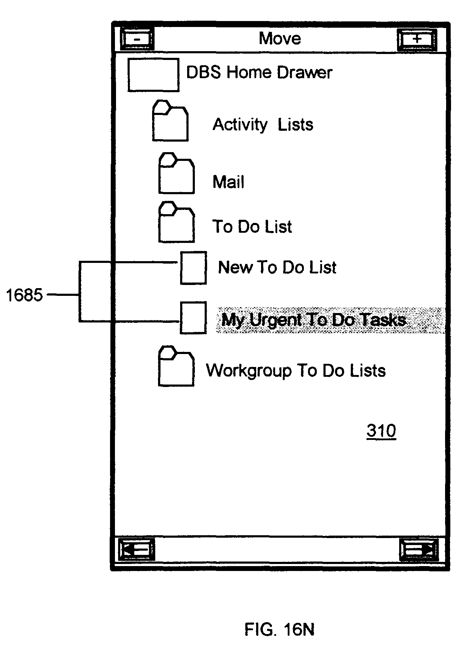

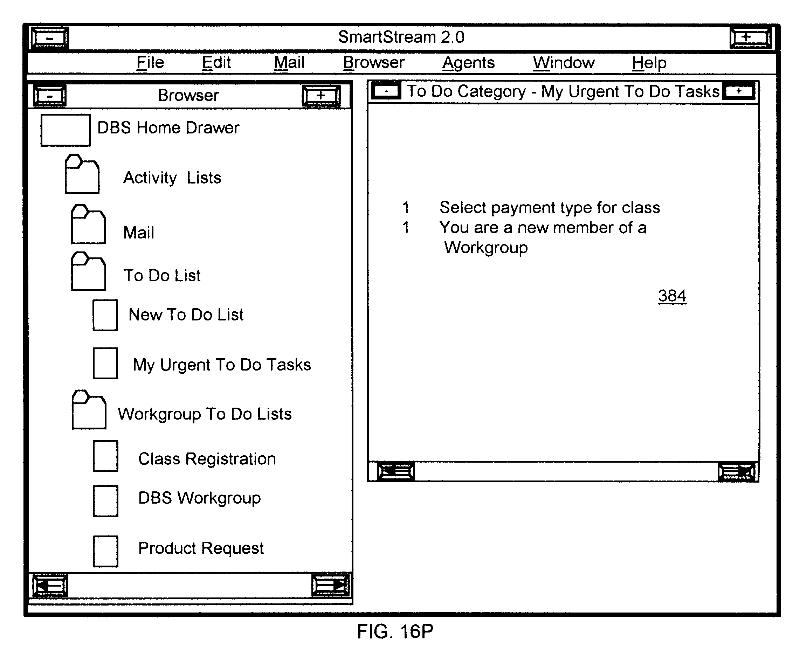

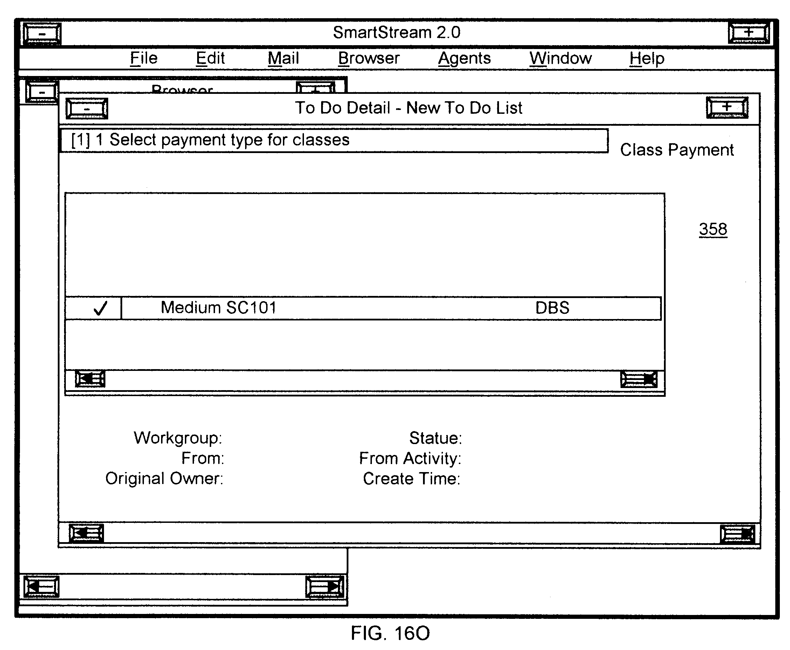

Referring to FIG. 16A, a user may create an activity list for his or her Activity Lists folder 320 by accessing the File mode and choosing the New (Ctrl + N) selection from the File list window 380. As shown in FIG. 16B, a "New Browser Objects" window 381 is displayed by the system in response to the above action by the user. The user then selects the "Activity List" as the new object type and enters the new activity list name (e.g., "Activities I do a lot") in the bottom left hand corner of the window. Finally, the user chooses which drawer (e.g., "DBS Home Drawer") and folder (e.g., "Activity List Folder") in which to put the activity list. The user also has the option to put the activity list in a drawer without putting the activity list into a folder.

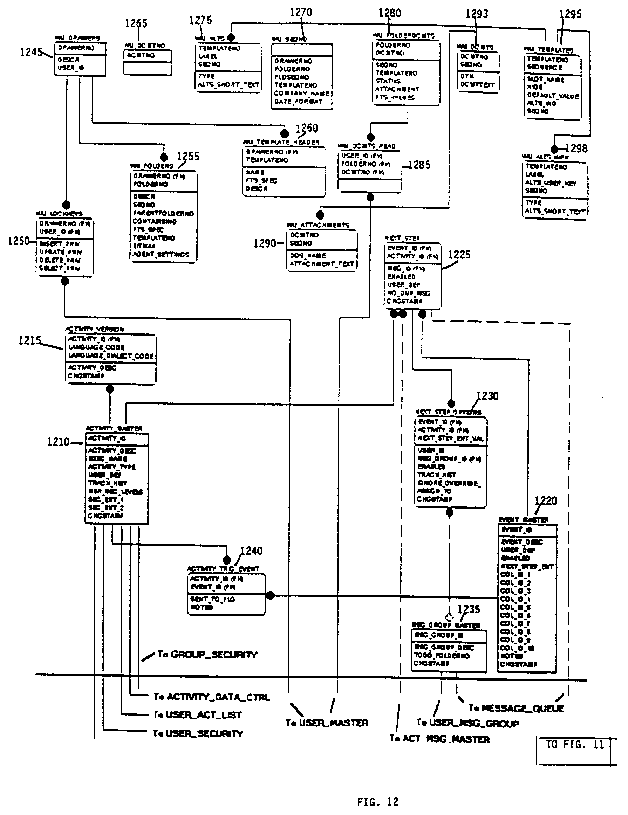

In response to the above user inputs, the main application program sends the user's drawer number (referred to as the DRAWERNO in the tables), the folder number (FOLDERNO) assigned to the activity list, the description (DESCR) of the list (e.g., Activity List), and the location of the list (PARENTFOLDERNO) (e.g., the number assigned to the Activity List folder) from the client to a stored procedure at the server. In one embodiment, the name of the stored procedure is FOLDER$insert_1. The stored procedure then stores this information in the WIJ_FOLDER table 1255 (see FIG. 12) and sends a message to the main application program that the information has been stored.

Each activity list is identified and stored under a corresponding folder number (FOLDERNO). The WIJ_FOLDERS table 1255 (see FIG. 12) is used to keep track of all FOLDERNOs. The CONTAINSIND column in the WIJ_FOLDERS table 1255 indicates whether the FOLDERNO refers to a folder or to a list. More details on the WIJ_FOLDERS table 1255 are provided below.

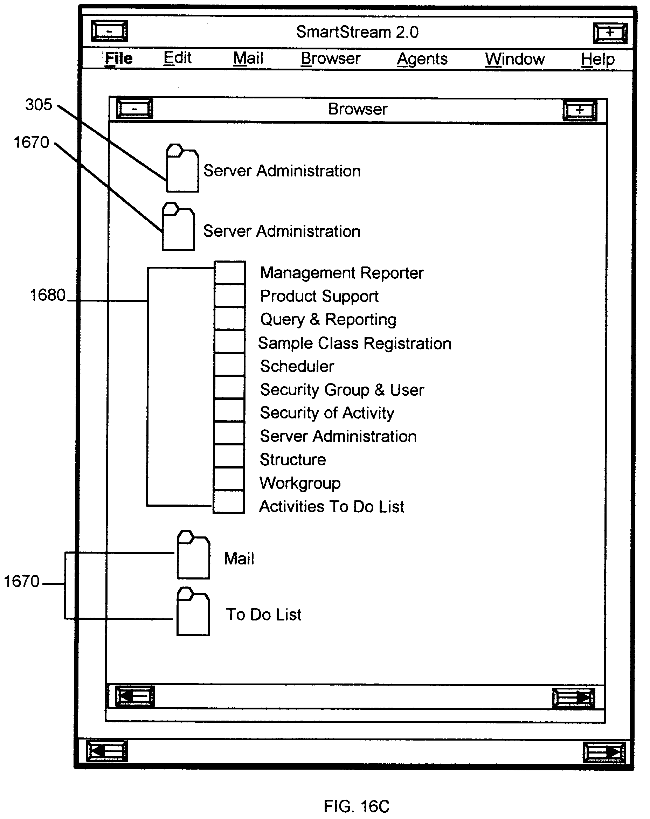

Referring to FIG. 16C, the user may add activities to an activity list by accessing, the Browser mode. The Browser mode window 310 reveals all folders 1670 and the activity lists 1680 or To Do Lists (not shown) contained within the folders 1670 for a particular drawer 305 of the user. The user may then select an activity list 1680 in which to add activities.

If an activity list 1600 is empty, as is the "Activities I do a lot" list 1680, then the activity list representation will be blank. However, if the activity list 1680 contains one or more activities or next activities/tasks, then the activity list representation will contain horizontal lines.

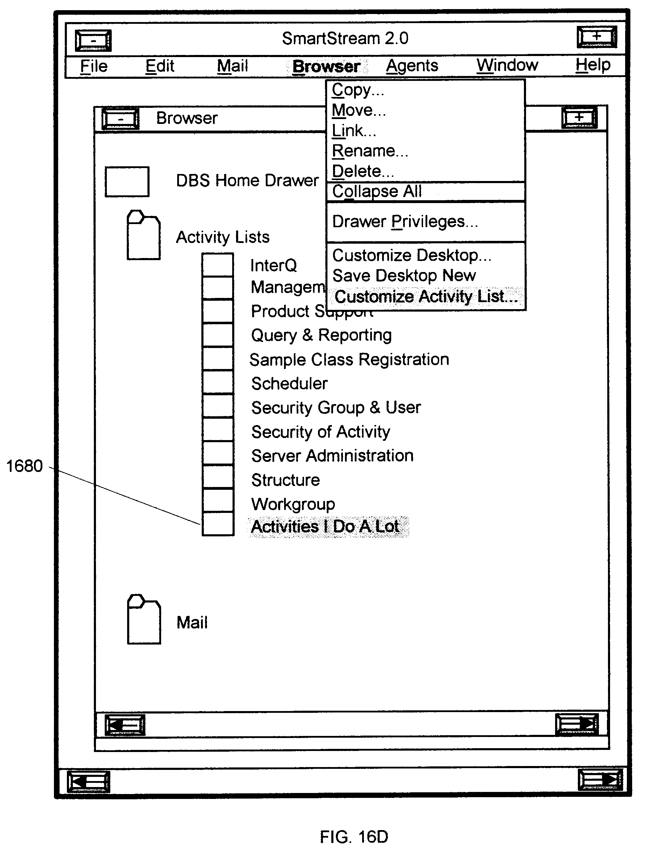

A user may add activities to an activity list by selecting, for example, the "Activities I do a lot" list 1680 in which to add one or more activities. Next, referring to FIG. 16D, the user selects the Browser list window 382 and chooses the Customize Activity List command from the Browser list window 382.

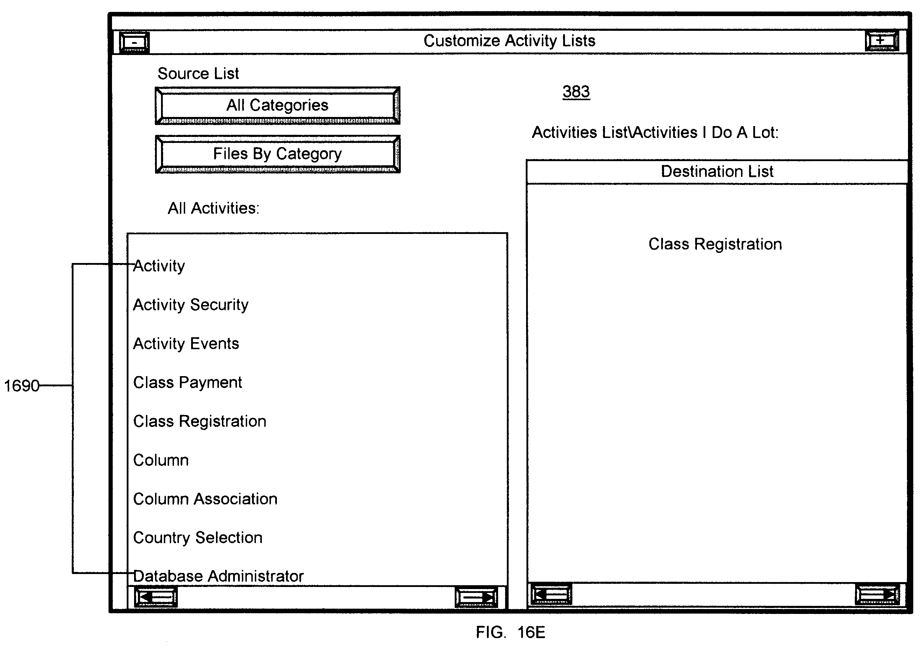

Referring to FIG. 16E, in response to the above actions of the user, the main application program displays a list of activities that the user may access in a Customize Activity List window 383. (The access is preferably based on security privileges predefined by an administrator of the system which is discussed further below). In determining which activities the user may access, the main application program sends the user's identifier (USER_ID) to a stored procedure. In one embodiment, the name of the stored procedure is psp_sel_avail_user_acts_1. This stored procedure then accesses the USER_SECURITY table 1125 (see FIG. 11) to determine which user specific activities, represented as activity identifiers (ACTIVITY_Ids), the user has security privileges.

Next, the stored procedure accesses the USER_MASTER table 1110 (see FIG. 11) to obtain group security identifiers (SEC_GROUP_Ids) associated with the user's USER_ID. The stored procedure then accesses the GROUP_SECURITY table 1155 (see FIG. 11) to determine which activities (ACTIVITY_Ids) the user, as a member of a group of users (work group), may access. Next, the stored procedure accesses the ACTIVITY_MASTER table 1210 (see FIG. 12) and uses the ACTIVITY_Ids to obtain a description of each activity (ACTIVITY_DESC) that the user may access. Finally, the stored procedure sends the ACTIVITY_Ids and each activity's corresponding activity description (ACTIVITY_DESC) back to the main application program at the client.

The main application program then displays each of the activities 1690 in the Customized Activity List window 383. The user may then decide which activities he or she will choose to put in an activity list by selecting specific activities from the display. In this way, a list may be created, where the list may include user specific and/or work group specific activities.

After the user has selected the activities to store in an activity list, such as "YOUR ACTIVITIES" list, the main application program sends the USER_ID, FOLDERNO, ACTIVITY_Ids and any sequencing of activities for the list (SEQ_NBR) to a stored procedure at the server. In one embodiment, the name of the stored procedure is psp_ins_usal_1. This stored procedure then accesses the USER_ACT_LIST table 1135 (see FIG. 11), where the stored procedure creates a row for each ACTIVITY_ID. The USER_ID and FOLDERNO are both stored in each row created for each ACTIVITY_ID. Moreover, the SEQ_NBR, if any, for each activity is also stored in the row for each ACTIVITY_ID. In a preferred embodiment of the invention, if no sequencing information is selected for the activity by the user, then all non-sequence specific activities will be listed in alphabetical order in the activity list.

After the stored procedure stores the activity information for a particular activity list in the USER_ACT_LIST table 1135, the stored procedure sends a message to the main application program at the client to this effect. The main application program then waits for the user to decide which action he or she wants to perform next.

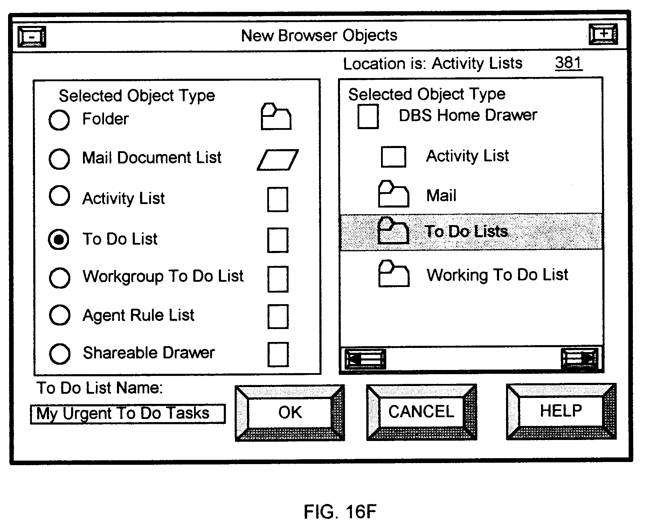

A user may also create a To Do List for his or her To Do List folder 330 (see FIG. 3) by accessing, in a preferred embodiment, the File mode and choosing the New (Ctrl + N) selection from the File List window 380 (see FIG. 16A). As shown in FIG. 16F, the user then selects the "To Do List" as the object type and enters the new To Do List name (e.g., "My Urgent To Do Tasks") in the bottom left hand corner of the "New Browser Objects" window 381. Finally, the user chooses which drawer (e.g., "DBS Home Drawer") and folder (e.g., "To Do Folder") to put the To Do List. The main application program then sends the user's drawer number (DRAWERNO), the folder number (FOLDERNO) assigned to the To Do List, the description (DESCR) of the list (e.g., the To Do List), and the location of the list (PARENTFOLDERNO) (e.g., the number assigned to the To Do List folder) to a stored procedure. In one embodiment, the name of the stored procedure is FOLDER$insert_1. This stored procedure then stores this information in the WIJ_FOLDERS table 1255 (see FIG. 12) and sends a message to the main application program that the information has been stored.

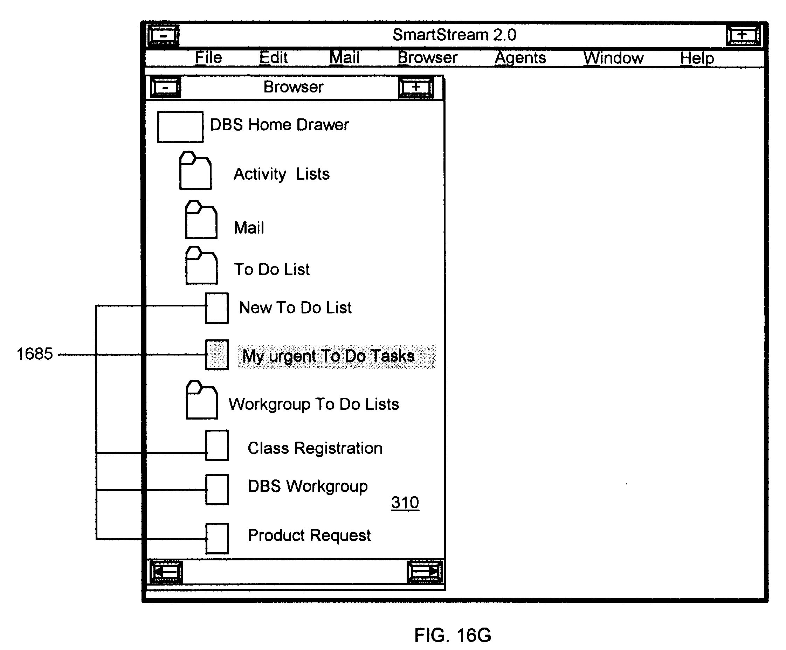

Referring to FIG. 16G, the user may move next activities/tasks categories from one To Do List 1685 to another To Do List 1685 by accessing the Browser mode. The user may then select a To Do List 1685 in which to add a next activity/task category. Like the activity lists 1680 (see FIG. 16C), the representations for the To Do Lists are blank when empty and contain horizontal lines when they contain one or more next activities/tasks.

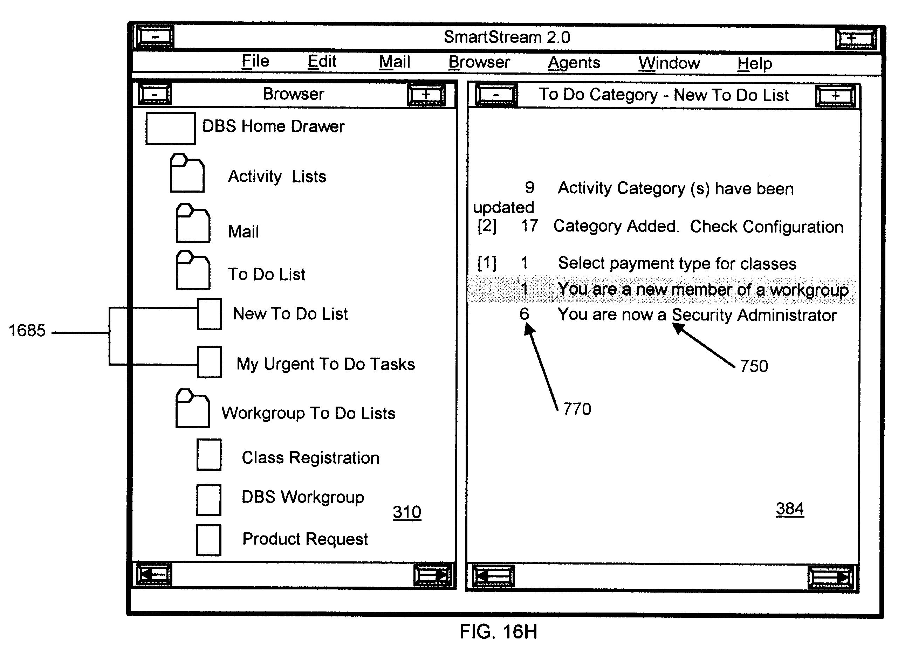

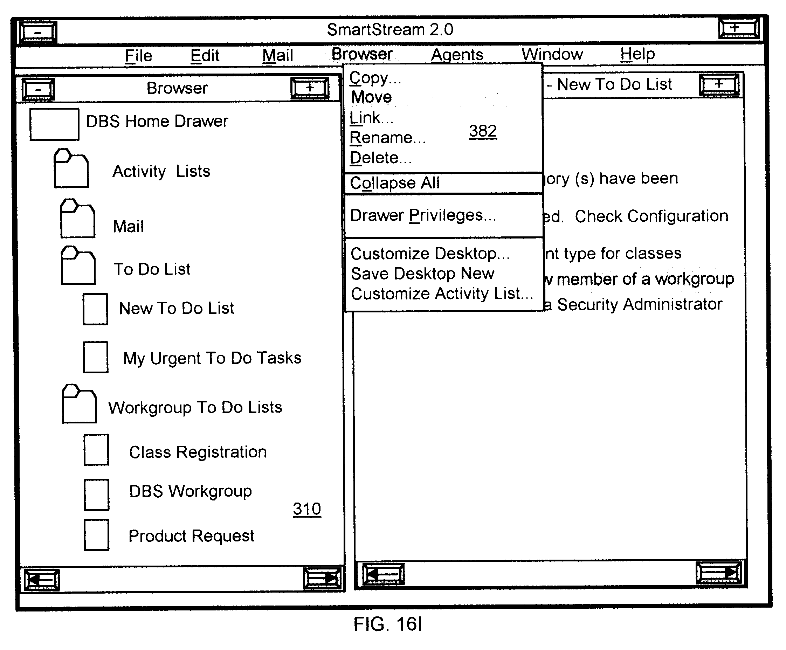

The user moves a next activity/task category from one To Do List 1685 to another To Do List 1685 by selecting a To Do List 1685 which contains one or more next activity/task categories. As shown in FIG. 16H, the user selects the "New To Do List" To Do List 1685 from the Browser mode list window 310. The main application program then accesses a stored procedure to determine all next activities/tasks currently stored in the "New To Do List" To Do List 1685. Details on how the main application program and the stored procedure work together to compile the list of currently stored next activities/tasks is described below.

Next, the main application program displays these next activities/tasks organized by the message 750 representative of the next activity/task category in a Summary To Do Category window 384. The user then selects a next activity/task category to move to another To Do List 1685. For this example, the user selects the "You are a new member of a Workgroup" next activity/task category, which contains one uncompleted 770 next activity/task to be moved to another To Do List 1685.

Finally, as shown in FIG. 16I, the user selects the Browser list 382 and chooses the Move command from the Browser list 382. As shown in FIG. 16J, the main application program then reveals a list of possible To Do Lists 1685 in the Move mode list window 310 for the user to choose to move the next activity/task category. For this example, the user selects the "My urgent To Do Tasks" To Do List 1685. Therefore, as shown in FIG. 16K, when the user accesses the "My urgent To Do Tasks" To Do List in the Summary To Do List window 384, the "You are a new member of a Workgroup" message 750 next activity/task category with its one uncompleted next activity/task is revealed.

Referring to FIG. 16L, the user may also move individual next activities/tasks from one To Do List 1685 to another To Do List 1685. The user accomplishes this by selecting a To Do List containing next activities/task while in the Browser mode (not shown). The user then accesses the Detail To Do Category window 385 and a list of each individual next activity/task is revealed for a particular next activity/task category within the To Do List.

For this example, the user selects the "New To Do List" To Do List and details on two next activities/tasks are revealed for the "Select payment type for class" next activity/task category. The user then chooses a next activity task which, for this example, is ET201, to move to another To Do List. Next, referring to FIG. 16M, the user selects the Browser list 382 and chooses the Move command from the Browser list 382. As shown in FIG. 16N, the main application program then reveals a list of possible To Do Lists 1685 in the Browser mode list window 310 for the user to choose to move the next activity/task. For this example, the user selects the "My urgent To Do Task" To Do List 1685.

Therefore, as shown in FIG. 16O, when the user access the "New To Do List" in the Detail To Do Category window 385, the ET201 class payment next activity/task no longer exists. Moreover, as shown in FIG. 16P, when the user accesses the Summary To Do Category window 384 for the "My urgent To Do Tasks," the "Select payment type for class" next activity/task category is revealed. The window 384 discloses that the "Select payment type for class" next activity/task contains one uncompleted next activity/task, which is the class payment for the ET201 class.

In another aspect of the invention, the user may create a customized folder in which to store activity lists. For example, a user may create a Class Registration folder for storing different lists of activities pertaining to registering for classes. The user accesses the File mode and chooses the New (Ctrl+N) selection from the File list window 380 (see FIG. 16A). The "New Browser Objects" window is then displayed. (see FIG. 16B). The user then selects the "Folder" as the new object type and enters the new folder name in the bottom left hand corner of the window. Finally, the user chooses the drawer in which to put the folder.

The following is an illustrative example of how the application programs at the client side and the stored procedures and tables at the server side interact to facilitate the flow of information in a work flow environment. For this example, a user registers for two classes.

In order to register for the classes, the user logs onto the system. In a preferred embodiment, after the user logs on, he or she selects the Browser mode from a list of possible modes displayed across the screen (not shown). Upon selecting the Browser mode, the main application program sends the user's USER_ID to a stored procedure at the server. The stored procedure then accesses the WIJ_DRAWERS table 1245 (see FIG. 12) to obtain information on the drawer number (DRAWERNO) and the description (DESCR) of the user's drawer.

The stored procedure then accesses the WIJ_FOLDERS table 1255 (see FIG. 12) to obtain information on all folders and lists, which are stored as folder numbers (FOLDERNOs), associated with the DRAWERNO. This information includes a description (DESCR) of the folder or list; a list indicator (CONTAINSIND), which reveals whether the FOLDERNO corresponds to a folder, an Activity List, a To Do List or some other list used in the system; and priority information (PARENTFOLDERNO), which is used to determine which folder each activity list and To Do List belongs in.

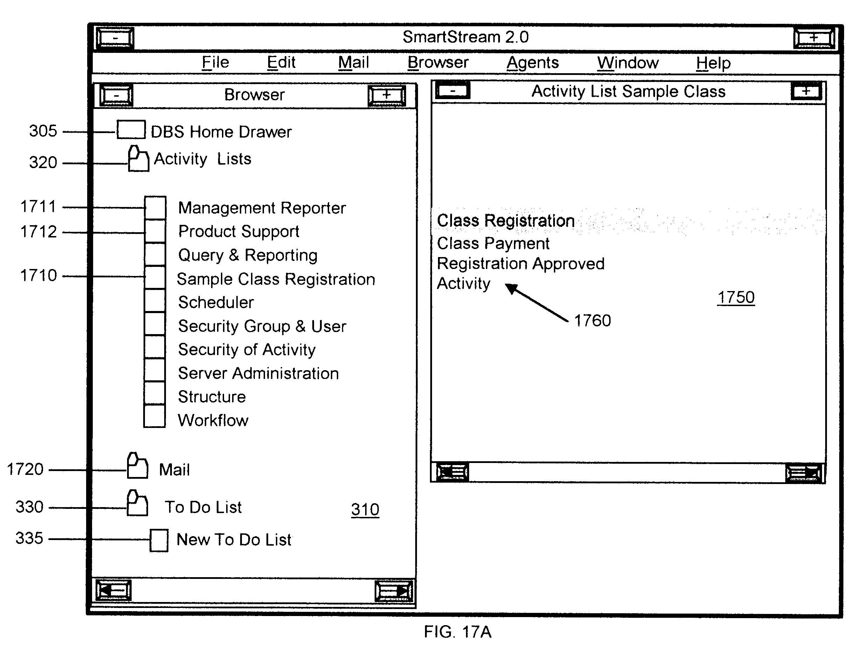

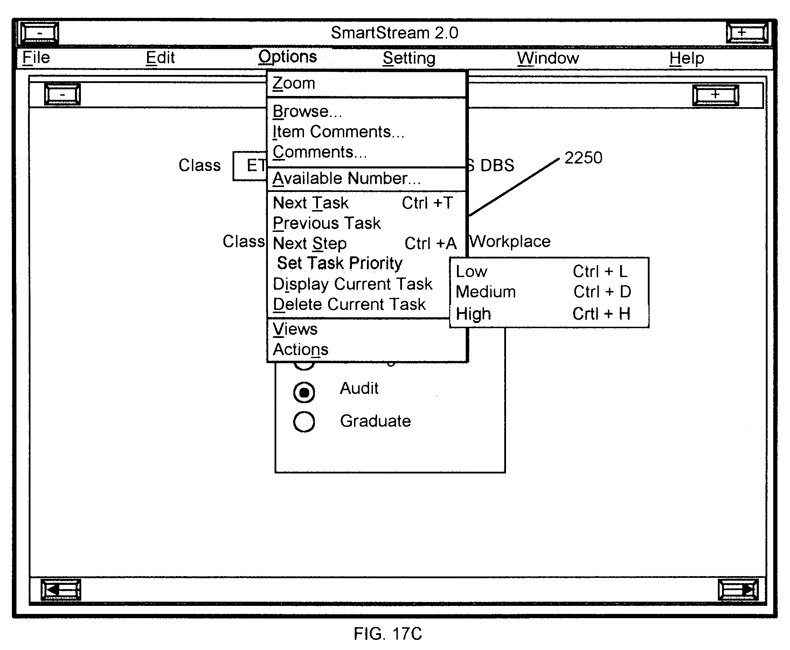

The main application program, as shown in FIG. 16C, uses the information sent to it by the stored procedure to display the folders 1670 and lists 1680 for the user's drawer 305 in the Browser mode list window 310. As shown in FIG. 17A, to illustrate, the user's drawer 305 is described as DBS Home Drawer in the Browser mode list window 310. Moreover, the user's Drawer 305 contains an Activity Lists folder 320, a To Do Lists folder 330 and a Mail folder 1720. The Activity Lists folder 320 contains a "Sample Class Registration" list 1710, as well as other lists such as a "Management Reporter" list 1711 and a "Product Support" list 1712. The To Do Lists folder 330, for this example, contains only the user's personalized To Do List, referred to as the "New To Do List" 335.

For this example, to register for classes, the user selects the "Sample Class Registration" list 1710 and, in response, the system displays the user's customized "Sample Class Registration" list window 1750, with pre-selected activities.

The computer system of the present invention obtains the activities for the customized activity list window 1750 (e.g., "Sample Class Registration" list window) by having the main application program send the USER_ID and FOLDERNO for the activity list selected by the user to the stored procedure at the server. In one embodiment, the name of the stored procedure is psp_sel_user_cando_list_1. This stored procedure then accesses the USER_ACT_LIST table 1135 (see FIG. 11) to obtain each activity, via its ACTIVITY_ID, that is associated with the USER_ID and FOLDERNO, as well as any SEQ_NBR information pertaining to the prioritizing of these activities set up by the user for displaying each activity in the activity list window 1750. The stored procedure also accesses the ACTIVITY_MASTER table 1210 (see FIG. 12) to obtain information on the type of activity (ACTIVITY_TYPE) (e.g., a PowerBuilder type window or an executable file type) and the command line (EXEC_NAME) for the activity window application program (e.g., Class Registration activity window) or executable application program which is used to execute the activity. The stored procedure then returns this information to the main application program so that the activity list window 1750 may be displayed with the activities listed in sequence specific or alphabetical order where no sequence specific information for an activity is indicated.

For this example, the user has selected the Class Registration, Class Payment, Registration Approval, and Activity activities 1760 for his or her "Sample Class Registration" list 1750. Moreover, the user has chosen to sequentially list the activities such that the Class Registration Activity has the highest SEQ_NBR, with Class Payment and Registration Approval having lower SEQ_NBRs and Activity having the lowest or no SEQ_NBR.

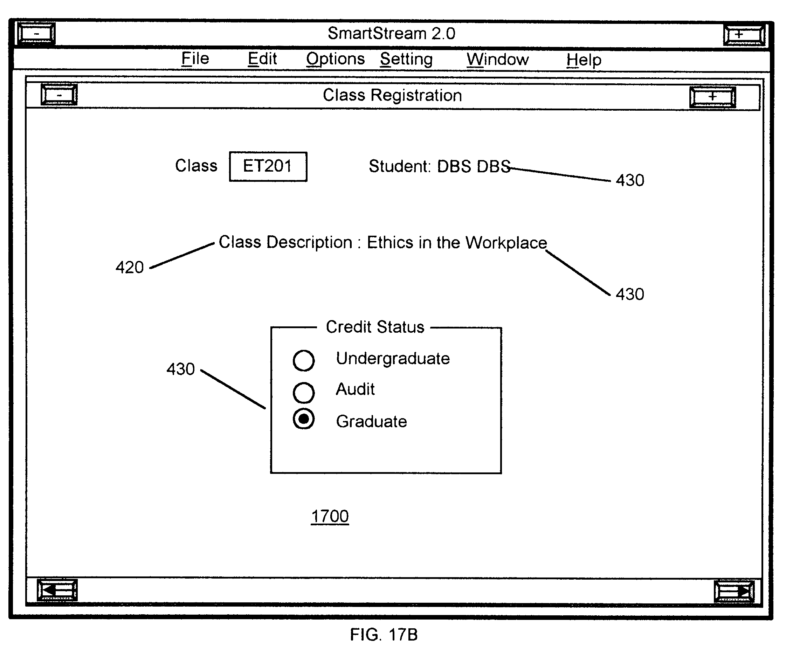

From the "Sample Class Registration" list window 1750, the user then selects the Class Registration activity from the list of activities in order to register for a class. As shown in FIG. 17B, the main application program then calls the activity window application program represented by its EXEC_NAME by issuing an "open" command (a PowerBuilder command). The main application program then reveals the Class Registration activity in a Class Registration activity window 1700. If the user had selected to run an executable file, then the main application program would have called the executable file represented under its EXEC_NAME by sending it a "run" command (a PowerBuilder command).

The computer system reveals the activity window 1700 by having the main application program access a Class Registration application program responsible for the Class Registration activity. The Class Registration application program contains information on the structure of the window and the headings 420 (e.g., Student, Class, Class Description, and Credit Status for the Class Registration activity). The Class Registration application program then executes a stored procedure. In one embodiment, the name of the stored procedure is psp_sel_sam1_1. The server then requests this stored procedure to send it back information on available classes for the user. The stored procedure then accesses the SAMPLE_CLASS table 1360 (See FIG. 13) to obtain information on each class (CLASS) and a description (DESCRIPTION) of the class. The stored procedure then sends this information, also referred to as values, back to the Class Registration application program.

After the Class Registration application program receives the headings 420 and their associated values 430, this information is displayed in the Class Registration activity window 1700. For this example, one class at a time is listed as a value 430 next to the Class heading 420 with the corresponding information for the class filling portions of the rest of the activity window 1700. The user may then scroll (e.g. with the arrow keys on the keyboard) through all possible classes that the user has access to register.

After the user has selected a class in which to register (e.g., ET201 - Ethics in the Workplace) along with the credit status (e.g., graduate), the user saves the information. The user may save the information by clicking over the "save file" icon, represented as a floppy disk (not shown), with the mouse or simply pressing the Control and S keys simultaneously on the keyboard.

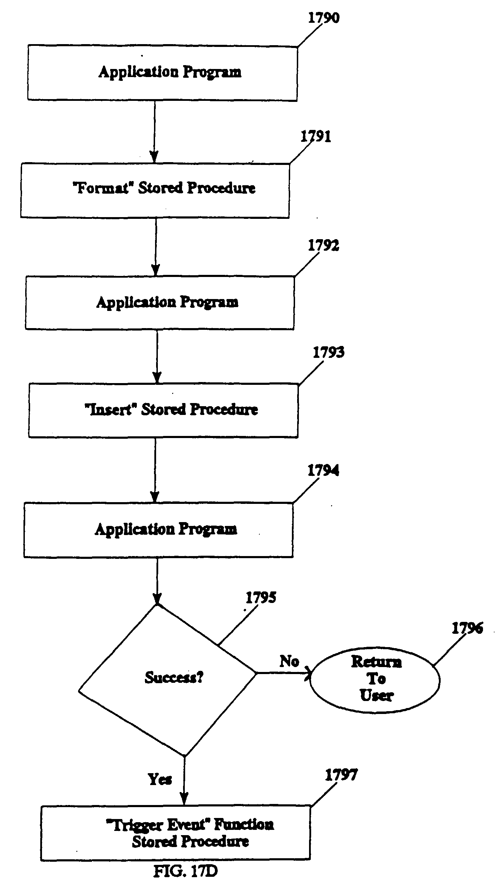

The Class Registration application program saves the Class Registration activity information (e.g., ET201 for class and graduate for credit status) in the following fashion. As shown in FIG. 17D, at step 1790, the Class Registration application program (written in PowerBuilder) calls a stored procedure, at step 1791, to format the information for certain columns in the associated table at the server. For this example, the information is formatted for the class, student, and credit columns in the SAMPLE_REG table 1365 (see FIG. 13). At step 1792, the formatted information is returned to the Class Registration application program, which, at step 1793, then sends the formatted information to a stored procedure at the server. In one embodiment, the name of this stored procedure is psp_ins_sam2_1. This stored procedure then stores each piece of information (each value) in its corresponding class, student and credit column in the SAMPLE_REG table 1365. Finally, at step 1794, the stored procedure returns a message to the Class Registration application program that indicates that the information has been saved.

At step 1795, the Class Registration application program then determines whether the information was successfully saved. If not, the application program proceeds to step 1796 and returns control to the user. However, if the information was saved successfully, then the Class Registration application program determines which event to trigger. For this example, possible events associated with the Class Registration activity are "Add Class" and "Change Class". To illustrate, the user has added a new class. Therefore, the "Add Class" event is selected, along with the corresponding stored procedure for this event. In one embodiment, the name of the "Add Class" stored procedure is pamsam2ins. At step 1797, the Class Registration application program then executes the Trigger Event function stored procedure to determine the next activities/tasks and users/workgroups responsible for completing the next activities/tasks associated with the Class Registration activity. In one embodiment, the name of the Trigger Event stored procedure is called pam0011_trig_am_event. In executing the Trigger Event stored procedure, the Class Registration application program sends information to the Trigger Event stored procedure at the server.

The information sent to the Trigger Event stored procedure includes an event identifier (EVENT_ID) for the corresponding stored procedure (e.g., pamsam2ins), the entity value (NEXT_STEP_ENT_VAL) (e.g., plant, site, organization, etc.) responsible for performing the next activity/task, the USER_ID for the user who completed the activity, the ACTIVITY_ID for the activity just completed (e.g., Class Registration), and the priority of the subsequent next activity/task (MSG_PRIORITY) set by the user who has just completed the activity. As shown in FIG. 17C, the user who just completed the activity may set the priority of the subsequent next activity/task by selecting the Set Task Priority option in the Options Mode. Other information may include whether a user or a work group (OWNER_TYPE) is responsible for the next activity/task and the identification for the user or work-group (USER_ID or MSG_GROUP_ID).

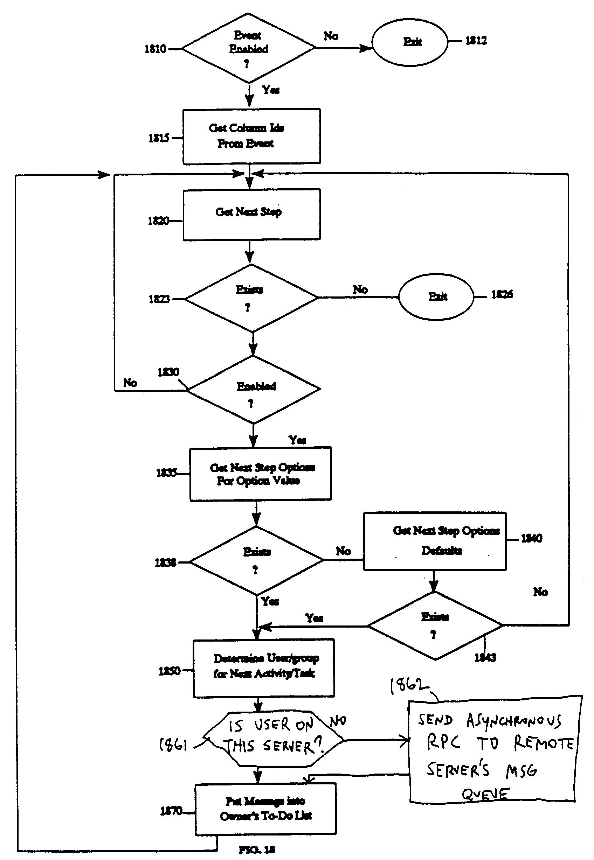

Referring to FIG. 18, a flow diagram is provided, for a preferred embodiment of the Trigger Event function stored procedure. This flow chart illustrates a process for determining the next activity/task(s), user/work group responsible for performing the next activity/task(s), and the like, and creating the next activity/task(s).

First, at step 1810, the Trigger Event function stored procedure determines whether the event (e.g., pamsam2ins for the "Add Class" event) is enabled. This is accomplished by accessing the EVENT_MASTER table 1220 (see FIG. 12) to determine if the ENABLED column for the EVENT_ID (e.g., pamsam2ins) contains a one or a zero. In a preferred embodiment, if the ENABLED column contains a zero, then the event is disabled, the Trigger Event function stored procedure is exited at step 1812, and control is returned to the Class Registration application program.

However, if the ENABLED column contains a one, then the event is enabled and the Trigger Event function stored procedure proceeds to step 1815. At step 1815, column identifiers (COL_Ids) are obtained from the EVENT_MASTER table 1220 for the corresponding EVENT_ID. Thus, the Trigger Event function stored procedure is able to determine which COL_Ids for the given event will be used to pass the values pertaining to the event. For this example, possible COL_Ids for the pamsam2ins EVENT_ID could be 1060 for COL_ID_1 representative of the Class heading, 1061 for COL_ID_2 representative of the Student heading, and 1062 for COL_ID_3 representative of the Credit heading.

The Trigger Event function stored procedure then proceeds to step 1820 to obtain the first of all possible next steps which are associated with the event. In doing so, at step 1823, the Trigger Event function stored procedure accesses the Next Step table 1225 (see FIG. 12) to determine if any next steps exists for the EVENT_ID. This is accomplished by determining if any rows (records) exists for the particular EVENT_ID in the Next Step table 1225. If there are no rows for the EVENT_ID in the Next Step table 1225, then the Trigger Event function stored procedure is exited at step 1826.

However, if rows for the EVENT_ID do exist in the Next Step table 1225, then, at step 1830, the Trigger Event function stored procedure determines whether the first row, which represents a particular next activity/task (ACTIVITY_ID), is enabled (ENABLED). If the ENABLED column is disabled (e.g., zero), then the Trigger Event function stored procedure returns to step 1820 to obtain the next step, if there are any. This loop continues until an enabled next step for a next activity/task corresponding to the EVENT_ID is encountered. If there are no rows enabled for the EVENT_ID, then, after the last one is encountered, the Trigger Event stored procedure will return to the Class Registration application program.

On the other hand, if a first row encountered for an EVENT_ID is enabled (e.g., one), then the Trigger Event function stored procedure obtains the message identifier (MSG_ID) representing the next activity/task category and the next activity/task identifier (ACTIVITY_ID) and proceeds to step 1835. At step 1835, the Trigger Event function stored procedure accesses the Next Step Options table 1230 (see FIG. 12) for the entity (NEXT_STEP_ENT_VAL) responsible for the next activity/task, and the stored procedure proceeds to step 1838

At step 1838, if rows exist for the NEXT_STEP_ENT_VAL, then the Trigger Event stored procedure proceeds to step 1850. However, if no rows exists for the NEXT_STEP_ENT_VAL, then the Trigger Event stored procedure proceeds to step 1840 to obtain any default values sent from the Class Registration application program which define the entity responsible for the next activity/task. This information is stored in the Next Step Options table 1230 in the NEXT_STEP_ENT_VAL column (see FIG. 12). In one embodiment, specific entities may be delineated with an identifier or an asterisk (*) may be used to indicate that every user (enterprise wide) may have access to the next activity/task. The Trigger Event function stored procedure then proceeds to step 1843 to determine if any default values are available. If no default values are available, then the Trigger Event function stored procedure returns to step 1820 to determine if there are any other next steps to be evaluated and acted upon as described above. However, at step 1843, if default values do exist, then the Trigger Event stored procedure proceeds to step 1850.

At step 1850, the Trigger Event stored procedure accesses the Next Step Options table 1230 to determine the user (USER_ID) or work group (MSG_GROUP_ID) responsible for the next activity/task. In doing so, it checks the IGNORE_OVERRIDE column for the row to determine whether the USER_ID or MSG_GROUP_ID values should be used. If the IGNORE_OVERRIDE is enabled, then the values identified in the column are used. However, if the IGNORE_OVERRIDE is disabled, then the values sent from the Class Registration application program are used. On the other hand, if the Class Registration application program did not send any values, then the values from the Next Step Options table 1230 are used. Next, the Trigger Event function stored procedure proceeds to step 1861, where it is determined whether the user is on the present server. If not, then at step 1862, asynchronous RPC is sent to the remote server's messages queue.

Finally, the Trigger Event stored procedure proceeds to step 1870 where information pertaining to the next activity/task is added to the MESSAGE_QUEUE table 1140 (see FIG. 11) by creating a row for the next activity/task. The information in the row may then be used later for the responsible user's or work group's To Do List. This information includes the OWNER_ID which is the USER_ID; MSG_GROUP_ID (for a work group) or override value; the OWNER_TYPE, which indicates whether the OWNER_ID belongs to a user or a work group; the ACTIVITY_ID for the next activity/task; the MSG_ID pertaining to the next activity/task category; and CREATE_TIME, which indicates the date and time the next activity/task was created.

Other information that may be stored in the new next activity/task row includes the MSG_SEQ_NBR, which indicates the priority associated with the message representative of the new activity/task category, where the priority is assigned to the next activity/task category by the user or work group to perform the next activity/task in the Detail To Do Category window (see FIG. 16L); the FOLDERNO, which indicates the user's or work group users' list associated with the next activity/task; and the NEXT_STEP_ENT_VAL, which indicates the plant, site, organization or the like ultimately responsible for the next activity/task.

Finally, particular information relating to the class in which the user has registered is stored in a COL_VAL associated with a specific COL_ID. For example, COL_ID_1 which is 1060 and represents the Class heading correlates with COL_VAL_1 which stores the class value, ET201; COL_ID_2 which is 1061 and represents the student heading correlates with COL_VAL_2 which stores the student value, DBS; and COL_ID_3 which is 1062 and represents the credit heading correlates with COL_VAL_3 which stores the credit value, graduate.

After the Trigger Event stored procedure has completed step 1870 by adding the pertinent information to the new next activity/task row of the MESSAGE-QUEUE table 1140, then the stored procedure returns to step 1820 to determine if there are any other next steps to be evaluated and acted upon as described above. After the Trigger Event stored procedure has acted upon all the next steps, as described above, the stored procedure proceeds from step 1820 to step 1826. At step 1826, the Trigger Event stored procedure is exited and control is returned to the Class Registration application program.

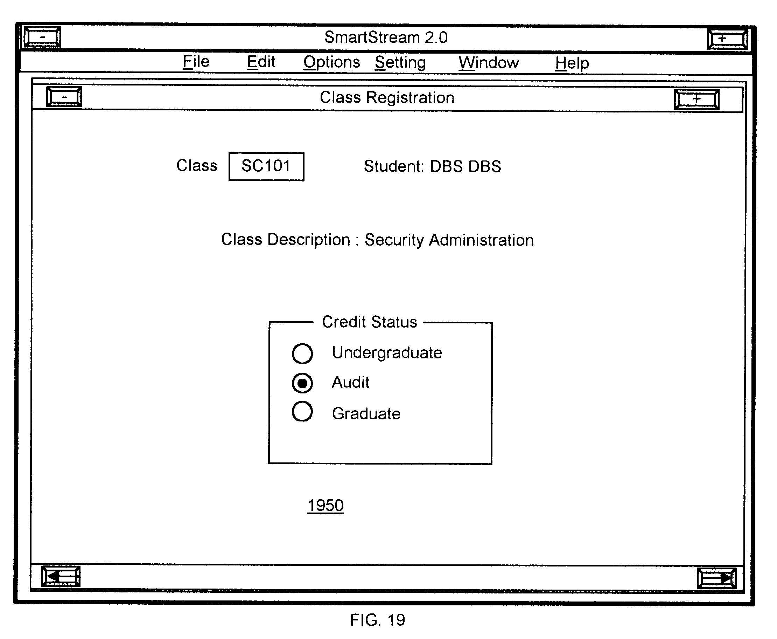

The Class Registration application program then displays a blank Class Registration activity window (not shown) and waits for the user to either register for another class or exit the Class Registration activity. For this example, as shown in FIG. 19, the user registers for a second class, SC101 (Security Administration) with an audit credit status. Therefore, the user executes the save command to save the class. Next, the procedure described above is repeated as the Class Registration application program formats the information entered by the user, and sends this information to be saved by the stored procedure. In one embodiment, the name of the stored procedures is psp_ins_sam1_1. After the information has been stored, the Class Registration application program determines which event to trigger and triggers the event, via the Trigger Event stored procedure, to determine the next activities/tasks and users/work groups responsible for completing the next activities/tasks.

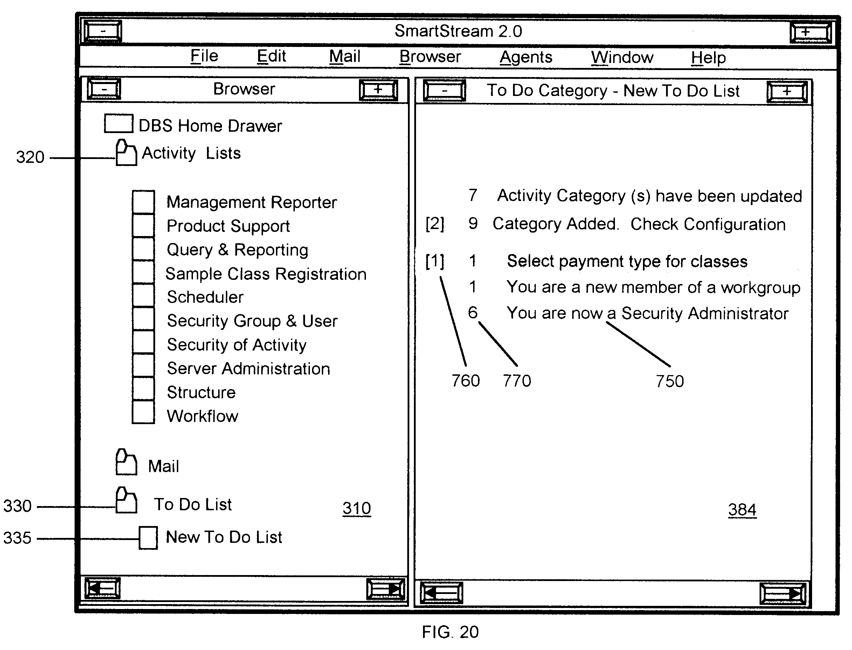

After the Class Registration application program receives a message from the Trigger Event stored procedure that all next activities/tasks have been added to users/work group's To Do List, the Class Registration application program again waits for the user to either register for another class or exit the Class Registration activity. For this example, as shown in Fig. 20, the user decides to leave the Class Registration activity window and return to the Browser mode list window 310. In a preferred embodiment, the user may press the F11 key to return the user to the Browser mode list window 310.

From the Browser mode list window 310, the user may then decide whether to access another list in the Activity List Folder 320 to begin another activity or to access the user's personalized To Do List ("New To Do List") 335 in the To Do Lists folder 330. In this example, the user selects the "New To Do List" 335, and a list of next activities/tasks is displayed in the Summary To Do Category window 384.

The computer system obtains the next activities/tasks for the Summary To Do Category window 384 (e.g., "New To Do List" window) by having the main application program send the USER_ID and FOLDERNO selected for the To Do List by the user to the stored procedure. In one embodiment, the name of the stored procedure is psp_sel_mque_detail. For this example, the FOLDERNO corresponds to the user's personalized To Do List (e.g., "New To Do List").

The stored procedure then accesses the MESSAGE_QUEUE table 1140 (see FIG. 11) to obtain the message via the message identifier (MSG_ID) for each next activity/task category corresponding to the user's USER_ID (identified as the OWNER_ID) and FOLDERNO. The stored procedure also obtains any priority information regarding the message and the next activities/tasks represented by the message from the MSG_SEQ_NBR and MSG_PRIORITY columns, respectively. The status of each individual next activity/task, as to whether it has previously been completed, is also obtained by the stored procedure from the MSG_STATUS column. Moreover, the stored procedure obtains the ACTIVITY_ID, COL_Ids, and COL_VALs associated with each MSG_ID for all its corresponding next activities/tasks. The stored procedure also accesses the ACTIVITY_MASTER table 1210 (see FIG. 12) to obtain information on the type of activity (ACTIVITY_TYPE) (e.g., PowerBuilder type window or executable file type) and the command line (EXEC_NAME) for the activity window application program or executable application program which is used to execute the next activity/task. The stored procedure then sends this information back to the main application program, which organizes the messages based on priority, calculates the number of completed and uncompleted next activities/tasks for each message, and reveals the messages 750 and completed (done) 760 and uncompleted (new) 770 information in the Summary To Do Category window 384.

For the "New To Do List" Summary To Do Category window 384, there are five messages 750. These messages 750 are "Activity Category[s] have been updated", "Category Added, Check Configuration", "Select payment type for class", "You are a new member of a Workgroup", and "You are now a Security Administrator". To the left of each message 2080 is the "Done" column 760 and the "New" column 770, which represent the number of next activities/tasks completed and uncompleted for the particular message 750. To illustrate, the "Category Added, Check Configuration," message 750 has two Done (completed) 760 and nine New (uncompleted) 770 next activities/tasks associated with the message 750.

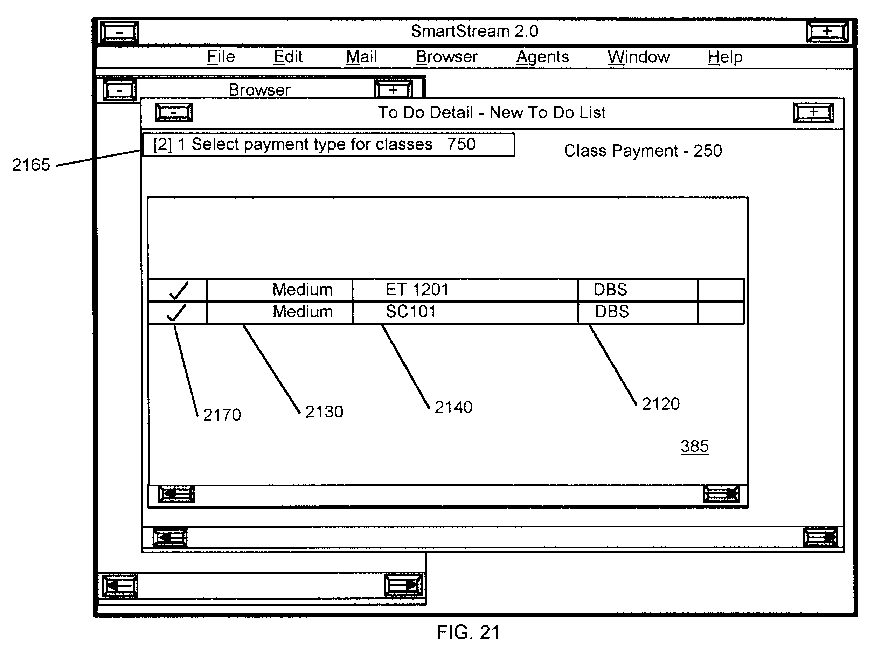

As shown in FIG. 21, the user may also access a Detailed To Do Category window 385. In this window 385, when the user accesses the To Do List, one message 750 is revealed at a time. For this example, the main application program is displaying the "Select payment type for class" message 750. The main application program reveals, to the left of the message 750, the number of next activities/tasks 2165 that exist, and discloses, to the right of the message 750, the next activity/task 250 associated with this message 750. The main application program also lists, below the message 750, key information relating to each next activity/task 250. From left to right, this includes whether the next activity/task 250 has been completed 2170, the priority 2130 associated with each next activity/task 250, and, for this example, the class heading 2140 and student headings 2120.

To illustrate, the number of existing next activities/tasks 250 associated with the "Select payment type for class" message 750 are two, and the next activity/task 250 associated with this message 750 is Class Payment. Further, the next activities/tasks 250 relate to two classes 2140, ET201 and S2101, sought to be registered by a user/student 2120, DBS. For this example, DBS, the one originally registered for both of these classes, is also responsible for selecting a payment type for each class. The window 385 also reveals that both of these next activities/tasks 250 are uncompleted 2170 and have medium priority status 2130.

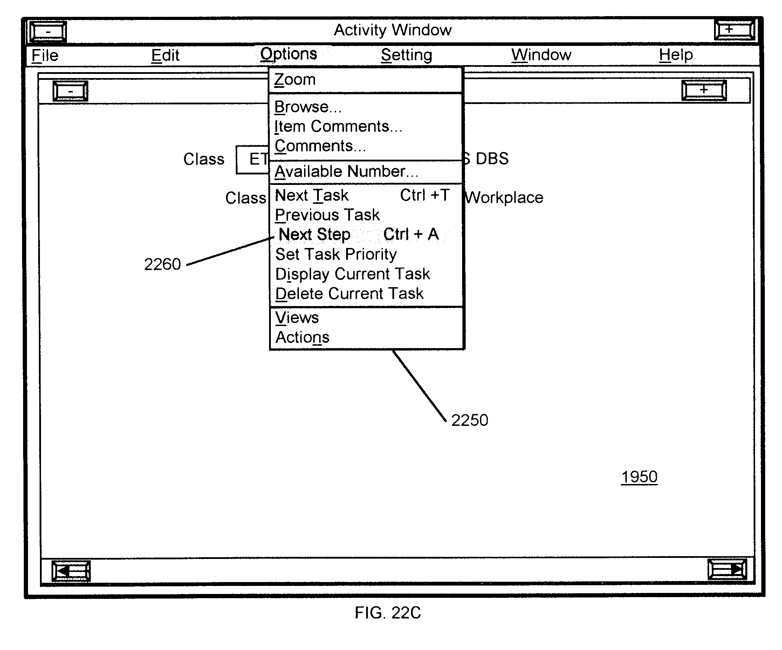

The user may select a category for a next activity/task to act upon from either the Summary To Do Category window 384 or the Detailed To Do Category window 385. For this example, the user selects the Class Payment next activity/task category, represented by the "Select payment type for class" message, from the Summary To Do Category window 384, as shown in FIG. 22A. The main application program then sends the FOLDERNO for the To Do List and the MSG_ID for the category selected to the next activity/task application program. For this example, the FOLDERNO and MSG_ID would be sent to the Class Payment application program represented by its EXEC_NAME. In one embodiment, the EXEC_NAME of the Class Payment application program is pam0510_payment.

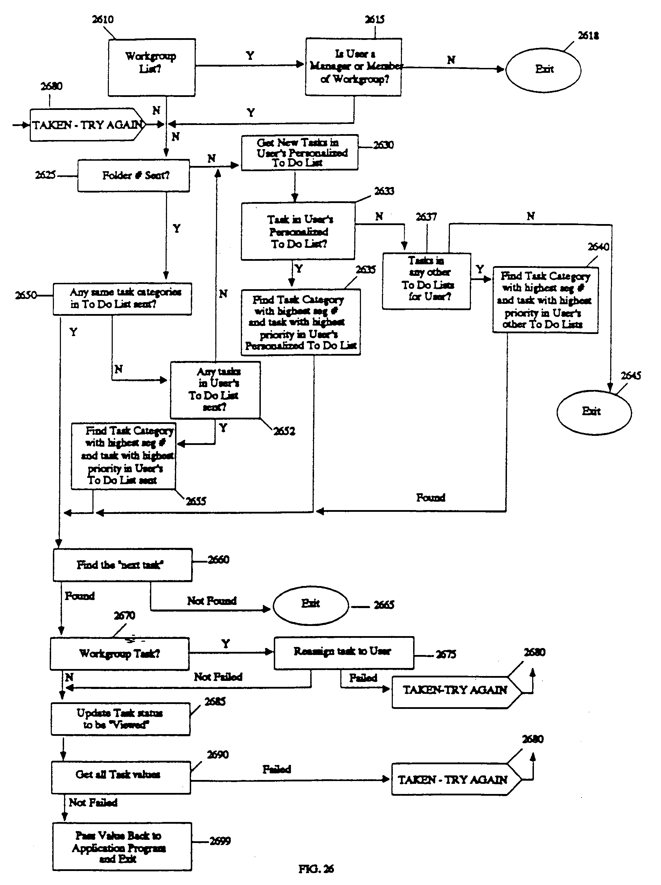

The next activity/task application program then sends the FOLDERNO and MSG_ID to a stored procedure which determines the most prioritized next activity/task for the next activity/task category. In one embodiment, the name of the stored procedure is the Next Task stored procedure, which is discussed in further detail below and is illustrated in FIG. 26. After determining the most prioritized next activity/task, the Next Task stored procedure sends information on this next activity/task (class payment), represented by its ACTIVITY_ID, to the next activity/task application program or executable application program.

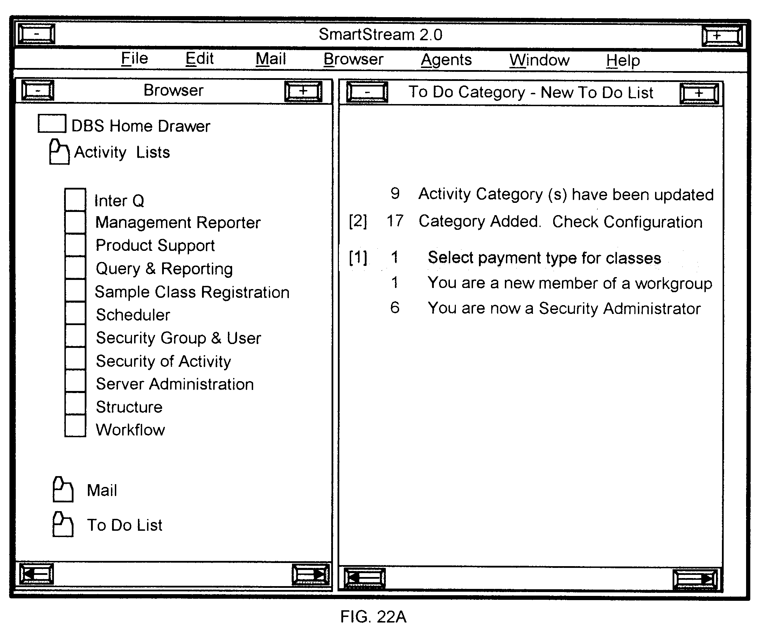

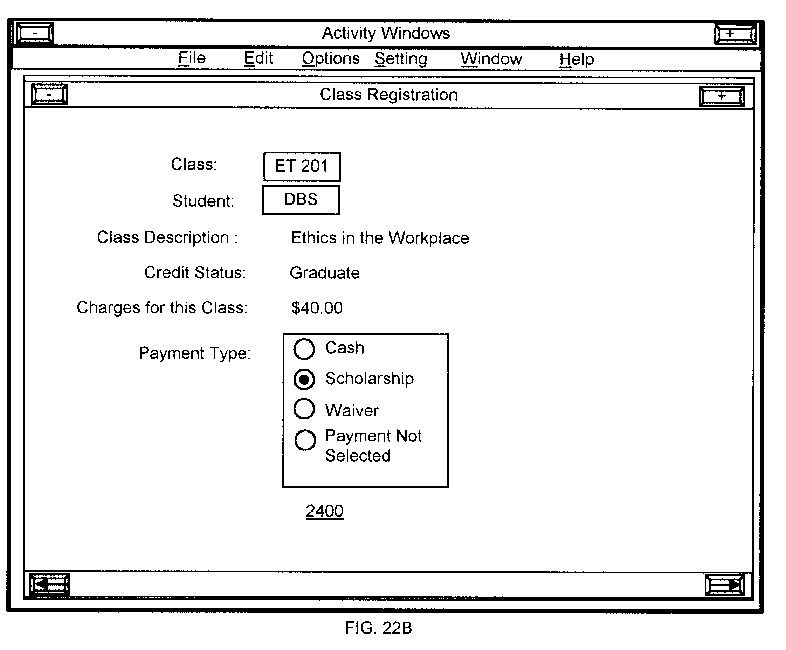

In this example, the class payment next activity/task category only contains one next activity/task. Therefore, the Next Task stored procedure selects the next activity/task, and the Next Task stored procedure send the Class Payment activity application program the next activity/task. The Next Task stored procedure also sends the Class Payment application program other information regarding this next activity/task. As shown in FIG. 22B, the Class Payment application program then reveals the Class Payment next activity/task in a Class Payment activity window 2400, as described above, for the Class Registration activity.

The user may also access next activities/tasks via, the Options mode. To illustrate, if the same user is responsible for an activity and corresponding next activity/task or next activity/task and corresponding next activity/task that occur sequentially, then the user may access the next activity/task from the activity or next activity/task window via the Options mode. For example, since the user (DBS) is responsible for both the Class Payment next activity/task and the just completed Class Registration activity, then DBS may access the Class Payment next activity/task from the Class Registration window via the Options mode.

To illustrate, as shown in FIG. 22C, after DBS had completed registering for the SC101 class in the Class Registration activity window 1950, DBS accesses the Options mode. In doing so, the Class Registration application program calls the Options application program, which reveals a list of options 2250 for the user to select from. Next, in order to access the sequential next activity/task in connection with the Class Registration activity, the user selects the Next Step option 2260 from the Options mode list 2250.

Upon accessing the Next Step option 2260, the Option application program calls the Class Registration application program to obtain information to be sent to a Next Step application program. The information obtained is the USER_ID, ACTIVITY_ID, and a key value, which, for this example, is SC101 for the class value (COL_VAL_1) as well as its corresponding column identifier (COL_ID_2). The Options application program then calls the Next Step application program and sends the USER_ID formatted as the OWNER_ID and FROM_USER_ID for DBS, the ACTIVITY_ID formatted as the FROM_ACT_ID for the Class Registration activity, the COL_VAL_1 for SC101, and the COL_ID_1 for the class heading to the Next Step stored procedure.

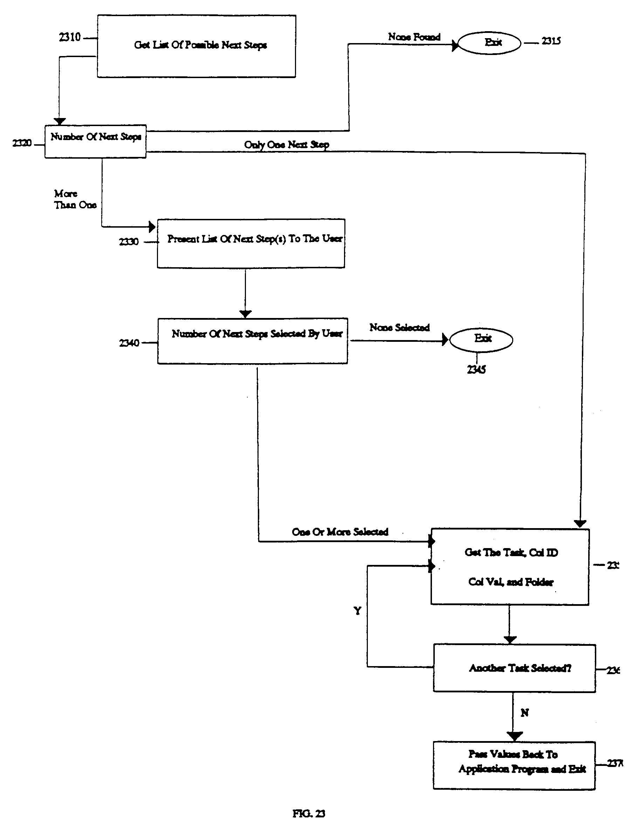

The Next Step stored procedure is illustrated in FIG. 23. In one embodiment, the Next Step stored procedure is called psp_mque_next_step_1. At step 2310, the Next Step stored procedure obtains a list of all possible next steps in connection with the just completed activity for that user. In doing so, the Next Step stored procedure accesses the MESSAGE_QUEUE table 1140 (see FIG. 11) to obtain all next activities/tasks (represented as ACTIVITY_Ids) and their message identifiers (MSG_Ids) for the OWNER_ID and FROM_USER_ID corresponding to DBS, the FROM_ACT_ID for the Class Registration activity, and the key value corresponding to SC101 (COL_VAL_1) for the class heading (COL_ID_1). The Next Step stored procedure then proceeds to step 2320.

At step 2320, the Next Step stored procedure calculates the number of next steps encountered. If the number of next steps encountered equals zero, then the Next Step stored procedure is exited at step 2315 and a message to this effect is sent back to the Next Step application program which reveals this to the user. If there is only one Next Step, then the stored procedure proceeds to step 2350. However, if the number of next steps equals one or more, then the Next Step stored procedure proceeds to step 2330.

At step 2330, the Next Step stored procedure sends the ACTIVITY_Ids and MSG_Ids to the Next Step application program, which lists each next activity/task in a window (not shown) that corresponds to the just completed Class Registration activity for the SC101 class. The user may then select which next activities/tasks he or she would like to act upon. The Next Step application program then sends the ACTIVITY_Ids for these next activities/tasks selected back to the Next Step stored procedure. The Next Step stored procedure then proceeds to step 2340.

At step 2340, the Next Step stored procedure calculates the number of next steps selected by the user. If the number of next steps selected equals zero, then the Next Step stored procedure is exited at step 2345 and a message to this effect is sent back to the Next Step application program which exits the Options window 1950 (see FIG. 22C) accordingly. However, if the number of next steps selected equals one or more, then the Next Step stored procedure proceeds to step 2350.

At step 2350, the Next Step stored procedure accesses the MESSAGE_QUEUE table 1140 (see FIG. 11) and obtains the ACTIVITY_ID, FOLDERNO, and information contained in the COL_Ids and COL_VALs for the first next activity/task selected. The Next Step stored procedure then proceeds to step 2360, where it determines whether there are any other next activities/tasks which need to be accessed from the MESSAGE_QUEUE table 1140. If not, then the Next Step stored procedure proceeds to step 2370.

However, if there are other next activities/tasks to be accessed from the MESSAGE_QUEUE table 1140, then the Next Step stored procedure returns to step 2350 and the above-mentioned information is obtained for the second next activity/task. This cycle continues until the pertinent information for each next activity/task selected by the user has been obtained by the Next Step stored procedure. The Next Step stored procedure then proceeds to step 2370.

At step 2370, the information related to each next activity/task selected by the user is sent back to the Next Step application program. This includes all ACTIVITY_Ids, FOLDERNOs, COL_Ids and COL_VALs. The Next Step stored procedure also sends a message as to the sequence that each next activity/task should be executed.

The Next Step application program then calls the application program responsible for performing the first next activity/task. If there are other next activities/tasks that need to be executed after the first (or current) next activity/task, then a message is sent to the application program indicating that it should call the Next Step application program upon completion of the first (current) next activity/task.

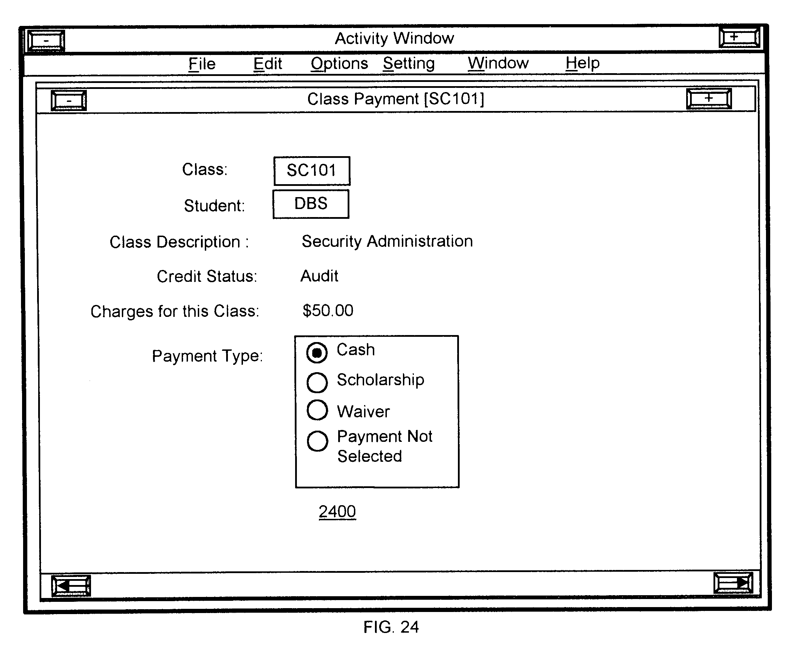

For this example, the Class Payment application program is called up. Therefore, referring to FIG. 24, the Class Payment application program reveals a Class Payment activity window 2400. As described in the foregoing, the user (DBS) may then complete the next activity/task by selecting the payment type (e.g., cash), and events and next steps will be triggered accordingly.

In another aspect of the present invention, the user may utilize the Options mode from a just completed activity or a just completed next activity/task window to simply call some next activity/task to the screen. The next activity/task chosen is selected, based on the following criteria. First, the highest priority next activity/task for the same next activity/task category. If no next activities/tasks exist for the preceding next activity/task category or the user has just completed an activity, then the highest priority next activity/task from the user's personalized To Do List is selected. If no next activities/tasks exist in the user's personalized To Do List, then the highest priority next activity/task contained in any other To Do List in which the user has access is selected.

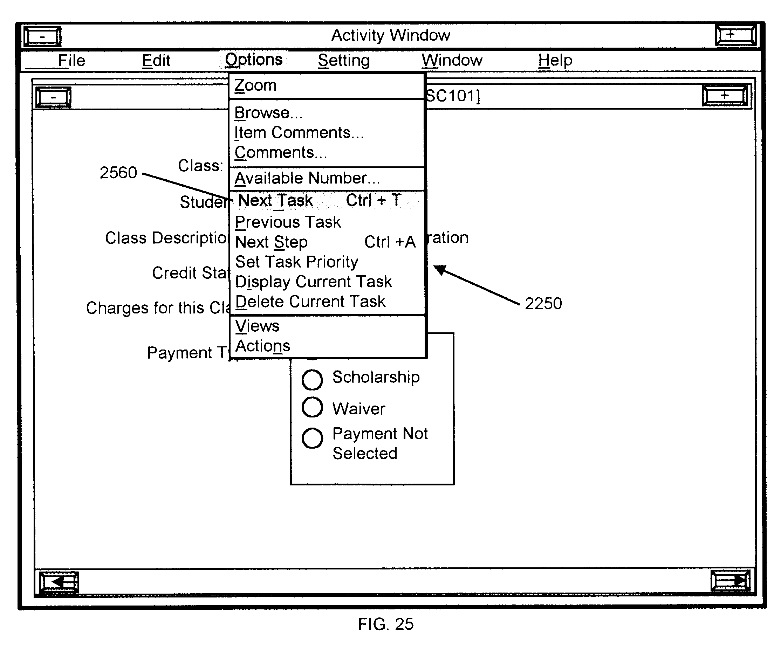

To illustrate, as shown in FIG. 25, after a user has completed registering for the SC101 class in the Class Registration activity window, the user (DBS) accesses the Options mode. In doing so the Class Registration application program then calls up the Options application program, which reveals a list of options 2250 for the user to select from. Next, the user selects the Next Task option 2560 from the Options mode list 2250.

Upon accessing the Next Task option, the Option application program calls the Class Registration application program to obtain information to be sent to the Next Task application program. The information obtained is the USER_ID, OWNER_type (user or work group), and ACTIVITY_ID. If the Options mode had been accessed from an application program associated with a next activity/task, then the MSG_ID and the FOLDERNO for the To Do List associated with the next activity/task would also have been obtained. The Option application program then calls the Next Task application program and sends it the USER_ID formatted as an OWNER_ID, the OWNER_TYPE and the ACTIVITY_ID. The Next Task application program then sends this information to the Next Task stored procedure.

In one embodiment, the Options application program calls the pam0015_next_msg (Next Task) application program, which sends the OWNER_ID, OWNER_TYPE, and ACTIVITY_ID to the psp_sel_mque_next_msg_1 (Next Task) stored procedure. If the Options mode had been accessed from an application program associated with a next activity/task, then the MSG_ID and FOLDERNO corresponding to the next activity/task would also have been sent to the Next Task stored procedure.

Referring to FIG. 26, the Next Task stored procedure is illustrated. At step 2610, the Next Task stored procedure checks the OWNER_TYPE to determine if the user has accessed the Next Task option from a user or work group list. If the user has accessed the Next Task option from a user list, then the Next Task stored procedure proceeds to step 2625. However, if the user has accessed the Next Task option from a work group list, then the Next Task stored procedure proceeds to step 2615.

At step 2615, the Next Task stored procedure determines if the user is currently a manager or member of the work group, in case the user's access privileges have been revoked since the time the user accessed the current work group list. If the user no longer has access privileges, then the Next Task stored procedure is exited at step 2618 and a message to this effect is sent back to the Next Task application program which reveals this to the user. If the user still has access privileges to the work group list, then the Next Task stored procedure proceeds to step 2625.

At step 2625, the Next Task stored procedure determines whether a folder number (FOLDERNO) for a To Do List was sent from the Next Task application program. If so, then the Next Task stored procedure understands that the Next Task option was called from either an individual user's or work group user's To Do List, and the stored procedure proceeds to step 2650.

At step 2650, the Next Task stored procedure determines if the To Do List represented by the FOLDERNO contains any of the same next activities/tasks categories represented as the MGS_Ids from the just completed next activity/task. If the FOLDERNO for the To Do List sent contains at least one same next activity/task category, then the Next Task stored procedure proceeds to step 2660. However, if the To Do List does not contain at least one same next activity/task category, the stored procedure proceeds to step 2652.

At step 2652, the Next Task stored procedure determines if the FOLDERNO for the To Do List sent contains at least one next activity/task. If the To Do List sent contains at least one next activity/task, then the Next Task stored procedure proceeds to step 2655.

At step 2655, the stored procedure evaluates each next activity/task in the user's To Do List sent to determine which next activity/task category (MSG_ID) has the highest sequence number and priority next activity/task. The sequence number is assigned to a next activity/task category by the user who will act upon the next activity/task, and the priority is assigned to the next activity/task by the user who is responsible for initiating the next activity/task. The Next Task stored procedure then proceeds to step 2660. On the other hand, at step 2652, if the Next Task stored procedure determines that the FOLDERNO for the To Do List sent does not contain at least one next activity/task, then the stored procedure proceeds to step 2630.

At step 2625, if a folder number was not sent to the Next Task stored procedure, then the stored procedure interprets this to mean that the activity is not currently in the context of a To Do List. An example of this occurs when the user selects the Next Task option from one of the user's activity lists. In this case, the stored procedure proceeds to step 2630.

At step 2630, the Next Task stored procedure obtains the folder number for the user's personalized To Do List, represented as the TO DO_FOLDERNO, from the USER_MASTER table 1110 (see FIG 11). Next, the Next Task stored procedure proceeds to step 2633 to determine if there is at least one next activity/task in the user's personalized To Do List.

If there is at least one next activity/task in the user's personalized To Do List, then the Next Task stored procedure proceeds to step 2635 to determine which next activity/task category, represented in the MSG_ID column, in the user's personalized To Do List has the highest sequence number and priority task. The Next Task stored procedure then proceeds to step 2660.

If the Next Task stored procedure does not find a next activity/task in the user's personalized To Do List at step 2633, then the stored procedure proceeds to step 2637. At step 2637, the Next Task stored procedure, scans all the user's other To Do Lists by FOLDERNO in the MESSAGE_QUEUE table 1140 (see FIG. 11) to determine if any other To Do Lists for the user contain next activities/tasks. If the Next Task stored procedure does not find a next activity/task in any of the user's other To Do Lists, then the stored procedure is exited at step 2645 and a message to this effect is sent back to the Next Task application program which reveals this to the user.

However, if one or more of the user's To Do Lists contain at least one next activity/task, then the Next Task stored procedure proceeds to step 2640. At step 2640, the Next Task stored procedure then evaluates each next activity/task in each of the user's To Do Lists to determine which next activity/task has the highest sequence number and priority task. The Next Task stored procedure then proceeds to step 2660.

At step 2660, the Next Task stored procedure selects a next activity/task based on the following hierarchy. First, the highest sequence number (MSG_SEQ_NBR) in the MESSAGE_QUEUE table 1140 for the task category, unless the stored procedure has proceeded from step 2650 such that the next activity/task category (MSG_ID) is already chosen. Second, the highest priority (MSG_PRIORITY) in the MESSAGE_QUEUE table 1140, where the priority may be high, medium, and low, for each next activity/task for the selected next activity task category. Third, the oldest create time (CREATE_TIME) in the MESSAGE_QUEUE table 1140 for the selected next activity/tasks with the highest priority in the selected next activity/task category.

If for some reason there are not any next activities/tasks encountered by the Next Task stored procedure in step 2660 (e.g., the user's access privilege to a To Do List was removed during the steps of the Next Task stored procedure as discussed above), then the stored procedure is exited at step 2665 and a message to this effect is sent back to the Next Task application program which reveals this to the user. However, if a next activity/task is selected at step 2660, then the Next Task stored procedure proceeds to step 2670. At step 2670, the Next Task stored procedures determines if the next activity/task selected is a work group next activity/task. If the next activity/task is not a work group next activity/task, then the stored procedure proceeds to step 2685.

However, at step 2670, if the next activity/task is a work group next activity/task, then the Next Task stored procedure proceeds to step 2675. At step 2675, the stored procedure determines whether the work group next activity/task still needs to be acted upon (e.g., has not already been assigned to another user within the work group or simply no longer needs to be acted upon). If the work group next activity/task still needs to be acted upon, then the stored procedure proceeds to step 2685. However, if the work group next activity/task no longer needs to be acted upon, the Next Task stored procedure proceeds to step 2680 where the stored procedure is instructed to "Try Again" by proceeding to step 2625 in order to locate another next activity/task as discussed above.

At step 2685, the Next Task stored procedure updates the message status (MSG_STATUS) column for the next activity/task (ACTIVITY_ID) selected to a "viewed" status. This status indicates that user is about to view the next activity/task. This status is one of several possible statuses. Other possible statuses include the "new" status, which indicates the next activity has recently been created and there have not been any users notified of its existence; the "notified" status which indicates that at least one user has been notified that the next activity/task exists; and the "complete" status which indicates that the next activity/task has been viewed, acted upon, and completed by a user.

Next, the Next Task stored procedure proceeds to step 2690, where, as long as the next activity/task still needs to be acted upon, pertinent next activity/task values are obtained from the MESSAGE_QUEUE table 1140 (see FIG. 11) to be sent to the activity application program which will perform this next activity/task. However, if for some reason the next activity/task no longer needs to be acted upon for whatever reason, then the Next Task stored procedure proceeds to step 2680 where the stored procedure is instructed to "Try Again" by proceeding to step 2625 in order to locate another next activity/task as discussed above.

Finally, if the pertinent values are obtained by the Next Task stored procedure at step 2690, then the stored procedure is exited at step 2699. At step 2699, the pertinent values are then sent back to the Next Task application program, which forwards them to the appropriate activity application program to perform the next activity/task.

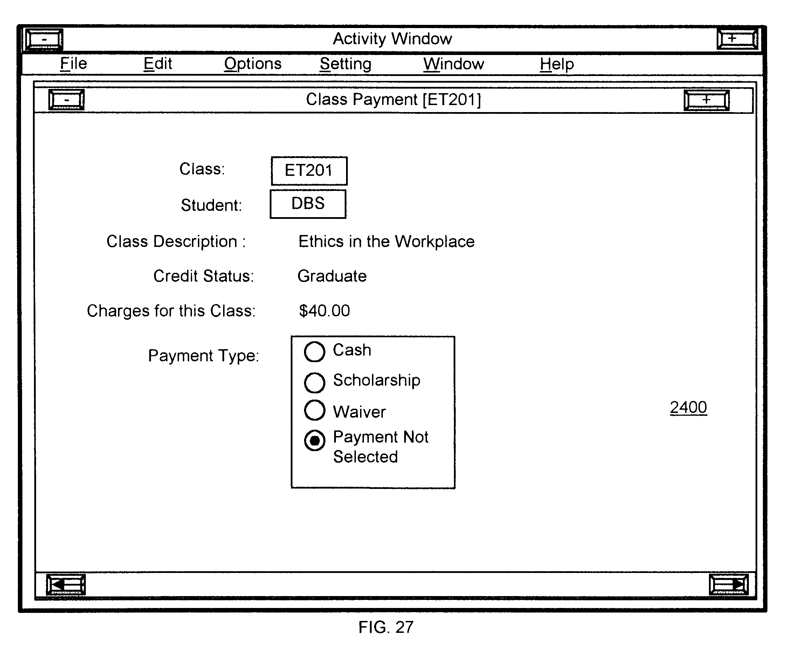

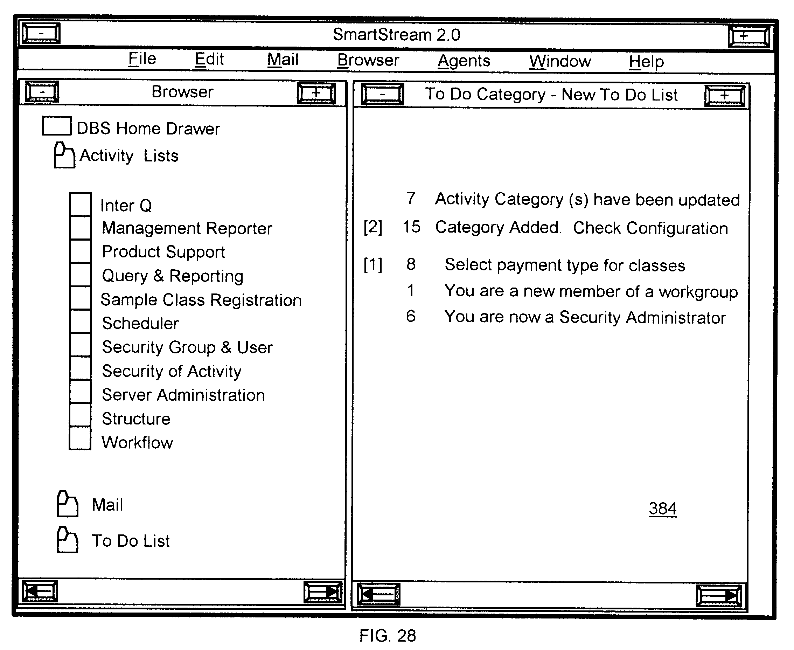

For this example, referring to FIG. 27, the next activity/task category selected was class payment. Therefore, the activity application program is the Class Payment application program. Thus, the Class Payment application program reveals the Class Payment activity window 2400. For this example, the next activity/task selected is the class ET201 for student DBS for the Class Payment activity. Referring to FIG. 28, after the user has completed the two next activities/tasks for the Class Payment activity, the summary To Do Category window 384 reveals that two Class Payment next activities/tasks exist and have both been completed (done).

Among other responsibilities, the administrator of the computer system of the present invention is responsible for the following. He or she defines entities (e.g., plants, sites, etc.); assigns USER_Ids to new users of the computer system of the present invention; assigns users to work groups; defines and maintains the security privileges of the users and work groups (e.g., which activities and next activities/tasks a user may access); disables and defines new next steps to comply with an organization's procedures; defines users and work groups responsible for performing next steps; changes the text of messages and other window text for each activity and next activity/task; and enters translated versions of messages and other window text for non-English speaking users.

The following illustrates how an administrator may define a new next step. As described above, for each activity, an event will be triggered. When an event is triggered, one or more next steps will be selected which will result in a new next activity/task being added to a user's or work group's To Do List.

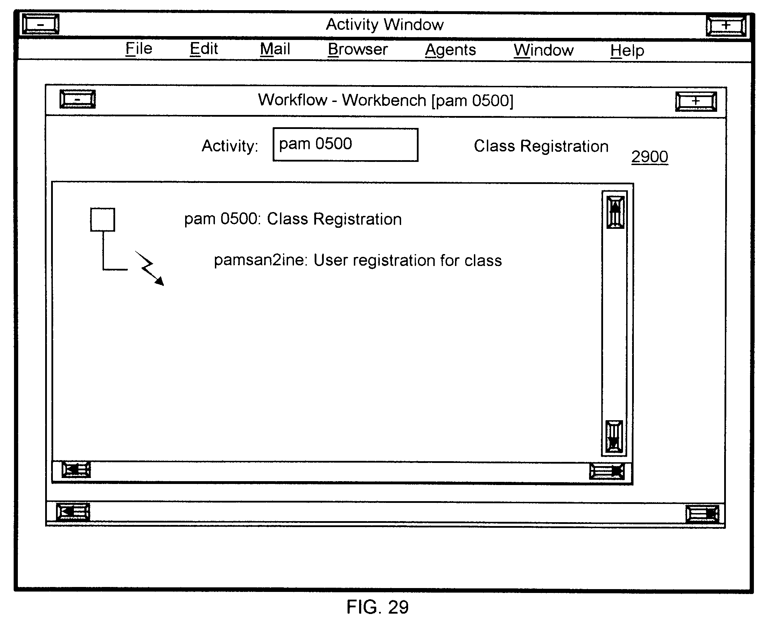

Referring to FIG. 29, the administrator accesses the Workflow Workbench activity from the administrator's list of activities (not shown). The Workflow Workbench activity window then displays an activity selected by the administrator, the activity application program name for that activity, all possible events for that activity, and the stored procedure name for each event in the WorkFlow Workbench window 2900. For this example, the Class Registration activity with its pam0500 activity application program name is displayed. For this activity, only one event exists. This event is "User registers for Class" (e.g. user adds a class) and the event identifier for the event is pamsam2ins.

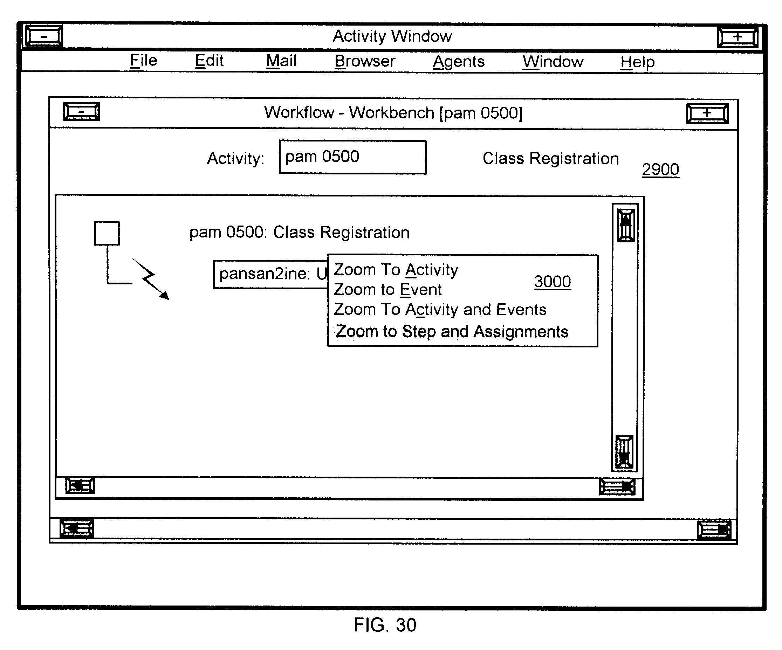

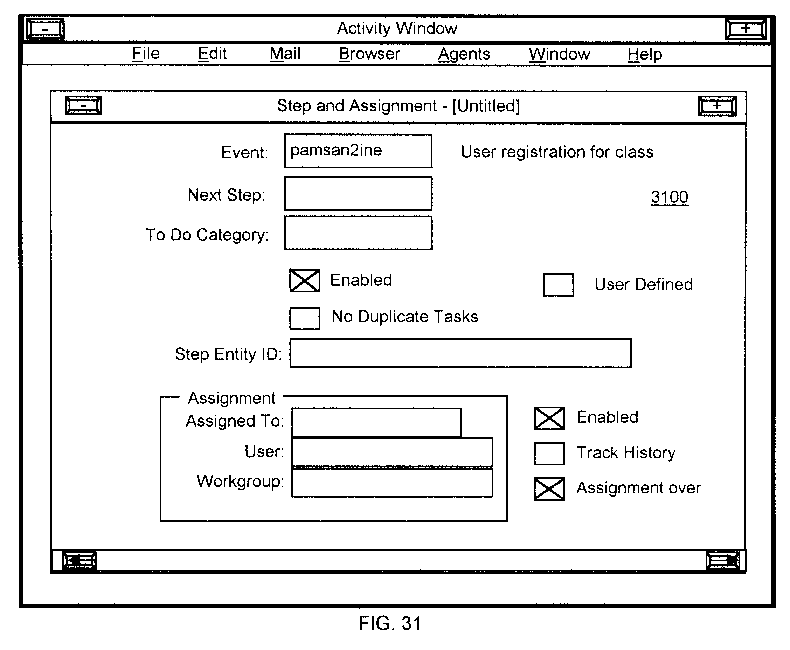

Referring to FIG. 30, to add a new next step, the administrator may select, the "Zoom to Step and Assignments" option from a Zoom options list submenu (not shown). The user may access this option by selecting the Options mode and Zoom option from the Options mode list (not shown). The main application program then displays the Zoom mode list 3000 in which the "Zoom to Step and Assignments" may be selected. The Step and Assignments window 3100 is then displayed, as shown in FIG. 31, with the event selected.

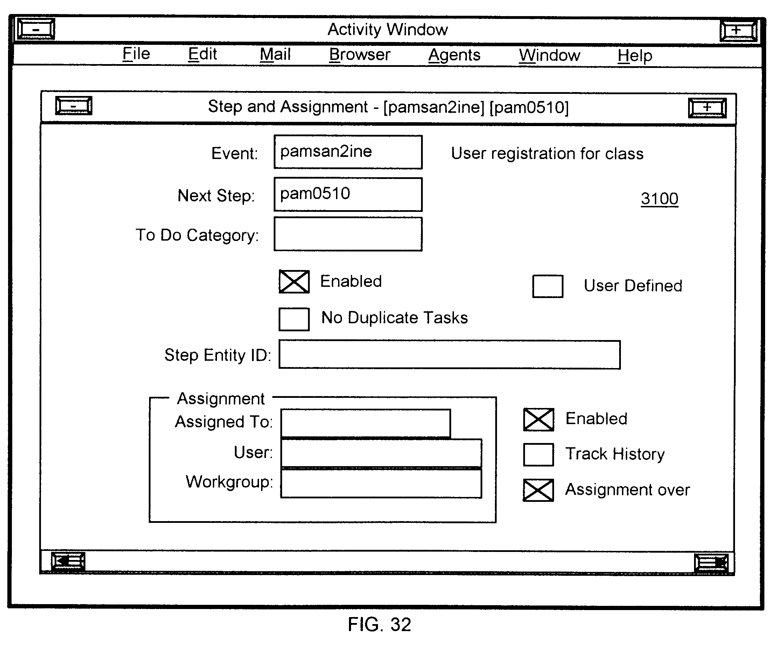

Referring to FIG. 32, in the Step and Assignments window 3100, the administrator then selects an activity (next activity/task) application program from a list of next activities/tasks as the next step in the work flow process. For this example, the administrator has chosen pam0510, which represents the Class Payment application program. The administrator also selects the Enabled box to enable this new next step. Moreover, for this example, the Assignment Override box is selected by the administrator such that any user or workgroup information entered by the administrator will override any default values contained in the Class Payment application program. The main application program then sends the activity identifier for the next activity/task (ACTIVITY_ID) and event identifier (EVENT_ID) to a stored procedure. In one embodiment, the name of the stored procedure is psp_ins_nxtm. This stored procedure then creates a new row for the next step represented by its ACTIVITY_ID and EVENT_ID in the Next Step table 1225 (see FIG. 12). The stored procedure then sends a message to the main application program revealing that the row has been created.

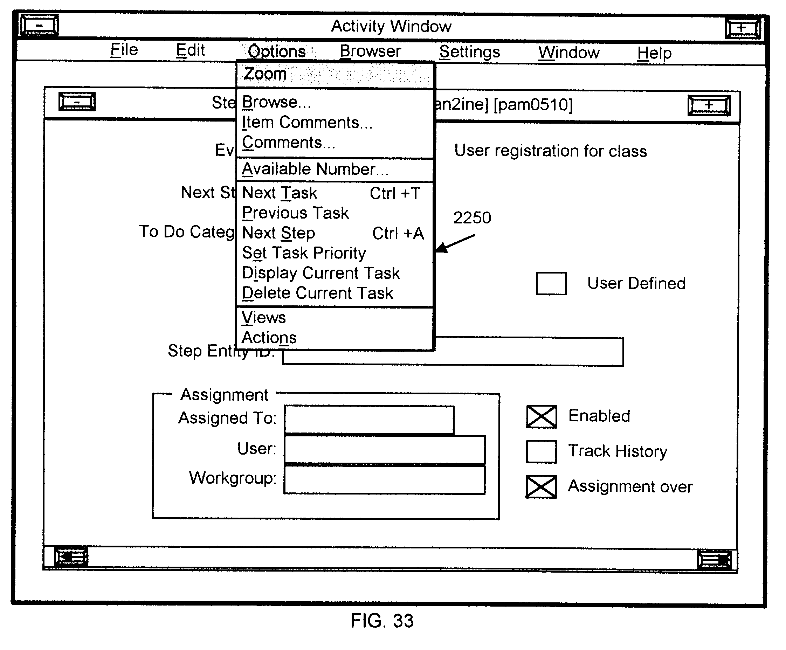

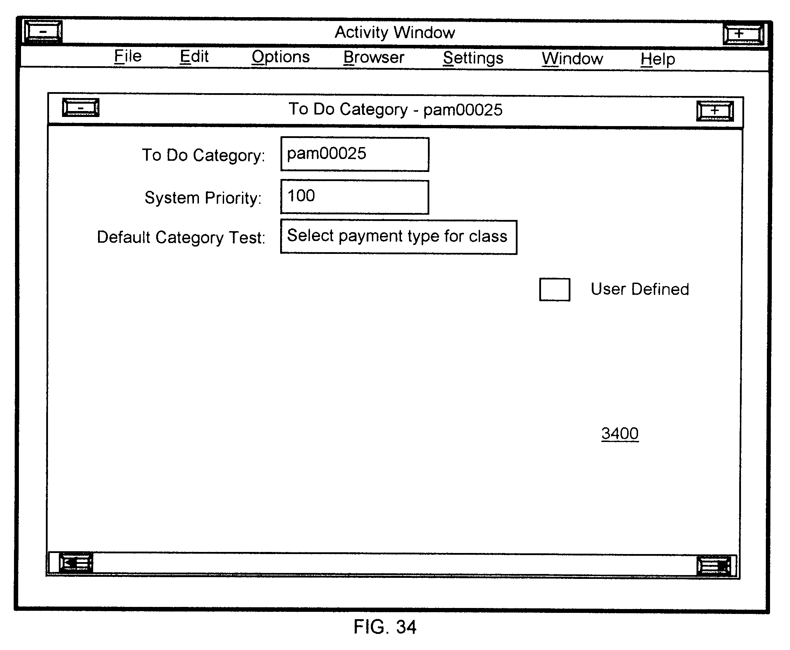

Next, the administrator selects a message representative of a next activity/task category in which to identify the next activity/task in a user or work group's To Do List. Referring to FIG. 33, the administrator accomplishes this by selecting the Options mode and Zoom option from the Options mode list 2250. As shown in FIG. 34, the main application program then reveals a To Do Category window 3400 which displays the default next activity/task category message, which the administrator may modify if he or she chooses. The To Do Category window 3400 also allows the administrator to assign a system priority to the next activity/task category, and to select if the next activity/task category will be user defined. The Main Application Program then sends the activity identifier (ACTIVITY_ID) for the next activity/task, the event identifier (EVENT_ID), the category message identifier (MSG_ID), the message text, the user defined (USER_DEF) information, and the system priority information to a stored procedure. This stored procedure then stores the MSG_ID and the USER_DEF for the ACTIVITY_ID and EVENT_ID in the NEXT_STEP table 1225 (see FIG. 12).

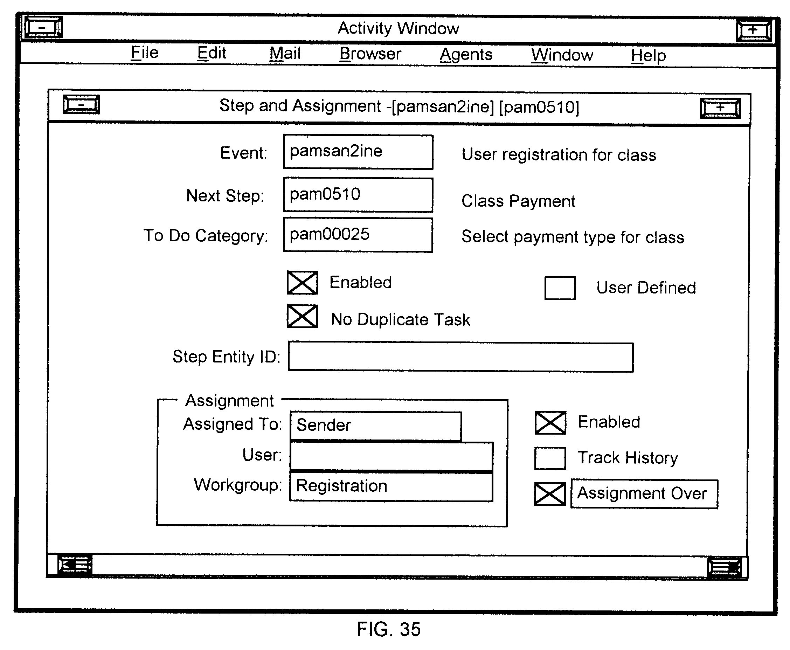

Finally, the administrator may assign the next activity/task to an entity, and a user and/or workgroup. Referring to FIG. 35, for this example, the administrator selects to assign the next activity/task to the default entity, represented as an asterisk (*), and the sender (e.g., the creator of the next activity/task) who is in the Registration workgroup.

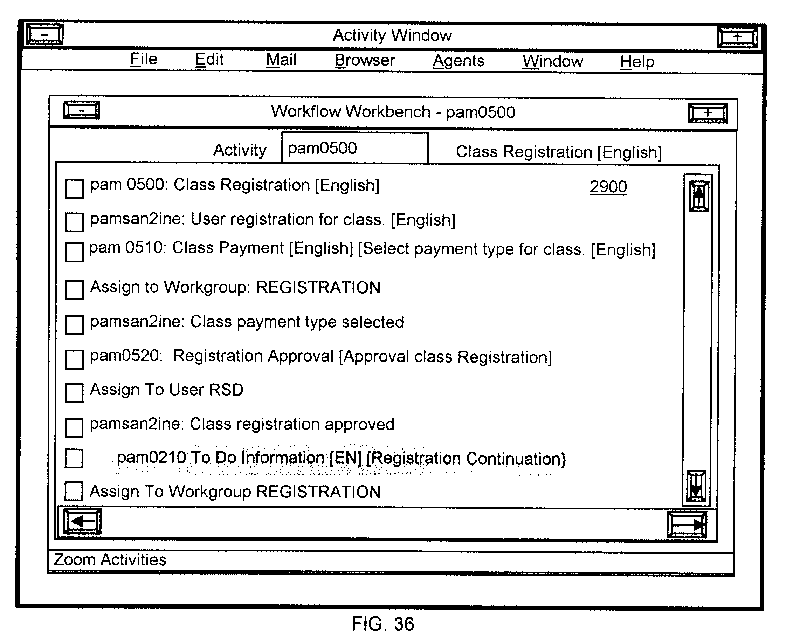

Referring to FIG. 36, as shown in the Workflow Workbench window 2900, the administrator may then add other next steps with corresponding assignments to a user or workgroup for the activity and each subsequent next activity/task. In this example, the administrator has assigned the Class Payment next activity/task to the Registration work group. Therefore, the work group identifier, represented as the MSG_GROUP_ID, is stored in the Next Step Options table 1230 (see FIG. 12). Other next steps selected by the administrator include the "Class payment type selected" (pamsam2up1) event with the next activity/task being "Registration Approval" (pam0520) which is assigned to user RSD.

The administrator may also activate the archiving feature of the computer system of the present invention. This feature may be used for backup and accountability purposes.

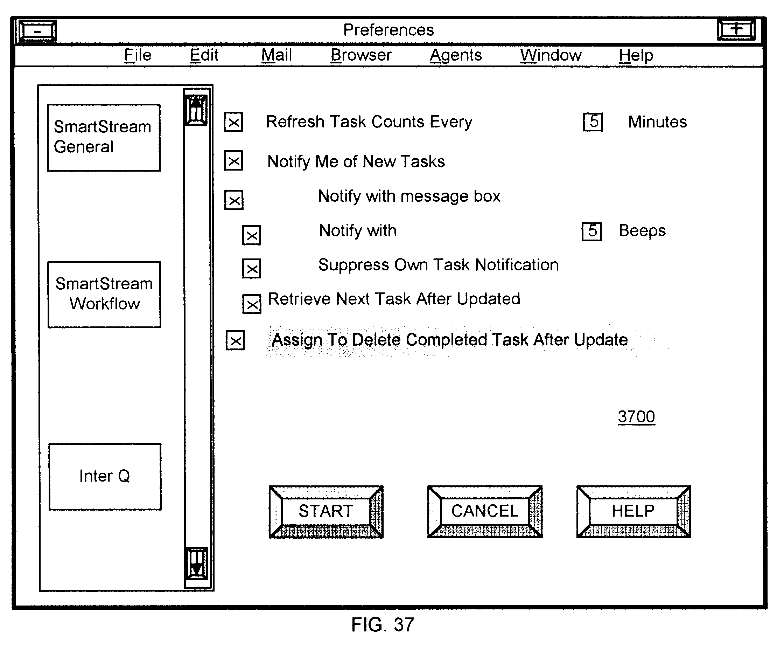

As shown in FIG. 37, a user may access a variety of additional features included with the computer/system of the present invention in the Preferences window 3700. These features include selecting how often the user would like to have his or her number of uncompleted next activities/tasks recalculated. This feature is called the "Refresh Task Counts" feature. Further, the next activity/task counts are recalculated at the specified time intervals selected by the user as described above for the Summary To Do Category window (see FIG. 7).

The features a user may select from also include activating a notification feature which notifies the user of new next activities/tasks which have been added to one of his or her To Do Lists and need to be acted upon. This feature is called the "Notify Me of New Tasks" feature. The user may then select to be notified with a message box in any window the user is currently viewing or with a certain number of beeps. The user may also select the next activity/task notification feature to be suppressed when the next activity/task is created by the user.

When the "Notify Me of New Tasks" feature is activated, the main application program sends the user's USER_ID to a stored procedure at the time intervals specified by the user. In one embodiment, the name of the stored procedure is psp_sel_mque_list. This stored procedure then obtains the number for the user's personalized To Do List (TODO_FOLDERNO) from the USER_MASTER table 1110 (see FIG. 11) with the USER_ID. Next, the stored procedure accesses the MESSAGE-QUEUE table 1140 (see FIG. 11) and obtains the relevant information on the next activities/tasks in the user's personalized To Do List which have a MSG_STATUS equal to "new." Finally, information regarding these "new" next activities/tasks is sent back to the main application program, which notifies the user of them with the message box or the beep(s).

Further, the user may activate the "Retrieve Next Task After Update" feature. This feature performs relatively the same sequence of events as described for the Next Task feature of the present invention. However, by activating this feature, the Next Task application programs and stored procedures are automatically accessed after saving information for a next activity/task.

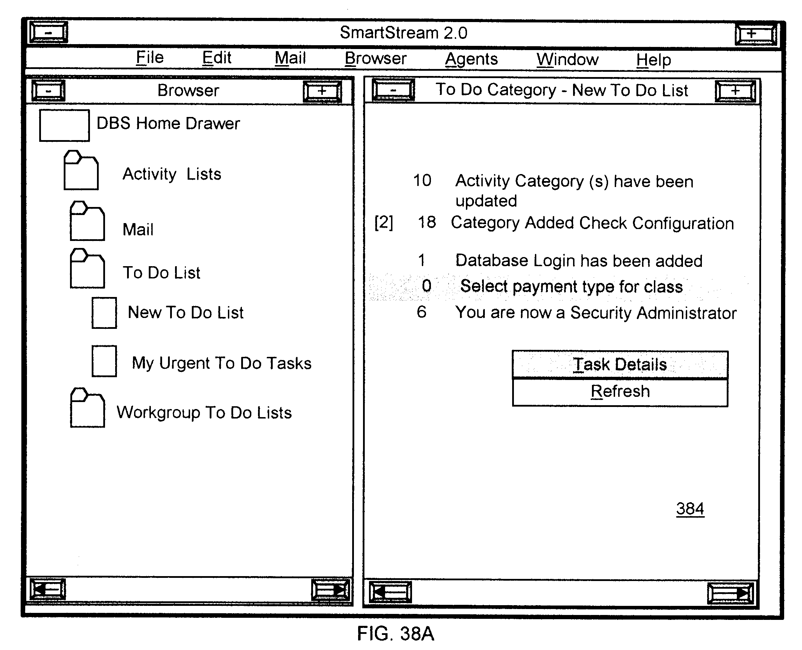

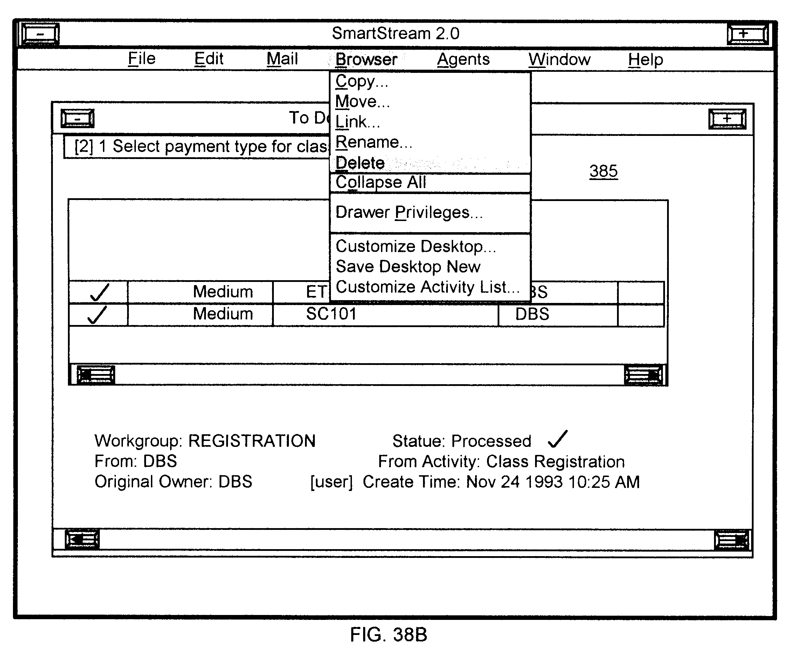

Moreover, the user may activate the "Delete Completed Tasks After Update" feature, which automatically deletes the next activity/task from the user's To Do List as shown in the Summary and Detailed To Do Category windows (see FIGS. 16H and 16L) when completed. When this feature is not selected, the Summary and Detailed To Do Category windows display the next activity/task as done or complete. As shown in FIG. 38A, the next activities/tasks may also be deleted manually by the user in the Summary To Do Category window 384 and Detailed To Do Category window 385 (see FIG. 38B).

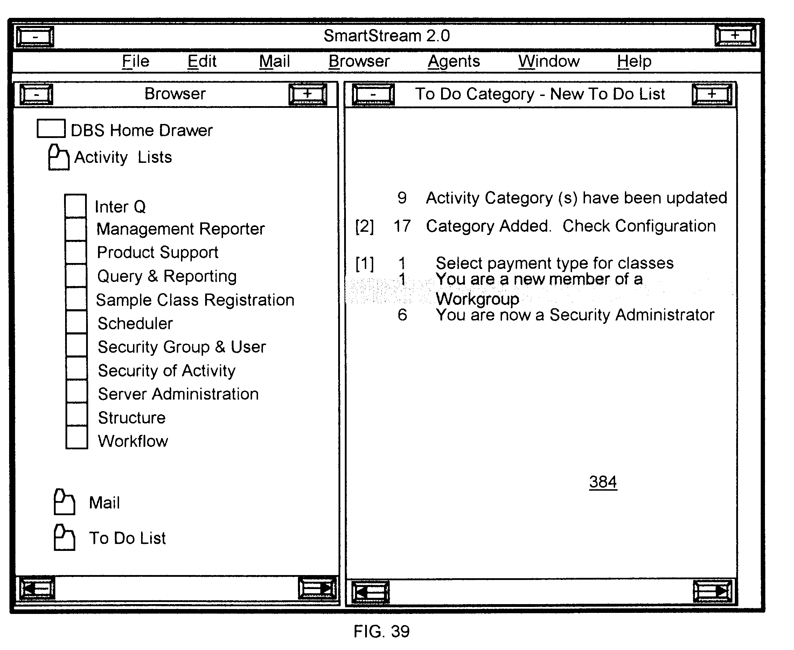

In another aspect of the computer system of the present invention, the user may obtain detailed information on a particular next activity/task. As shown in FIG. 39, the user may select a next activity/task category from the To Do Category window 384.

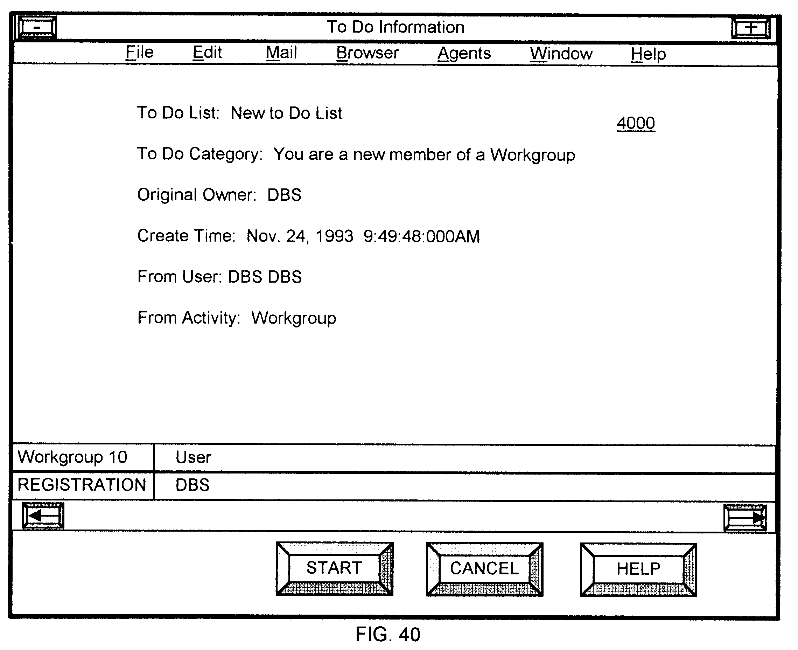

The main application program then sends the USER_ID formatted as the OWNER_ID, the OWNER_TYPE, and the FOLDERNO for the To Do List to a stored procedure. This stored procedure then calls the Next Task stored procedure, which accesses the MESSAGE_QUEUE table 1140 (see FIG. 11) with the OWNER_ID, OWNER_TYPE, MSG_ID, and FOLDERNO. This Next Task stored procedure then selects the highest prioritized next activity/task for the next activity/task category represented by its MSG_ID. Finally, the Next Task stored procedure sends the ACTIVITY_ID for the highest prioritized next activity/task from the next activity/task category back to a stored procedure. This stored procedure then accesses the MESSAGE-QUEUE table 1140 to obtain information on the user who initiated the next activity/task, also referred to as the original owner (ORIG_OWNER); the time the next activity/task was created (CREATE_TIME); the work group (MSG_GROUP_ID) responsible for the next activity/task; the user (FROM_USER_ID) who initiated the next activity/task; and the activity or next activity/task (FROM_ACT_ID) in which the next activity/task was initiated. This information is then sent back to the main application program which reveals it in the To Do Informational window 4000, as shown in FIG. 40.

According to a further aspect of the present invention, the computer system processes and prioritizes next activities/tasks for a user based on predefined conditions set by the user. These predefined conditions and actions resulting from the conditions in which the user may activate are referred to as agents.

According to another aspect of the present invention, the computer system includes a job scheduler feature which allows the user to create, schedule and submit jobs to run automatically. A job is typically an executable program, a DOS batch file or the like and an example of a job is a month-end departmental report.

According to yet a further aspect of the present invention, the computer system includes a mail feature. This feature allows the users to perform mail related activities including sending mail to and receiving mail from other users of the computer system of the present invention.

According to still another aspect of the present invention, the computer system includes a product request feature. This feature allows users of the computer system to communicate electronically with the administrator of the computer system so that the user may ask questions, receive system updates related to the computer system, and the like.

According to another aspect of the present invention, the computer system includes components which may be used to support a variety of business-related activities. These components include a component which allows intelligent, high-speed access to data, and another component which provides decision-making analysis and support. Moreover, these components are designed for use in a variety of business functions including manufacturing, distribution, finance, and human resources.

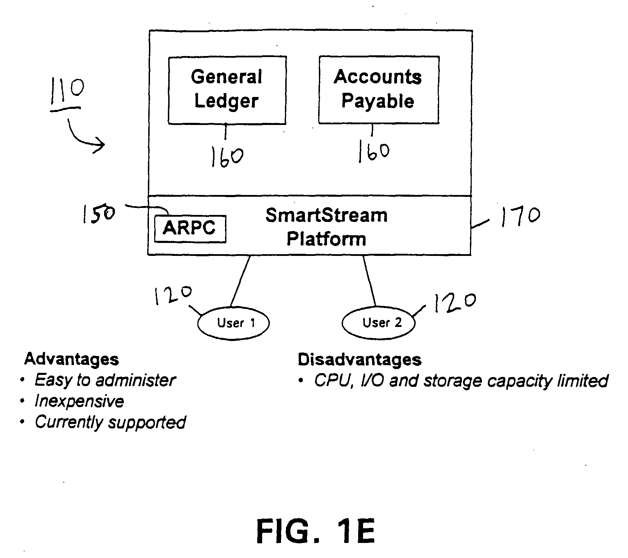

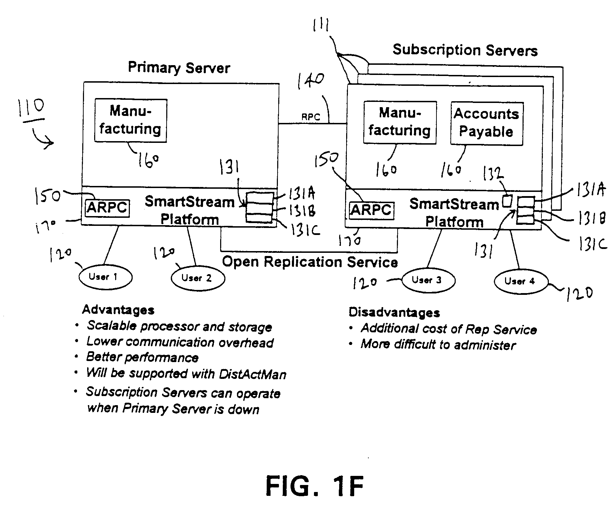

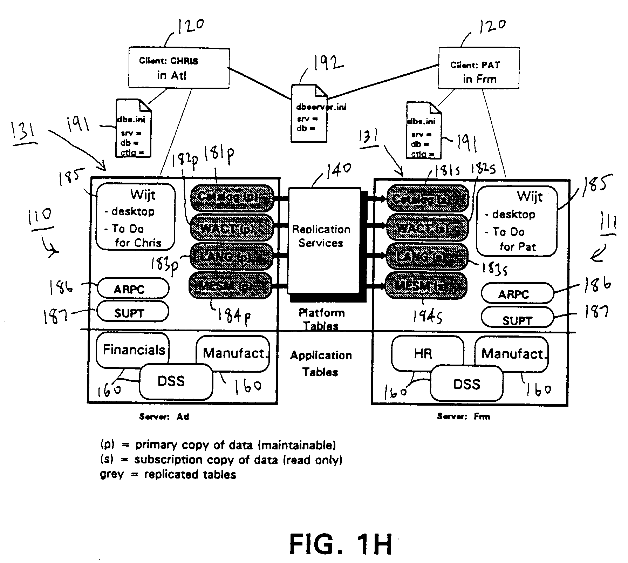

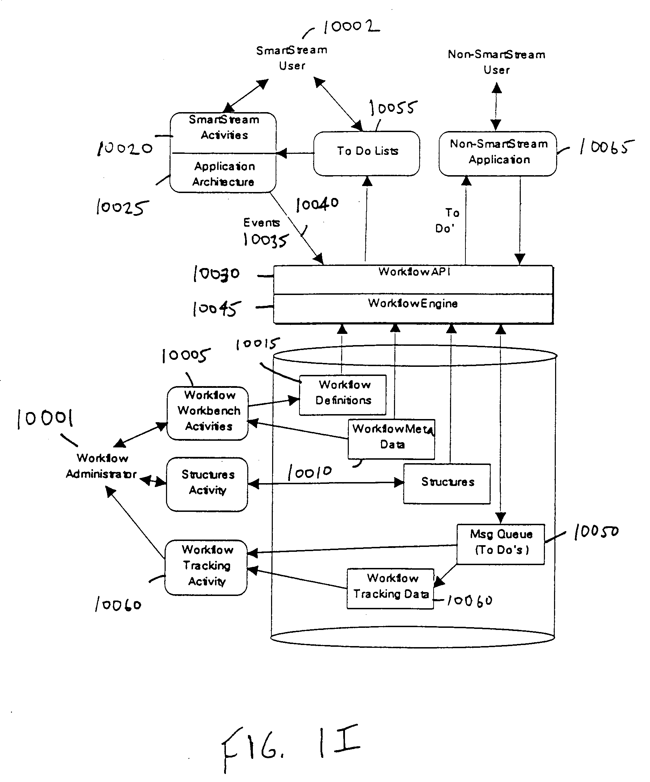

The implementation of the present invention described above with respect to FIGS. 1 through 40 assumes a single instance of database tables associated with the definition and implementation of the workflow, as visually depicted in FIGS. 11-15. The database tables shown in FIGS. 11-15 are commonly referred to as a "table family", because they exist and operate together as a single unit within a single database. The data in tables in such database which is used directly by the present invention to implement the new workflow techniques disclosed in this specification (e.g., in FIGS. 11-15) is generally known as the "platform table family" and the aggregate of this platform data in tables for a particular implementation of the present invention is therefore known as the "platform data". In a preferred embodiment, the present invention may utilize six table families, including distribution (ctlg), desktop (wijt), workflow (wact), message (mesm), product support (supt), and language (lang) data.

Similarly, data which corresponds to an application which resides in a database anywhere in the computer system (such as reference numeral 120 of FIG. 1A) is known as an "application table family", and the aggregate of such data for such an application is known as the "application data.

While a table family (defining a set of separate and distinct workflows) can be distributed among multiple servers, replicated among multiple servers, or reside on a single server, all tables in the family must have the same distribution properties as one another (distributed, replicated or centralized), according to the implementation of the present invention described previously with respect to FIGS. 1-40. All users of the particular workflow defined by the tables in FIGS. 11-15 preferably may make their primary database connection to the server which contains a "distribution catalog". The distribution catalog is the "address book" which all applications use to find the physical location of any table family.

Problems with this implementation, where a particular table family, and the workflow it defines, must reside on one server, include:
- **Single point of failure:** The platform server becomes a single point of failure. If the platform server is down, then all users are down.
- **Performance/connection bottleneck:** Since all users must connect to the server containing the distribution catalog, then this server becomes a connection bottleneck.
- **Network Performance:** Since all users' desktop and workflow data must be on a single server, some users may be forced to work off of a server which could be geographically remote even though their business data may be on a local server. For example, a user in Houston may need to be directly connected to the Chicago server (location of the distribution catalog), while other data relevant to the running application(s) may reside back at the Houston server.

In order to overcome these and other limitations, in one embodiment, the present invention may be designed to define an approach for implementing the workflow techniques, previously described, on multiple servers to provide the following benefits:
- **Workflow across servers:** That is, users and workgroups from different servers can participate in workflows.
- **Distribution-enabled applications:** Applications may be designed to take advantage of the replication and distribution of data.
- **The ability to define the server and database location of the desktop for each user:** The user's data (for example, desktop, To Do's and potentially application data) can be located close to the user to increase performance and availability.
- **The ability to define the server and database location of the workflow To Do tasks for each user and workgroup:** For users, this may be the same location as their desktop.
- **Removal of the restriction that all users that participate in a common workflow must have their desktop on the same server:** Desktops that participate in a common workflow may span servers.
- **A replicated copy of the distribution catalog on every server that contains desktop data:** This will enhance overall system performance due to the fact that these tables are heavy "read-only" tables.
- **A replicated copy of other platform data on servers as required:** This will increase data availability and will address the single point of failure issue. This benefit, along with the previous one, will provide site autonomy for each location in a computer network.
- **Client primary connection is to the database server containing their desktop:** This should improve performance. Currently, in a multi-server environment, a client's primary connection could be to a server other than the server containing their application data. This can cause performance problems.

The primary means for accomplishing these objectives is through the use of data distribution and replication. The concepts of replicated and distributed tables will be discussed at a later point in this specification. To achieve this objective, the following capabilities may be included:
- An enhanced procedure for each user to log onto the computer system in a way such that the computer system recognizes the user 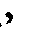 s "desktop server".
- Provide the ability for an application to determine where the primary copy of a table family exists.
- Provide the ability to replicate tables to remote sites and propagate updates from the primary site to remote sites.
- In a preferred embodiment, the solution should put minimal additional, visible constraints on a single site installation.

Prior to further describing the distributed design of the present invention, several terms may be defined. The definitions below are not meant to be an exhaustive interpretation of the related terms, but are merely provided as a basic definitional starting point for these terms. Those of ordinary skill in the art will readily recognize the scope of the meaning of these terms.

The following definitions are provided:
**data replication versus distribution:** There are at least four types of tables supported by the present invention. Tables can be either replicated, distributed, or a combination of both. Reference is made to the following table (Table A) for the appropriate terminology used when tables are distributed and/or replicated.

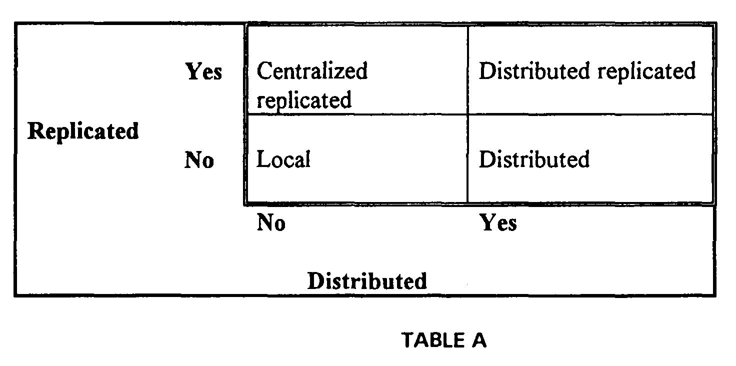

Thus, if a table is replicated, but not distributed, it is referred to as "centralized replicated". If a table is replicated and distributed, it is referred to as "distributed replicated". For purposes of the present invention, while distributed replicated tables can be implemented, they are not supported in a preferred embodiment. If a table is not replicated, and not distributed, it is referred to as "local", because in this case it is local to the user's computer. Finally, if a table is not replicated, but it is distributed, then it is referred to merely as "distributed".
**replicated table****:** A replicated table is a table which has copies on multiple servers in the system With the "primary copy replication algorithm" (PRCA) used according to the present invention, modifications are allowed only to the primary copy of the table and reads may be performed on the subscriber copies. Subscriber copies receive their data from the primary copy located at the primary server via the replication service.
"Fully replicated" means that copies of replicated tables are at every server site in the system. "Partially replicated" means that there are copies of the replicated tables at some, but not all, server sites. For purposes of the present invention, a partially replicated scheme will be assumed.
**distributed table:** A distributed table is one where different pieces of the table reside on different servers. If a table is horizontally distributed, it is distributed by rows. What rows of a table go on what server may determined by the "distribution entities" of the table family that the table belongs to. If a table is vertically distributed, subsets of columns reside on different servers. In one embodiment of the present invention, vertical distribution is not utilized.

An example of distributed tables in the present invention are the desktop tables in table family wijt. These tables include WIJ_DRAWERS, WIJ_FOLDERS, WIJ_FOLDERDCMTS and WIJ_DCMTS. Local updates to these tables do not need to be propagated to other servers.

Distribution of tables is accomplished through the use of "distribution entities". Distribution entities may be implemented as a new column on those tables which need to know where a table is. For example, a new column on the User Master table (reference numeral 1110 in FIG. 11, and Table D, described further below) and the Workgroup Master table (reference numeral 1210 in FIG. 12, and Table E, described further below) may be included, which points to the particular server where the subject table resides.
**primary copy****:** This is the controlling, definitive copy of the table (or row of the table, etc.). All subscriber sites (see "subscriber copy" below) will receive updates based on the content of the data present in the table at the primary site. All data modifications (updates, deletes, or inserts) required for a table that is a replicated table will be performed against the primary copy. The server on which the primary table lives is the primary server.
**subscriber copy:** A replicated copy of the primary copy of a table (or row, etc.) which is read only. Subscriber copies receive updates from the primary copy via the replication service.
**primary server:** The first server on which the present invention is implemented. In one embodiment, the primary server contains the primary copies of all the replicated platform tables.
**subscriber server:** A server on which the present invention may be installed subsequent to its installation on the primary server. Replicated copies of platform tables reside on subscriber servers and updates to these replicated tables are propagated from the primary copies at the primary server site.
**distribution-enabled:** A property of an application that enables it to use local replicated data as implemented as part of the present invention (i.e., in an environment with distributed desktops and replicated platform tables) rather than relying exclusively on the primary copy.
**distribution-compatible:** A property of an application that enables it to operate properly with the present invention but not to be necessarily distribution-enabled.
**distribution entities:** The column that a table family is horizontally distributed by is the distribution entity. An enterprise's values for the distribution entity are the distribution entity values.
For example, a particular application, such as an application for managing manufacturing within an organization, may have its data distributed by a distribution entity called "site". Any offices or plants in different locations, for instance Chicago, Boston, and Atlanta, may be the distribution entity values for the distribution entity called "site".
In one embodiment, a table family can be distributed by 0, 1, or 2 distribution entities, although this is merely one implementation and not a limitation on the invention. The number of distribution entities is typically defined by the application; it is generally not user defined. Of course, the present invention may readily be implemented so as to allow the user to define the number of distribution entities.
**consolidated****:** An attribute of a distributed table which means that the table needs to be queried across servers. An example of this type of table is the message queue. Generally, there will be a message queue per server that supplies workflow messaging for the local site.
If the organization implementing the present invention wanted to perform analysis on its workflow, a consolidated message queue that holds all messages across the organization would provide this type of information. This concept of a corporate-wide consolidated message queue is not supported in a preferred embodiment of the present invention, but, of course, may be readily implemented if desired, according to techniques known in the art.
**server initialization:** Server initialization is the process of installing the minimum platform services and objects on a server so that it can be used as a remote server.
**server materialization****:** Materialization is the process of how subscriber servers are installed after the primary server is installed.
The current installation process for using the distribution and replication aspects of the present invention generally remain unchanged from that described previously for the basic workflow system of the present invention. When a subscription server is materialized, the source of the environmental data for this server may be from the primary server.
**server dematerialization****:** Dematerialization is just the opposite of materialization as the term suggests. It is concerned with how a server is removed from service after it has been in use for a period of time. The primary concern here is what to do with the data and how does the user migrate the data to other servers.
**application platform data (APD)****:** Data added to the platform tables by applications. This is relevant with respect to installation and migration.
**table family:** A table family consists of a group of logically related tables that are handled as an atomic unit with regard to installation, replication, distribution, transaction management and referential integrity edits. Specific rules for table families according to one embodiment of the present invention include the following:
- All tables in a family must be installed on the same server and in the same database.
- All procedures and triggers associated with a table family can only update tables within that family. In other words, a procedure (transaction) cannot perform cross-family updates.
In a further embodiment, and in order to support a distributed design. a table family generally cannot contain tables of mixed types as defined above. Specifically, a table family cannot contain both replicated (read only) and local (local update) or distributed tables.

In some cases there may be dependencies between table families. For example, table families might need to be installed in the same database on all primary and subscriber servers. The install and materialization processes may be designed to enforce these dependencies.

The following are constraints or restrictions that are generally the result of the design of the distributed/replicated aspects of the present invention, in one embodiment of the present invention:
- No support is provided for distributed, replicated platform data, although this may be used for application data.
- All replicated platform data must be replicated to each storage facility (site). Data cannot be replicated at some subscription server sites and not at others. Again, appropriate design may eliminate this constraint.
- It is generally not possible to dematerialize (described further below) the server which contains the primary copies of the platform tables (without destroying the entire installation), or to change which server acts as the primary server. However, a tool could readily be provided to do this.
- All tables in a table family are generally distributed/replicated in the same fashion. This restriction reflects the decision to only record distribution/replication information at the table family granularity, but this restriction could be eliminated with an appropriate design change.
- Replication of text data is not supported. The replication mechanisms utilized in a preferred embodiment (Sybase Replication Server and a proprietary asynchronous RPC facility) will not work when text is involved. Of course, this constrain may also be eliminated with an appropriate replication mechanism that doesn't have this restriction.
- If a user is a member of a workgroup whose wijt_location is a different server than the user's desktop (the message queue for that workgroup is on another server) and that server is down, the user cannot participate in workflows that involve the workgroup.
- This design does not currently support the uniting of two distinct installations implemented according to the teachings of the present invention. It will only support materialization of new servers within one installation. Of course, appropriate design changes could be implemented to eliminate this constraint.
Application table families can only be installed on primarly or subscriber servers (i.e., only those on which that platform has been instantiated).
- Updates to replicated tables are typically (but not always) infrequent and generally involve a single row at a time.
- Update transactions that span multiple tables and include updates to replicated tables are typically rare and can be handled on a special-case basis.
- The primary copy of a table is the default value for a server entry in tsdx (see Table C) that does not contain a from_server value.
- The distributed design for the present invention does not, in one embodiment, include a general data movement tool for moving application data from one server to the other. Applications will have to develop data movement mechanisms on their own using the platform process to move users from one server to the another as a model. Of course, a general data movement tool may readily be designed.
- The distributed design of the present invention does not, in one embodiment, include any features to facilitate distributed reporting. However, such features may also be readily implemented.
Of course, the above constraints are provided merely to set forth one way in which the present invention may be implemented. These constraints are not limitations on the possible range of functionality of the present invention, but merely one design approach.

As described above, the present invention may be designed to support three types of servers: primary servers and subscriber servers. Each installation of the present invention generally may contain a single primary server where initial product installation and overall system administration is performed. This server is where the present invention is initially installed. Most administration tasks such as adding a new user, installing a new product, or changing a workflow definition require the availability of the primary server. FIG. 1E illustrates a configuration of the present invention in a relatively simple form -- where a primary server 110 and end user workstations 120 are utilized -- but no subscriber or remote servers. In this case, databases 160 (in this example, general ledger and accounts payable databases - - of course, these are just used as examples, and any type of database may be utilized) reside on the primary server 110, as does the operating environment 170 component of the present invention and ARPC 150. The elements of the system of FIG. 1E otherwise generally correspond to similarly identified elements depicted in FIG. 1A, described previously with respect thereto.

FIG. 1F depicts the other supported configuration, a configuration consisting of a primary server 110 and one or more subscriber servers 111. Subscriber servers 111 contain subscription copies of the platform configuration table families 131 and an instance of the user desktop table family 132 (described further below). Individual users or workgroups (and hence their respective end user workstations 120) can be assigned to a subscription server 111. A user 120 assigned to a subscriber server 111 can operate when the primary server 110 or the communication link 140 between the subscriber server 111 and the primary server 110 is down (inoperable).

The platform data 131 is divided into three categories, basic platform services 131A, the user desktop data 131B, and the platform configuration data 131C. The basic platform services consists of the arpc table family. This distributed table family must be installed on every server (110, 111, , etc.) in the system that has any application data relating to the present invention on it as part of the server initialization process (described further below).

The user desktop data 131B contains the user's drawers, folders, and attachments (described previously). This data (table families wijt and supt) may be horizontally distributed to every subscriber server 111 in the system based on the assignment of users 120 to servers. A particular user 120 will be assigned to a server 111 when their user account is set up. A procedure may be provided to move a user from one server to another.

The platform configuration data 131C consists of the distribution catalog, activity definitions, security definitions, workflow definitions, message master, browse and file open parameters, and user and workgroup definitions (described previously with respect to FIGS. 11-15). This data is in table families ctlg, wact, mesm, and lang. The platform configuration data 131C may be centrally maintained on the primary server 110 and replicated to every subscriber server 111 in the system. The replication algorithm may allow "selects" from the copy on any server (110, 111, etc.) and "inserts", "deletes", and "updates" only to the copy on the primary server 110. Inserts, deletes, and updates may be propagated from the primary copy on the primary server 110 to the subscription copies on the subscription servers 111 automatically. Thus, the platform windows which maintain the data in the replicated table families (CTLG, WACT, LANG, and MESM) generally requires that the primary server 110 be available.

FIG. 1H illustrates the platform table families 131 divided into two groups: those that are replicated (CTLG 181, WACT 182, LANG 183, and MESM 184) and those that are distributed (WIJT 185, ARPC 186, and SUPT 187). Updates to the primary copy of each table (denoted with a trailing "p" -- e.g., 181p, 182p, 183p and 184p) are automatically propagated to the secondary copies (denoted with a trailing "s" -- e.g., 181s, 182s, 183s and 184s) for replicated tables, via replication services 140. Distribution of nonreplicated (distributed) data (e.g., 185, 186 and 187) may be handled administratively. Distribution and replication of platform data is independent of configuration and installation of applications.

To support replicated and distributed table families, a table distribution cross reference catalog TSDX (described below with respect to Table. C) may be created to allow applications to locate the primary (e.g., 181p, 182p, 183p, 184p, etc.) (for insert, update, or delete), the local subscription copy (e.g., 181s, 182s, 183s, 184s, etc.) of the table family (for select), or a local instance of distributed data (for insert, update or delete). Application programming interface calls (APIs) are available in the Catalog API that provide access to the TSDX table to support primary/subscription lookups.

In order to support workflows that span servers, the workflow engine described previously with respect to FIGS. 1-40 may be modified. A Workflow API may be devised to use 2-phase commit and/or ARPC when a workflow event needs to be moved from one server to another. The application architecture and the applications may be designed to use the workflow API wherever possible.

A distributed system of workflow requires several new administrative capabilities, in one embodiment. In order for the client to connect to all servers in a distributed system, the server and network address must be in the [SQLServer] section of the client machine's "win.ini" file (the "win.ini" file, or its equivalent, is used by the operating environment (e.g., Windows) to store information -- in this case information associated with the use of an SQL server-- about the operating environment). The logon sequence may be modified in order to make sure this server list is up-to-date. Specifically, in order to perform maintenance or install new products on an individual server, that server preferably should be made unavailable to individual users of the present invention, while still being made available to the administrator of the system. A facility may readily be added to take a server or a database within a server off-line to users of the present invention.

The following table (Table B) lists the database tables that may be changed, and the new tables that may be created in order to support the distributed capabilities of the present invention. The left-most column of Table B identifies the name of the database table, the middle column specifies the family name of the table, and the right-most column of Table B describes the details of the change of creation.

**Table B**

| **Table** | **Family** | **Description** |
|---|---|---|
| WIJ_SEQNO | wijt | Brought back to support the new sequence number generation algorithm used in SmartStream 4.0. |
| User Master | wact | Move the drawerno, enabled, mapi_userid, mapi_pwrd, ToDo Folder Number columns to the User Configuration table. |
| User Configuration | wijt | A new table that contains user configuration information that must be modified by the SmartStream client when a user logs in. |
| Workgroup Configuration | wijt | A new table that contains the workgroup configuration information that is necessary to insert a workflow message for the workgroup. |
| WIJ_NEXT_SERVERNO | wact | This table contains a single row and column which indicates the number to be assigned to the next server materialized in the system. |
| Network Access | ctlg | A new table in the ctlg table family that provides the necessary network information so that clients can connect to all servers in the system. |
| | | This table is not needed if we change to use CT-Lib in revision 4.0. CT-Lib allows the server address file to be maintained on a shared file server. |
| Server Temp Passwords | wact | When a new server is instantiated accounts need to be created for every user in the system on that server. This table will contain a list of user/server/password combinations on the new server until each user logs on and the password is changed. |

The Distribution Catalog (TSDX) must be able to provide applications with the location of either the primary (maintainable) or subscription (read only) copy for a table family, depending on the intent of the application. If the application is performing a query, then it needs to know the location of the local subscription (or the closest subscription if there isn't a local one).

To support these requirements, the TSDX table structure may include two key columns. First, a flag column indicating whether an entry is a primary or subscription copy. Second, a "from_server" column, which identifies the location of the subscription copy of a specific table family for a client connected to the "from_server". The additions to the TSDX table are shown with sample data in each field in the following table (Table C):

**Table C**

| **from server** (key) | **family** (key) | **distribution entity 1** (key) | **distribution entity 2** (key) | **primary (0)/subscription (1)** | **Server** | **Database** | **Owner** |
|---|---|---|---|---|---|---|---|
| * | ctlg | * | * | 0 | FRM | DBSctlg | dbo |
| ATL | ctlg | * | * | 1 | ATL | DBSctlg | dbo |
| * | wact | * | * | 0 | FRM | DBSwact | dbo |
| ATL | wact | * | * | 1 | ATL | DBSwact | dbo |

In this example
- A client connected to server FRM performs queries of table family ctlg on the FRM server (row 1).
- A client connected to server ATL performs queries of table family ctlg on the ATL server (row 2).
- A client connected to any other server performs queries of table family ctlg on the FRM server (as FRM is the primary server) (row 1). When looking up an entry in the TSDX table (Table C) with the intent of query, we first attempt to find a "from server" entry for the current server. If the entry is not found, then the entry with an * is used.
- All clients perform **updates** of table family ctlg on the FRM server (row 1) because FRM is where the primary copy is located.

Where the ARPC database and all its objects are not installed on every server, an ARPC flag may be added to the TSDX table (Table C) to indicate that the table family uses the ARPC facility and therefore needs the ARPC objects installed on their server and database. This flag may be useful for knowing where the ARPC objects are for maintenance purposes. Of course, if the ARPC database and all its objects are installed on every server, then this flag is not necessary.

As discussed previously, a user's desktop information will be stored in one server/database location. Also, the user's workflow To Do messages must be transported to this location. The same is true for Workgroup To Do messages. A workgroup does not have a desktop, but its messages must be transported to one location for all members to share. The present invention may be implemented to support one or more members of a workgroup being on different servers than the workgroup To Do messages, but in this case, the remote user will be impacted by performance and network availability problems on the workgroup server.

To support this situation, a "wijt server" column may be included in the User Master table (described briefly above with respect to Table B, and below with respect to Table D) and a Workgroup Master table (Table E, below) defining which instance of the "wijt" table family contains the desktop and workflow information. The value of the "wijt server" column must match a value defined in the distribution entity 1 column for the "wijt" table family in the TSDX table. This link to TSDX will allow services to find the physical location of the data.

In a preferred embodiment, the User Master table may be defined (In part) as indicated below in Table D:

**Table D**

| **User Master Table** | | |
|---|---|---|
| **User ID** | **wijt server** | **...** |
| RSD | FRM | |
| JHE | FRM | |
| AFLAT | ATL | |

The User Master table of Table D corresponds to the User Master table shown as reference numeral 1110 in FIGS. 11 and 15, and illustrates two additional columns which may be added to that table.

As illustrated in Table D, the User Master table may include a column identifying a User ID, and a column identifying which server contains the "wijt" table family which includes an instance of the user's desktop and workflow information.

Likewise, a Workgroup Master Table may be defined (in part) as indicated below in Table E:

**Table E**

| **Workgroup Master Table** | | |
|---|---|---|
| **Workgroup ID** | **wijt server** | **...** |
| REGISTRATION | FRM | |
| HR | ATL | |
| FINANCIALS | ATL | |

This table is similar to the User Master table of Table D (and reference numeral 1110), except that the Workgroup ID for a group of users is identified in a first column, rather than a specific user ID.

Some columns in the User Master table (reference numeral 1110 in FIGS. 11 and 15, and further defined in Table D) in the current implementation need to be updated whenever the user logs onto the application of the present invention. Additionally some new user configuration data is required to support the new sequence number generation algorithm of the present invention (described further below). Since the user needs to be able to logon when the primary server is down, these columns need to be on a table which is distributed to the desktop server (110, 111 or 112, as appropriate). Thus a User Configuration Table, shown below as Table F, may be added to the wijt table family to hold these values. This table may contain the following columns:

**Table F**

| **Column** | **Purpose** |
|---|---|
| userid | The userid. This is the key. |
| drawerno | This is the user's home drawer number. This column is moved from user master. |
| enabled | Indicates whether the user account is enabled or disabled. This column may be moved from user master. |
| mapi_userid | The MAPI logon id of the user. This column is moved from user master. |
| rnapi_pwrd | The MAPI password of the user. This column is moved from user master. |
| ToDo Folder | This is the folder number where the user's ToDo's are stored. This |
| Number | must be stored in the user configuration table so that workflows can be processed properly when a user is moved from one server to another. |
| Next Sequence Number | The next available sequence number available for this user. |
| Last Sequence Number | The last sequence number that was allocated for this user. |
| Network Type | The network type for the user. This field is used to keep the [SQLServer] section of the user's win.ini file up to date. |

Likewise, a Workgroup Configuration table may be created on a distributed desktop server, similar to the User Configuration Table, except corresponding to workgroups, as opposed to individual users. The Workgroup Configuration table may contains the following columns, as illustrated below in Table G:

**Table G**

| **Column** | **Purpose** |
|---|---|
| Workgroup ID | The workgroup ID. This is the key. |
| ToDo Folder | This is the folder number where the workgroup's ToDo's are stored. |
| Number | This must be stored in the workgroup configuration table so that workflows can be processed properly when a workgroup is moved from one server to another. |

A Network Access table may also be created on a distributed desktop server 111, which defines the connection strings that clients need to have in their "win.ini" file to connect to every server in the system. There is a row in this table for each server/network type pair at the site. This table may contain the following columns, as illustrated below with respect to Table H:

**Table H**

| **Column** | **Description** |
|---|---|
| Server | The name of the server. |
| Network Type | The network type. The design allows this string to be an arbitrary string as long as each user is assigned a Network Type in User Configuration and it matches a Network Type in this table for each server the user needs to access. In practice, the expectation is that this column will match a Sybase network type, for example WDBNOVTC. |
| Connection String | For each server and network type this column contains the connection string, for example "WDBNOVTC,159.172.131.110,3300,urgent". |

For most sites which have standardized on a single client TCP/IP stack, this table will contain a single row for each server. Part of the client logon sequence may be to query this table to make sure its "win.ini" file has all the up-to-date server strings. Accordingly, the particular string added to "win.in" may have the following format:
〈Server〉=〈Network Type〉,〈Connection String〉
where the name of the server is substituted for 〈Server〉, the network type is substituted for 〈Network Type〉, and the appropriate connection string is substituted for 〈Connection String〉.

The present invention may be designed to allow network connection strings to be stored in a shared file on a file server rather than in the "win.ini" file. Thus, if the present invention is implemented to use such a scheme, the need for the Network Access Table can be eliminated.

When a new server is instantiated, accounts generally need to be created for every user in the system on that server. The following table (Table I) may be created to contain a list of user/server/password combinations on the new server until the user logs on and the password is changed. Table I may contain the following fields:

**Table I**

| **Column** | **Description** |
|---|---|
| Server | The name of the new server. |
| User ID | The user id of the user. |
| Password | The temporary password of the user. This field may be encrypted. It may be automatically generated by the system when a server is materialized. |

### I

The initial installation process to install the present invention on a single server can remain essentially unchanged from the general configuration described previously with respect to FIGS. 1-40. However, new installation scripts may be developed for server initialization, distributed desktop option installation, and subscriber materialization.

In a multi-server configuration, the application install process will first install the Application Platform Data 131 on the primary server 110. The replication system 150 will automatically propagate these additions to any subscription servers 111. The application database 131 can then be installed on any server in the system that has been initialized.

The install process required for the distributed aspect of the present invention also generally requires specific installation scripts. The installation of maintenance stored procedures (insert, delete, and update), loading of initial data, and platform migration may be part of the primary server installation, while the installation of table definitions and select stored procedures may be part of the primary installation and subscriber materialization.

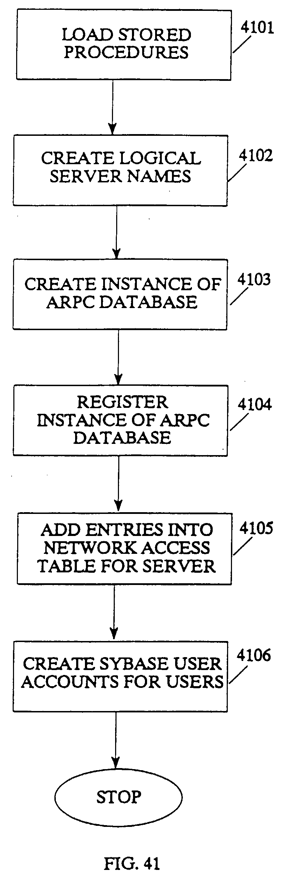

As depicted in FIG. 41, an installation script may be created for server initialization. With reference to FIG. 41, this script will do the following:
1) [step 4101] Load system stored procedures necessary for the present invention into the master database (e.g., on server 110, 111, etc.).
2) [step 4102] Create the logical server names required for the applications.
3) [step 4103] Create an instance of the ARPC database 150 on the server.
4) [step 4104] Register the instance of the ARPC database in TSDX (see Table C).
5) [step 4105] Add the entries into the Network Access table (see Table H) for the server so that clients will be able to get the network connection information for the server.
6) [step 4106] Create all the necessary Sybase user accounts on the server for existing users (make sure all passwords are synchronized system-wide, in a preferred embodiment).
Application databases will only be able to be installed on servers that have been initialized.

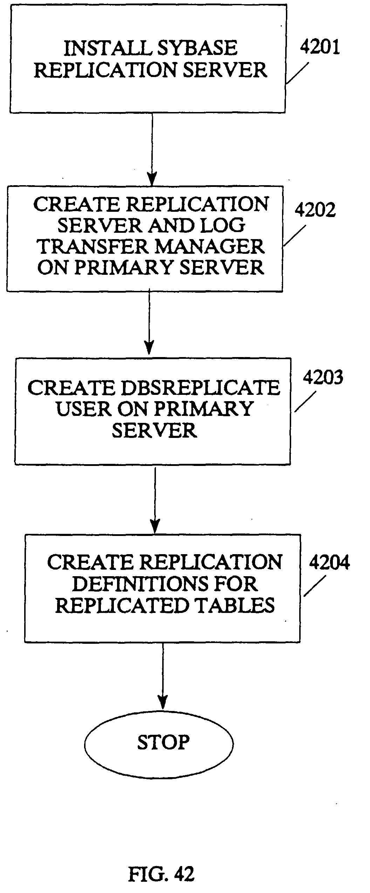

As illustrated in FIG. 42, an installation script may be created to install the distributed desktop option on the primary server 110. This will install the components on the primary server 110 that are required to support subscriber servers 111. With reference to FIG. 42, this script will do the following:
1) [step 4201] Install Sybase Replication Server.
2) [step 4202] Create a Replication Server 150 and a Log Transfer Manager 151 on the primary server 110.
3) [step 4203] Create the DBSReplicate user on the primary server 110, the Log Transfer Manager 151, and the primary server Replication Server 150.
4) [step 4204] Create the replication definitions for tables that are replicated.

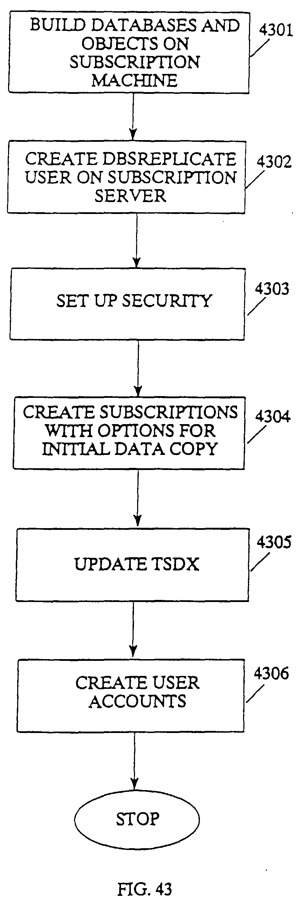

As illustrated in FIG. 43, an installation script may be implemented to create a subscriber server 111. A prerequisite to running this script will be running the initialization script for the server as described above and installing the distributed desktop option on the primary server 110. With reference to FIG. 43, this script will do the following:
1) [step 4301] Build the databases and their objects on the subscription machine 111 with no initial data and leaving out the stored procedures to update, delete, or insert data into replicated tables.
2) [step 4302] Create the DBSReplicate user 153 on the subscription SQL Server 111.
3) [step 4303] Set up security so that the DBSReplicate user 153 can insert, update, and delete data from the replicated table families.
4) [step 4304] Create the subscriptions with the proper options so that Replication Server 150 does the initial data copy.
5) [step 4305] Update TSDX (Table C) to have the entries for the new subscription copies of the replicated table families and the new instance of the wijt table family.
6) [step 4306] Create user accounts for all existing users on the server. Since materialization process does not know the correct password, it may generate a randomly selected password, encrypt it, and store it in the Server Temp Passwords table. The user logon process will change the password and delete this record the next time the user logs onto the present invention.
After a server is materialized existing users can be moved to the server, or new users can be assigned to the server.

Dematerialization is the process of removing a server (110, 111, 112, etc.) from an installation of the present invention. Note that a server may contain no users or workgroups and still function properly to support applications. Such a server is not considered dematerialized.

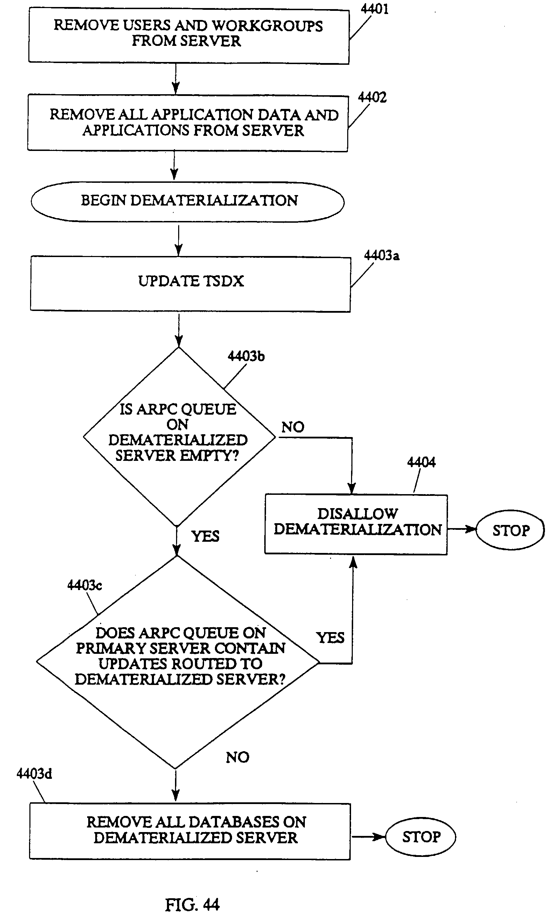

FIG. 44 depicts the steps which may be performed as part of the dematerialization process. With reference to FIG. 44, these steps are described below:
1. [step 4401] Remove all users and workgroups from the server, either by deleting them or moving them with the administration tool used to move them to the server originally.
2. [step 4402] Remove all application data and applications from the server. Providing tools and instructions on how to move application data to another server is generally the responsibility of the applications.
3. Begin dematerialization:
   a. (step 4403a) Update TSDX (see Table C) on the primary copy server 110 to indicate the dematerialized server is no longer available.
   b. (step 4403b) Check to see that the ARPC queue (e.g., 153) on the dematerialized server is empty. If not, disallow dematerialization (step 4404).
   c. (step 4403c) Check to see that the ARPC queue (e.g., 150) on the primary copy site 110 contains no updates routed to the dematerialized server. If not, disallow dematerialization (step 4404).
   d. (step 4403d) Remove all databases on the dematerialized server.

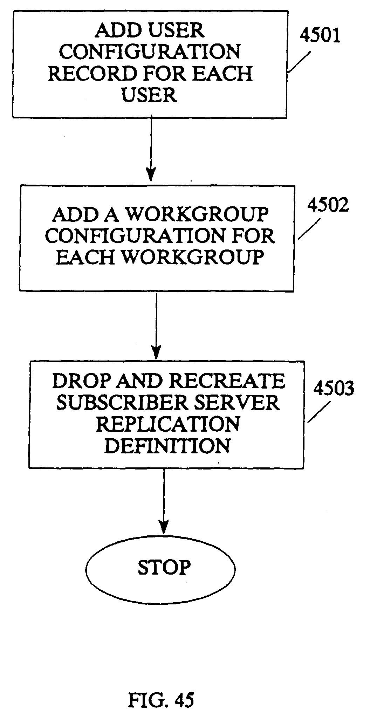

In the event that the present invention is first implemented without those changes in the tables defined previously with respect to Tables A through I, then this configuration may be migrated to include distributed functionality by performing the steps illustrated in FIG. 45. With reference to FIG. 45, these steps are described below:
1) [step 4501] Add a User Configuration record for each user, as described previously with respect to Table B. This record will contain the MAPI logon information, ToDo Folder number, and enabled flag from User Master. The sequence number fields will be set to 0. Additionally the network type for each user will have to be initialized.
2) [step 4502] Add a Workgroup Configuration record for each workgroup, as also described previously with respect to Table B.. This record will contain the ToDo Folder number for the workgroup.
3) [step 4503] In a preferred embodiment, such a migration process does not migrate subscriber servers 111. Each subscriber server replication definition may instead be dropped and recreated as part of the process.

The install process described above may use a Sybase Replication Server to initially copy the replicated table families from the primary server 110 to the subscription servers 111. It will also take care of propagating any changes that are made to the tables when new products are installed or when the primary copy is updated by a maintenance window. Occasionally the system administrator may believe that the primary and subscription copies of a table family are not in sync. Symptoms of out of sync tables include:
- Workflow events are disappearing.
- Application Architecture windows are taking errors indicating that initial data is not present or is not correct.
- Activities available to users assigned on one server are not available to users assigned to other servers.

Scripts may be provided to verify and fix subscription copies of the replicated tables. For example, these scripts may call a "rs_subcmp" utility for each table family to verify that the subscription copies of tables are in sync, and may fix any tables that are not in sync.

In one embodiment of the present invention, the ctlg, wact, mesm, and lang table families (described previously) are replicated. In order to support replicated table families, the Distribution Catalog API (application programming interface) may be created to support locating either the primary or the closest subscription copy of replicated table families. Thus, calls to this API will locate the subscription copy of the desired table families. If so desired, This API may be designed so that additional parameters or globals may be passed to locate the primary copy of the desired table families.

In a preferred embodiment, where it is not possible to extend the API, utilized for the embodiment of the present invention defined with respect to FIGS. 1-40, to support replicated table families, a new API call may be defined that includes the primary/subscription flag. In this case, the name of the new API may be different than the name of the API for the basic invention. Thus, the basic API may be used to locate the subscription copy of the desired table family, but preferably in future generations of the present invention, the new API can be used for this purpose.

Again, the present invention utilizes the concept of replicated table families. An installation has one primary copy of a replicated table family which can be read or modified and multiple subscription copies of the table family which are read-only. When an application needs to modify data in a replicated table family it must find the location of the primary copy of the table family. When an application needs to read data from a replicated table family it needs to find the location of the closest subscription copy of the table family. The existing table family catalog APIs may be modified according to the teachings of the present invention to support locating either the primary or the closest subscription copy of a replicated table family.

The table below (Table J) lists the new and modified Powerbuilder (the development tool available from Powersoft Corporation) functions and Stored Procedures (such as SQL stored procedures) forming the Distribution Catalog API that look up table and table family location information in the TSDX table. Listed for each is the name of the API, the name of the API it replaces, the type of the API, and a description of the API.

Where possible the existing API is extended to support replicated table families. In this case the name of the new API is the same as the name of the current API. Existing calls to the current API will locate the subscription copy of the desired table families. Additional parameters or globals can optionally be passed to these functions to locate the primary copy of the desired table families.

Where it is not possible to extend the existing API to support replicated table families, a new API call was defined that includes the primary/subscription flag. In this case, the name of the new API is different than the name of the current API to allow both APIs to be supported while the applications make the transition to the new API.

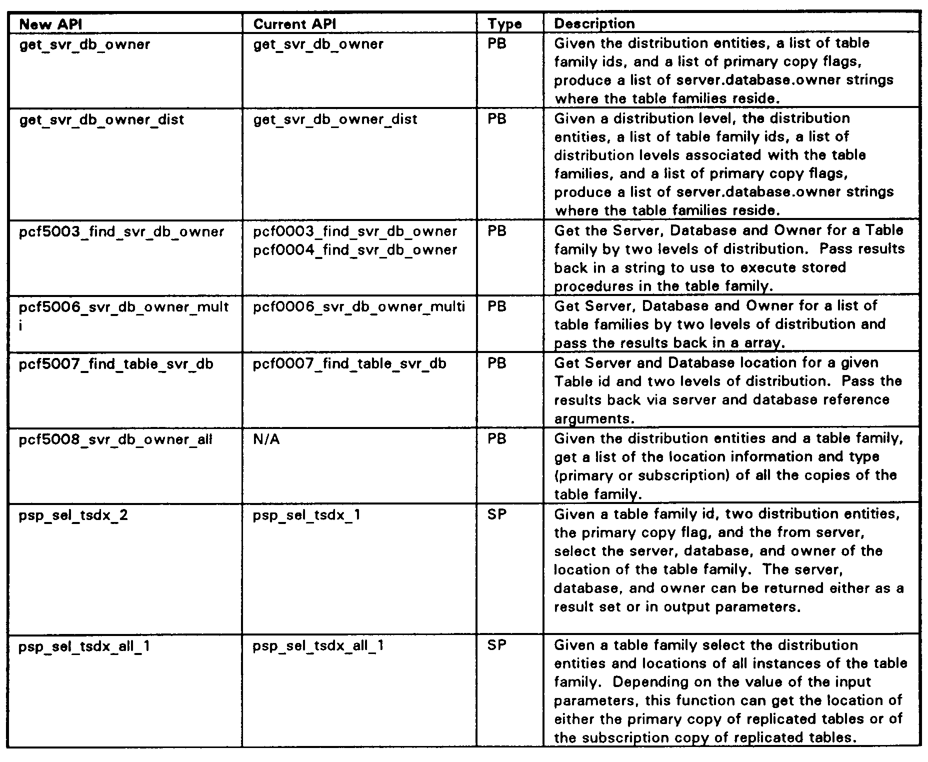

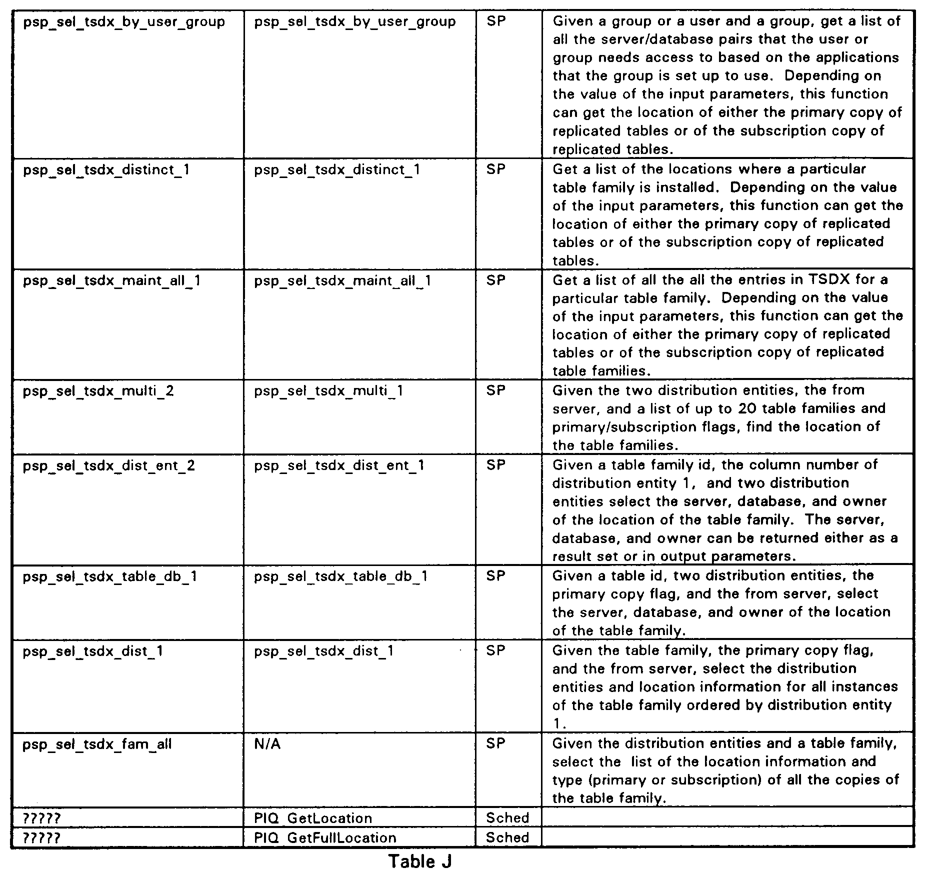

where "PB" in the type column indicates that the procedure may be implemented by using PowerBuilder code, and "SP" indicates that the procedure may be implemented as a stored procedure.

Each Distribution Catalog API described above with respect to Table J may include an "Existing Function" section describing existing APIs which are related to the new API, as well as an "Application Impact" section describing the impact that the new API has on the implementation of the present invention as defined previously with respect to FIGS. 1-40.

In order to implement the replicated aspects of the present invention, based upon the teachings of the present invention defined previously with respect to FIGS. 1-40, all platform activities and browser code should be examined to find places where the ctlg, wact, mesm, and lang table families are used. If access is read-only, the code needs to be verified to make sure it is using the subscription copy of the table family. If access is required for insert, update, or delete, then the code to locate the table family will need to be implemented to locate the primary copy of those table families, and perform the particular operations thereon.

With respect to the user logon process, instead of each user 120 connecting to a single server 110, users will connect to their desktop server, which may be one of a variety of servers as depicted in FIGS. 1A-1H. This may be accomplished efficiently by storing the connection information for each user 120 in the user's DBS.INI file (191 in FIG. 1H), instead of the DBSERVER.INI file (192 in FIG. 1H). This information may be validated at login time. The DBSERVER.INI file, which is shared by multiple users on a file server, may still be used for initial logins, fallback logins and other shared information. The platform logon procedure may readily incorporate these changes to make them transparent to applications built with the application architecture.

When implementing the invention described with respect to FIGS. 1-40, users 120 connect and login to the TSDX server and database defined in the DBSERVER.INI file, which is shared by many users on a file server. The contents of a typical DBSERVER.INI file is shown below: 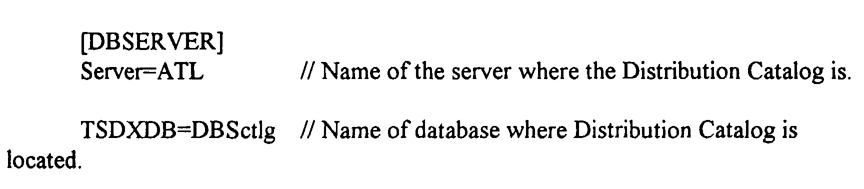 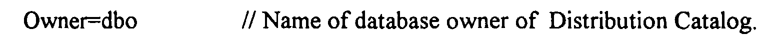 Since each user will instead be connected to their "wijt server", the login procedure will change as follows.

For a user's first login, the initial connection to the server and database defined in the DBSERVER.INI file may be used. This server and database will be the location of the primary Distribution Catalog. However, after the connection is made, the login process may look up the user's "wijt_location" (desktop server) in the User Master table (see Table D) (this table is replicated to all subscription servers). As shown in the following example, three new items may be stored in the user's DBS.INI file, which are:

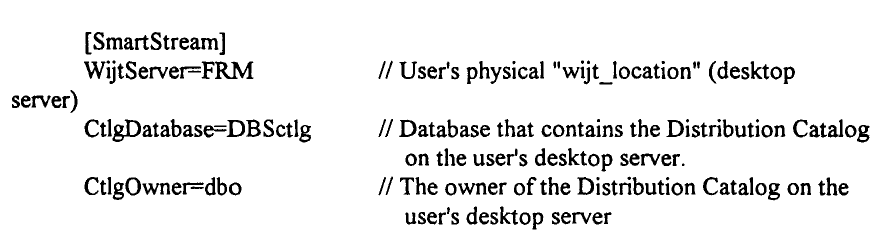

For a user's subsequent logins, the initial connection would be made to the WijtServer and CtlgDatabase defined in the DBS.INI. After logging in successfully, these "wijt" values would be validated against the User Master (see Table D) and TSDX tables (see Table C) in the catalog database of the wijt_location server in order to check if the:
- User's desktop has been moved to another server or database
- DBS.INI file has been "corrupted".

Additionally, the logon process may check to see if any records for this user exist in the Server Temp Passwords table (see Table B). If so, the process will logon to the indicated server, change the users password to the correct password, and use ARPC to delete the Server Temp Passwords table entry. This process is the first thing executed after sign-on so that if the user has been moved to the new server, the password will be correct by time the logon process tries to directly log onto the server.

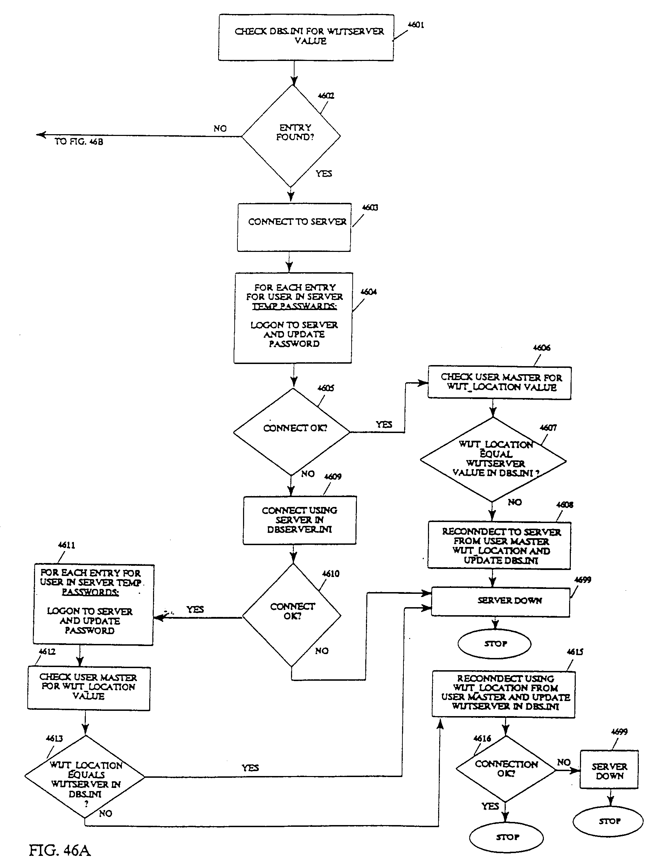

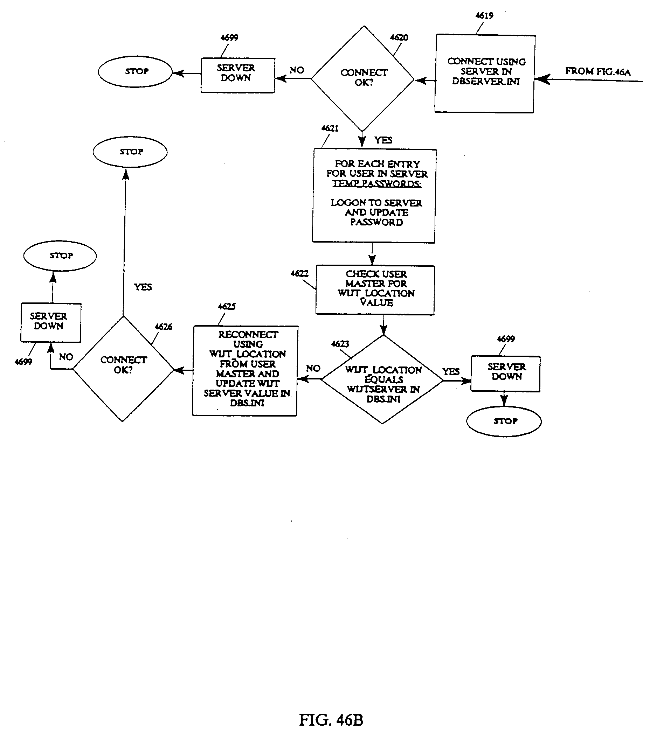

All of the above processing may be accomplished via the processing illustrated in FIG. 46, and described in the pseudo-code below:

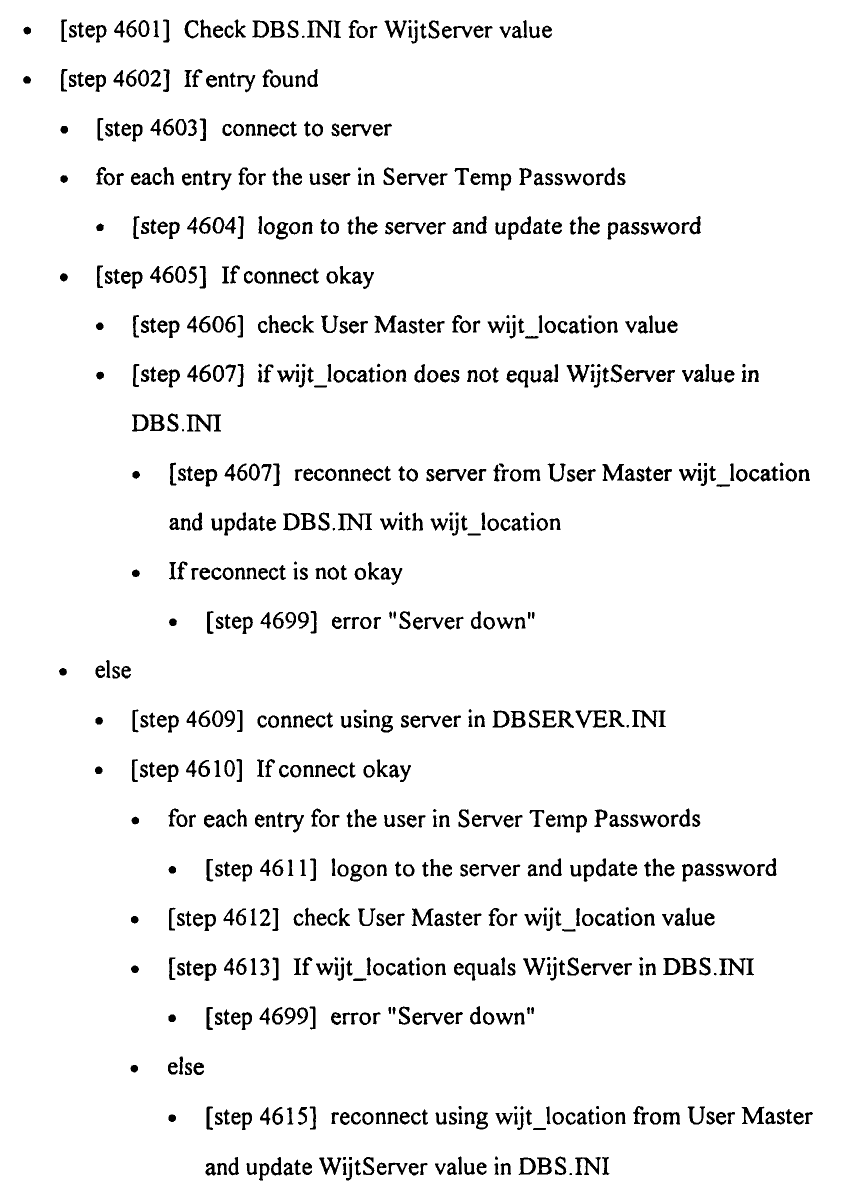

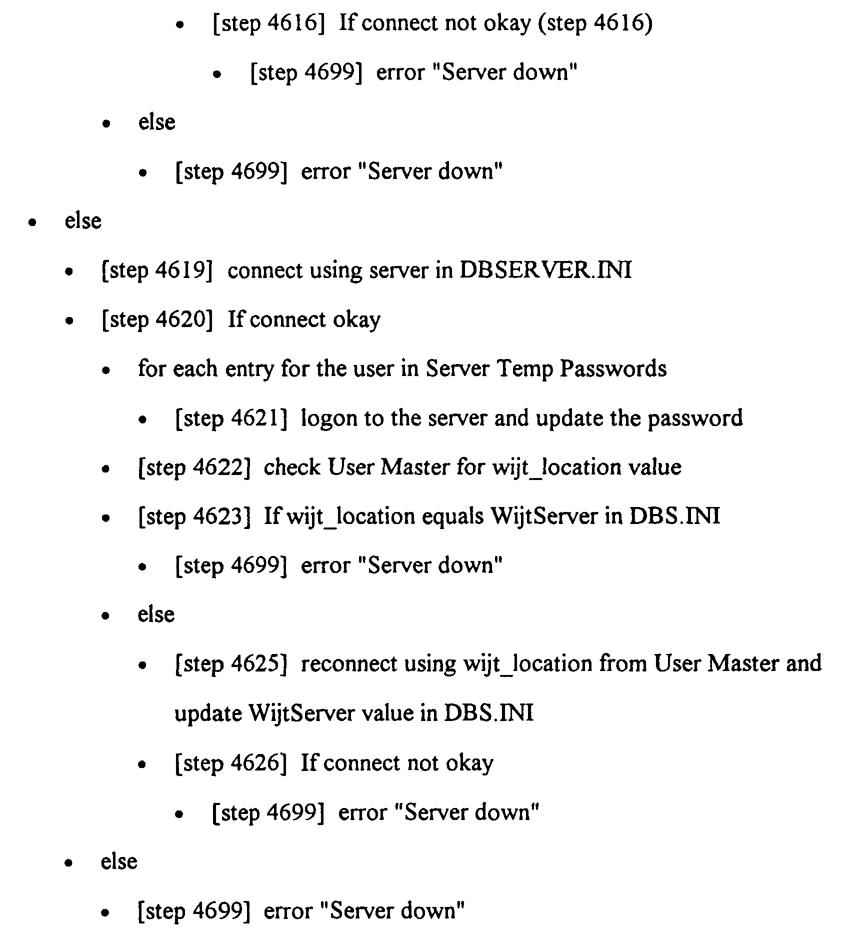

Once the user client 120 has connected to the correct server, it may do a select on the Network Access table (see Table H) to get a list of the servers and network address information for its network type. It may also make sure that each server has an entry in the local win.ini file.

In order to support movement of users 120 from one server to another, drawer, document and template numbers may be unique across all servers. To implement this requirement in the present invention, the following two tables (Tables K and L) may be created:

**Table K**

| **WIJ_SERVERS Table** | |
|---|---|
| **Server ID** | **Server No.** |
| FRM | 1 |
| ATL | 2 |

**Table L**

| **WIJ_SERVERNO Table** |
|---|
| **Server No.** |
| 2 |

In the preferred embodiment, the calculation of a new drawer, document or template number for the user 120 for reference purposes may be accomplished using a combination of server number + sequence number (from Tables K and L) within the server. Sequence numbers within a server are allocated sequentially and are never reused. Server numbers are allocated sequentially and never reused as well.

In order to prevent the table which contains the sequence number for the servers (referred to as the WIJ_SEQNO table, described previously with respect to Table B) from becoming a bottleneck, when a local user allocates a sequence number they are given a range of 10 numbers which are stored in the User Configuration table (Table F). Thus, until they use up those 10 sequence numbers they only access the User Configuration table to get a new number.

In addition to utilizing the sequentially allocated sequence numbers for the servers, the present invention may also utilize a there will also be the addition of the WIJ_NEXT_SERVERNO table (also described previously with respect to Table B) on the primary server 110. This table will contain the server number of the next server number to be materialized.

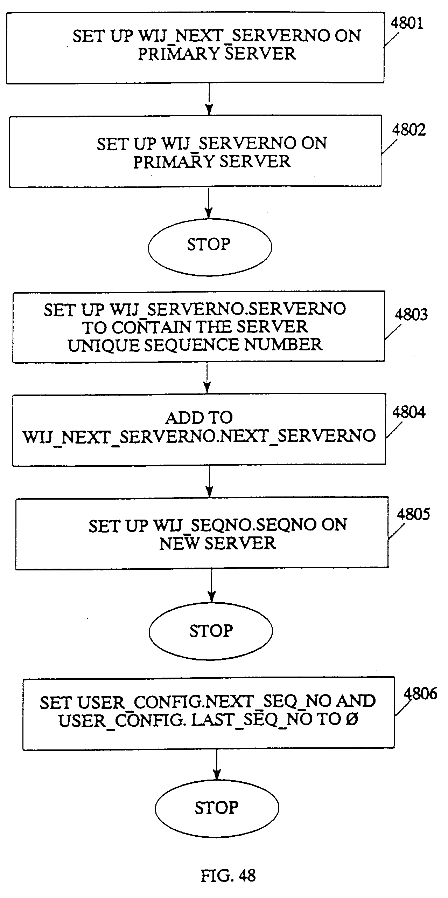

FIGS. 48 describes a series of process that may be used, in one embodiment:
At installation:
- [step 4801] Set up WIJ_NEXT_SERVERNO on primary to contain 30,000,000.
- [step 4802] Set up WIJ_SERVERNO on the primary to contain 20,000,000.
At server materialization:
- [step 4803] Set up WIJ_SERVERNO.SERVERNO to contain the server unique sequence number from WIJ_NEXT_SERVERNO. SERVERNO.
- [step 4804] Add 10,000,000 to WIJ_NEXT_SERVERNO.next_serverno.
- [step 4805] Set up WIJ_SEQNO.seqno on the new server to contain a single row that is 0.
When a user is created:
- [step 4806] Set user_config.next_seq_no and user_config.last_seq_no fields to 0

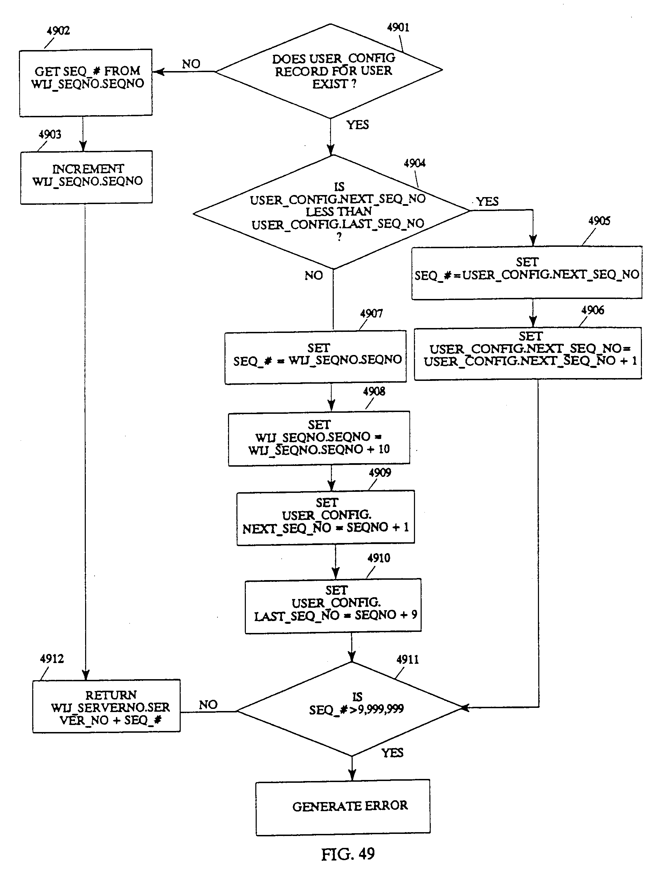

FIG. 49 depicts a process for generating a unique number for use with respect to the process of FIG. 48. With reference to FIG. 49, this process is described as pseudo-code below, where standard conditional, variable assignment and parameter returning logic is shown:

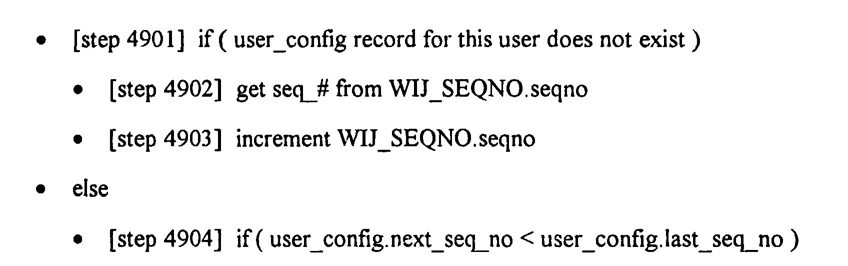

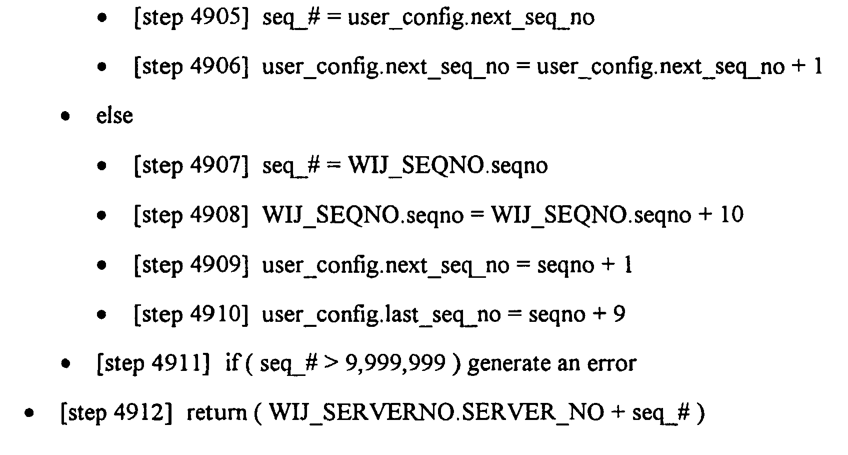

If the sequence number table (WIJ_SEQNO) ever overflows producing an error, then a new server number can be allocated for the server. If the number of servers (212 servers) supported by this algorithm is ever threatened to be overflown, then the sequence number column of the WIJ_SEQNO table can be changed from an integer to a decimal column. This change would, of course, require coding and table changes, but the migration to this approach would be trivial.

Implementing the process described above is straight-forward. The new WIJ_SEQNO and WIJ_NEXT_SERVERNO tables need to be added to the install process. The SEQNO#getnext_1 stored procedure may readily be changed to implement this new algorithm. The install process needs to set up WIJ_SERVERNO on the primary server to 20,000,000. Finally, the correct user_config records need to be built as part of migration for existing users.

The User Configuration table (see Table F) may contain the enabled flag, the mail logon information, the ToDo Folder number, the network type, and the sequence numbers allocated for a user 120. The platform login sequence may readily be modified to use the enabled flag and the mail logon information from this table rather than from the user master table. The workflow engine (described previously with respect to FIGS. 1-40) may readily be modified to use the ToDo folder number from the User Configuration Table rather than from the user master table. The sequence number generation algorithm may use the sequence numbers stored in the user configuration table to allocate sequence numbers as described previously.

The product request feature of the present invention may also be distributed. The Product Request windows may simply add the server name as parameter. In one embodiment, users 120 may only be able to view Product Request information for a particular server with a single query.

With respect to the implementation of workflow in a distributed environment, the separation of the WACT and WIJT tables into separate families and the distribution of some table families make it necessary to identify all situations in which modifications are being made to platform data to guarantee the updates are safe and correct. Some situations may require the introduction of ARPC or two-phase commits by the client. For example, the Trigger Workflow event may be modified to use the ARPC utility to send To Do messages to the user or workgroup's "wijt_location", and Reassign To Do will require a two-phased commit when the destination owner is on a different server than the source owner.

To reduce the number of places where updates need to be made to the workflow techniques described with respect to FIGS. 1-40, to support workflow distribution, wherever possible it is preferable to make use of a new Workflow API. The Workflow API will shield platform and application code from making platform table updates directly. The assumption underlying the design of the distributed workflow system of the present invention is that applications either do not make updates to tables, or they make updates in limited situations and can frequently rely on the Workflow API.

The following paragraphs discuss the workflow API functions that may potentially "touch" instances of the wijt table family on multiple servers. These functions will require two-phase commit, Asynchronous RPC, or both:
WFDelTasksByFromAct() and WFDelTasksByToAct() functions. These functions need to delete tasks from the consolidated message queue, i.e. the message queues on every machine in the system. In a distributed system this may typically only be done synchronously by two-phase commit on every server in the system. Since a synchronous delete would require the availability of all servers in the system, these functions may be supported using ARPC.

Certain applications (such as "Financial Stream", available from Dun & Bradstreet Software Services, Inc., the assignee of the present patent application) uses these functions at the start of some of their batch programs. These programs generate a a lot of events. When the program is run, any events that were generated by a previous run of the program are no longer needed. Thus, when the batch program starts they want to delete the events that were generated by the previous run of the program. All such events have the same from_activity, so they may use the psp_del_mque_by_from_act to do this delete.

In one embodiment of the present invention, message queue entries may have the key values from the calling activity separated from the data which is passed onto the next activity in the workflow. The functions which do asynchronous deletes will take these key values as input. Thus the batch programs noted above will have to generate a key (time of day perhaps) each time they run and save it in the database. The next time the program runs it can do the deletes based on the key value. As long as the key is properly generated and saved, this implementation will prevent race conditions between ARPCs and newly generated ToDo messages.
WFReassignTask() and WFReassignAllTasks(). These functions should attempt to reassign the tasks using 2-phase commit. If the Workflow API cannot login to the target server, the tasks should be reassigned via ARPC.

These functions will also have to be modified to handle duplicate keys. Since the unique timestamp is part of the key it is possible that an identical workflow event exists on the destination of a reassign. The stored procedures that handle re-assign on the destination will have to handle duplicate key errors and generate a new key when they occur.
WFTriggerEvent(). The WFTriggerEvent() function generates a workflow event. This event may be targeted to a user or workgroup on the local server or on the remote server. The stored procedure that supports this API function may be changed to generate an ARPC if the targeted user or workgroup is on the remote server.
WFRegister_ComDB(), WFRegister_DBLIB(), WFRegister_New(), WFRegister_PB(). In order to do any operations with 2-phase commit the workflow API will have to have the ability to logon to a new server. To log onto the new server, it will require the user's password. Thus the Workflow Register functions must be modified to take the user's password as an input parameter.

In order to administer the present invention, a User window may be included in the distributed implementation to include the server that the user is assigned to and the network type that the user uses. The server field may be entered when a new user is created. For existing users this field may be display only on this window. The separate Move User activity can be used to move a user from one server to another. The User Window will also have to be modified to add and update both the User Master and the User Configuration records for a user when a user is added or changed. This operation will require two-phase commit because the two records may be on different servers.

A Workgroup Window will require the same changes as the User Window. The server the workgroup is assigned to may be added to the window. Two-phase commit may be required to update the Workgroup Master and the Workgroup Configuration records when a workgroup is added or changed. A Move Workgroup window may be added to move a workgroup from one server to another.

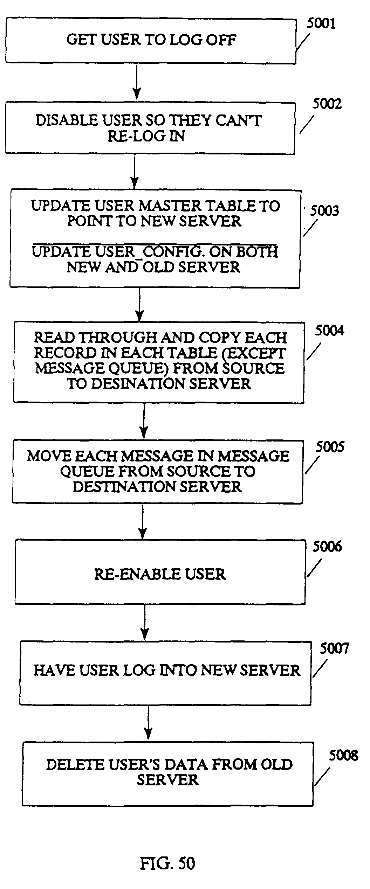

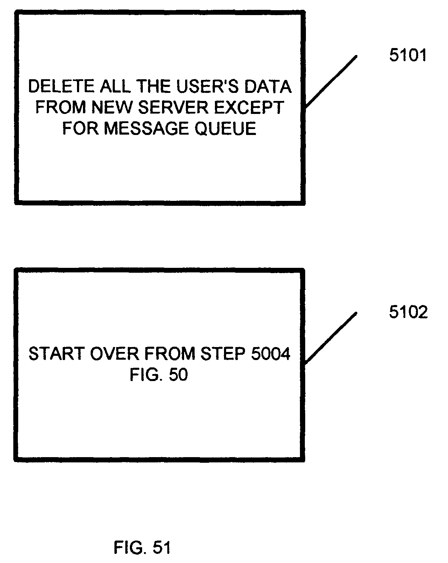

A new User Movement activity may be required to move a user from one server to another. This process includes moving the user's data to the new server, copying the User Configuration record from the old server to the new server, and changing the User Master record to point to the new server. The details of this process are described below with respect to FIG. 50:
1) [step 5001] Get the user 120 to log off.
2) [step 5002] Disable the user so they can't re-log on.
3) [step 5003] Update user_master (Table D) to point to the new server and update user_config (Table F) on both the new server and the old server. These updates should preferably be made in one transaction.
4) [step 5004] Read through each record in each table (except the message queue) on the source server and copy it to the destination server. In one embodiment, this process may be a specialized C routine that logs onto each server to move the data.
5) [step 5005] Move each message in the message queue from the source to the destination server. For this process to work properly it preferably needs to use two-phase commit to move each message.
6) [step 5006] Re-enable the user so they can log on to the new server.
7) [step 5007] Have the user log onto the new server and verify that everything was moved properly.
8) [step 5008] Delete the user's data from the old server.
If anything goes wrong during this process of FIG. 50, the following steps may be taken to recover from the error. Reference is made to FIG. 51 when describing these steps:
1) [step 5101] Delete all the user's data from the new server except for message queue messages.
2) [step 5102] Start over from step 4 in the above sequence (FIG. 50).

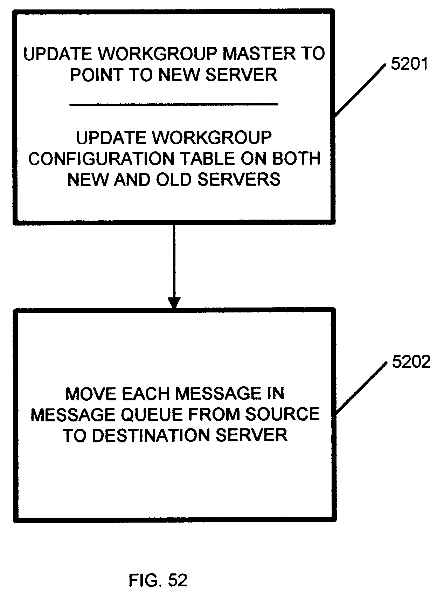

As with the move user process of FIG. 50, a move workgroup process may be implemented according to the following steps, described with respect to FIG. 52:
1) [step 5201] Update workgroup_master (Table E) to point to the new server and update the Workgroup Configuration table (Table G) on both the new server and the old server. These updates preferably should be made in one transaction.
2) [step 5202] Move each message in the message queue from the source to the destination server. For this process to work properly it needs to use two-phase commit to move each message.

In addition to the APIs which operate on the TSDX table (See Table C), the Table Distribution Maintenance activity may be modified to support maintenance of subscription copies of replicated tables.

To take a server or database off-line from users of the present invention, an activity may be created to remove execute permission on all stored procedures and to remove select permission on all tables in the database or server.

To accomplish this, for each table family in the system there may be two new stored procedures. The Disable Permissions stored procedure may operate to revoke execute permission on all stored procedures in the table family from public and revoke the select permission on all tables and views in the table family from public. Conversely, the Enable Permissions stored procedure may operate to grant execute permission on all stored procedures in the table family to public and grant select permission on all tables and views to public. These stored procedures may be named so that the stored procedure name can be derived from the table family id. In a preferred embodiment, only a system administrator with sufficient privileges will be given execute permission to these stored procedures.

A new activity may be added to disable a database or a server. This activity may operate to build a list of stored procedures that it needs to run from TSDX. It may then run the stored procedures to revoke the permissions on all table families in the database or server. Again, only a system administrator with sufficient privileges should be able to use this activity.

An activity may also be readily created to enable a database or a server. It may call the stored procedures necessary to enable permissions on the stored procedures and tables in the affected families.

In a further embodiment, all the database access routines may be changed to check for a "no permission" error. If they get this error, then they should return a message indicating that the database is not currently available. Additionally the desktop code that accesses the "wijt" table family may be changed to gracefully handle the error and log the user off of the system present invention when the user's "wijt" table family is disabled.

The install process should preferably be designed to install all the table families in a disabled state. Thus, any statements in table and stored procedure definition files that grant permissions need to be removed. This keeps users from trying to access a database while an installation is in progress. The last step in the install may optionally run the stored procedures to enable permissions on the tables and stored procedures.

ARPC may also have to be changed to handle a "no permission" error as a retryable error.

A new activity may need to be created to maintain the Network Access Table (Table H). This activity allows the administrator to view the current entries, create new entries, modify existing entries, or delete obsolete entries.

In order for applications to be compatible with the distributed aspect of the present invention, the guidelines listed below generally must be followed:
1) The wijt table family may be distributed in the present invention, based on the server that the user is assigned to. The following stored procedures in the wijt table family may potentially modify data on multiple servers, in one embodiment:
   psp_del_mque_by_from_act
   psp_del_mque_by_to_act_1
   psp_upd_mque_reassign_1
   psp_upd_mque_wrkgrp_reassign
   psp_trigger_ams_event_1
   Any programs or windows in an application that call these stored procedures directly preferably should be changed to call the corresponding Workflow API. In a preferred embodiment, the WFDelTasksByFromAct() and FDelTasksByToAct() functions (which replace the sp_del_mque_by_from_act and psp_del_mque_by_to_act_1 stored procedures used in the embodiment of the present invention described with respect to FIGS. 1-40) may be used.
2) As noted above the wijt table family may be distributed in the distributed implementation of the present invention. In this case, a AM_Svr_Db_Owner_g Application Architecture global may contain the location of the user's instance of the wijt table family. Any program or window that uses stored procedures in the wijt table family that does not use the AM_Svr_Db_Owner_g global to find the location of the correct instance of wijt should preferably be changed to use the corresponding Workflow API function. This includes programs or windows that call the following stored procedures:
   psp_del_mque
   psp_del_mque_agt
   psp_del_mque_by_own_fr_act
   psp_del_mque_by_own_fr_col_1
   psp_del_mque_by_own_gr_col_1
   psp_upd_mque_msg_anystatus
   psp_upd_mque_msg_status
   psp_upd_mque_msg_status3
   psp_sel_mque_date_msg
   psp_sel_mque_msginfo
   psp_sel_mque_next_msg_1
   psp_sel_mque_next_step_1
   psp_sel_mque_prior_msg_1
   psp_sel_mque_step_msg_1
   psp_sel_mque_step_msg_key
3) The wact, lang, mesm, and ctlg table families may be replicated according to the teachings of the present invention. The default behavior of the existing Catalog APIs may be to locate the closest subscription copy of these table families. Thus, programs or windows that call stored procedures that modify data in the wact, lang, mesm, or ctlg table families may have to be changed to use the new versions of the Catalog APIs to find the primary copy of these table families. This includes callers of the following stored procedures:
   psp_del_ibpd_udak
   psp_del_obpd_udak
   psp_ins_ibpd_udak
   psp_ins_obpd_udak
   psp_upd_colm_udak
   psp_upd_colv_udak
   psp_upd_ibph_udak
   psp_upd_ibpl_udak
4) The application installation process may be implemented according to the teachings of the present invention to support installation of basic platform services on all the servers in the system, replication of the replicated table families, and distribution of the workflow events and desktop data.
5) Each application table family may have to provide stored procedures to enable and disable permissions on tables, views, and stored procedures in the table family. The statements to grant permissions to objects may have to be removed from the file that creates the object.

In general, the applications must make the changes listed below in order to become distribution-enabled. An application that is distribution-enabled operates properly with the distributed implementation of the present invention and uses local copies of replicated table families rather than relying exclusively on the primary copy. The general change requirements for applications are listed below:
1) Application programs that directly read dbserver.ini (a local initialization file) to find the location of the catalog (TSDX) server (for example Query & Reporter) will have to be changed to use the platform logon algorithm to find the local server to log on to. Sample application programs in this class from the assignee of the present invention (Dun & Bradstreet Software Services, Inc.) include: the User-Defined Accounting Key (UDAK) customization application, Query & Reporter, and Management Reporter.
2) Application programs that obtain the name of the TSDX server from somewhere other than the dbserver.ini file will have to change to make sure that they are locating the subscription copy of the ctlg database on the server "closest" to their application data. Application programs, from the assignee of the present invention, in this class include the Job Scheduler, the Scheduler API, and InterQ.
3) Application programs that call the psp_del_mque_by_from_act or psp_del_mque_by_to_act_1 stored procedures (described previously with respect to FIGS. 1-40) need to be redesigned to not use these functions. Applicable workarounds may be designed in this case.
4) Application programs or windows that call Distribution Catalog APIs that change in the distributed implementation of the present invention need to be changed to call the new APIs.

Finally, in various other embodiments of the present inventions, certain simplifications may be made, For example, if the Sybase CT-Lib library for enabling clients to communicate with servers is utilized instead of DBLIB in the present invention, the need for the Network Access Table and the associated maintenance GUI can be eliminated.

### Conditional Work Flow (Background)

In a further embodiment of the present invention, various enhancements may be made in order to to improve upon the functionality of the work flow environment. Included among these enhancements is the ability to execute the work flow of the present invention based upon certain 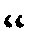 conditions 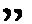 . These enhancements, including conditional workflow, are briefly described below, and are described in further detail later in the specification. These enhancements essentially add functionality to the SmartStream Version 3.0 product available from Dun & Bradstreet Software Services, Inc., Atlanta, Georgia, the assignee of the present patent application.

The workflow engine described previously is implemented in the 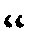 psp_trigger_ams_event_1 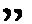 stored procedure (see the appendices of co-pending U.S. Patent Application No. 08/213,022 and U.S. Patent Application Serial No. 08/475,575). This procedure takes parameters passed by the call, the column ids from event_master, the next activity from the next_step table, and user assignment parameters from the next_step_options table to generate a ToDo that is put on the message queue.
The **psp_trigger_ams_event_1** stored procedure takes the following parameters:
- **@p_event_id** - The event id of the event being generated. Every event in the system has a unique event id. In general an event is defined for every insert, delete, or update to a window in the system, although additional events can be defined.
- **@p_next_step_ent_val** - Single 30 character parameter used for conditional generation of the owner of the ToDo that is generated.
- **@p_from_user_arg** - The user id of the user generating the event.
- **@p_from_act_arg** - The activity generating the event. This parameter is just passed untouched to the message queue. It is not used by the algorithm that generates the next event.
- **@p_assign_to_arg** - This value tells how to assign the event if the next_step_options.assign_to is "D". It can have the following values:
   - "D" - ignore to_owner and take next owner from next_step_options
   - "U" - to_owner is a user
   - "G" - to_owner is a group
- **@p_to_owner** - The user/workgroup to assign to if @p_assign_to_arg is not "D" and if next_step_options.assign_to is 'D'.
- **@p_msg_priority** - The message priority. This parameter is just passed untouched to the message queue. It is not used by the algorithm that generates the next event.
- **@p_col_val_1** to **@p_col_val_16** - Column values used to initialize the next event. These parameters are just passed untouched to the message queue. They are not used by the algorithm that generates the next event.
The **event_master** table contains the following columns relative to work flow generation:
- **event_id** - The key to the table.
- **enabled** - A flag indicating whether the event is enabled or not. If the event is not enabled, no ToDos are generated when the event occurs.
- **col_id_1** to **col_id_32** - The column master column ids of the column values generated by the event.
The **next_step** table contains the following columns relative to work flow generation:
- **msg_id** - A unique message id. Every workflow event description has a unique message id.
- **event_id** - The event id. The same event_id may have multiple next_step's defined in this table with different msg_id's.
- **enabled** - A flag that indicates if the message is enabled or not. If the message is not enabled no ToDo for this msg_d is generated when the event occurs.
- **activity_id** - The activity_id of the next activity in the workflow to be generated in response to the event for this next_step.
- **no_dup_msg** - A flag which indicates whether duplicate messages are allowed. If this flag is set then a ToDo will not be generated if a ToDo already exists with the same owner, activity_id, msg_id, and column values.
The **next_step**_**options** table contains the following columns relative to workflow generation:
- **msg_id** - The msg_id of the next_step_options. The msg_id and the next_step_ent_val form the key to this table.
- **next_step_ent_val** - The value that is matched to the @p_next_step_ent_val parameter passed into the stored procedure to determine the options for this event. If no row exists where @p_next_step_ent_val equals this column, then row where next_step_ent_val is "*" is used if it exists.
- **enabled** - A flag that indicates if the message is enabled or not. If the message is not enabled no ToDo for this msg_id is generated when the event occurs.
- **user_id** - The user_id that the message is assigned to if assign_ to is "U".
- **msg_group_id** - The Workgroup ID of the workgroup the message is assigned to if assign_to is "G" or if assign_to is "D" and the @p_assign_to_arg is "D".
- **track_hist** - If set then the ToDo is copied to the message_queue_hist_1 table when the ToDo is deleted.
- **assign_to** - Parameter which indicates who the event should be assigned to as follows:
   - "S" - Assign to the user who generated the event.
   - "D" - Assign to the user or workgroup specified by the @p_assign_to_arg and @p_to_owner_arg. If @p_to_owner_arg is "D", assign to the group specified by the msg_group_id column.
   - "U" - Assign to the user specified by the user_id column.
   - "G" - Assign to the group specified by the msg_group_id column.

In summary, therefore, the work flow of the previously described embodiment of the present invention operates as follows:
- An application generates an event (220 in FIG. 2).
- A single event can trigger multiple NextSteps (230), each of which can trigger a specific activity (250). The activity is fixed by the workflow definition in the next_step table..
- For each NextStep 230) the next owner of the message is determined by the NextStepOptions. The NextStepOptions allow conditional generation of the owner of the ToDo based on equality of a column in next_step_options table and a single parameter passed as part of the event.

The previously described work flow engine is basically stateless. When a user 120 generates an event, the work flow engine behaves the same in response to the event independent of how the user 120 initiated the activity and independent of any workflow events that may have occurred in prior steps.

### Conditional Workflow

In order to further describe how the conditional work flow feature of the present invention may be implemented, the following terms and concepts are defined below.

Conditional Logic Types. Conditional logic can be used to determine the next step in the work flow process (e.g., elements 200 and 230 of FIG. 2), to determine to whom the next step should be assigned (e.g., element 240 of FIG. 2), or to select which approvers on an approval list should be used. In one embodiment, the following operations may be used as conditional logic:
- Comparing an integer or numeric column to a constant. The equal, not equal, less than, less than or equal to, greater than, or greater than or equal to operations may be supported.
- Comparing a string column to a constant. The equal to, starts with, and contains contains operations may be supported.
- Boolean logic which connects several comparative expressions. These operators may include AND, OR, and NOT.
The present workflow engine may allow the workflow designer to choose any field that the window passes to the trigger event function (element 220 of FIG. 2) within conditional logic. An enhanced trigger event function may be implemented to allow applications to pass more than 16 values.

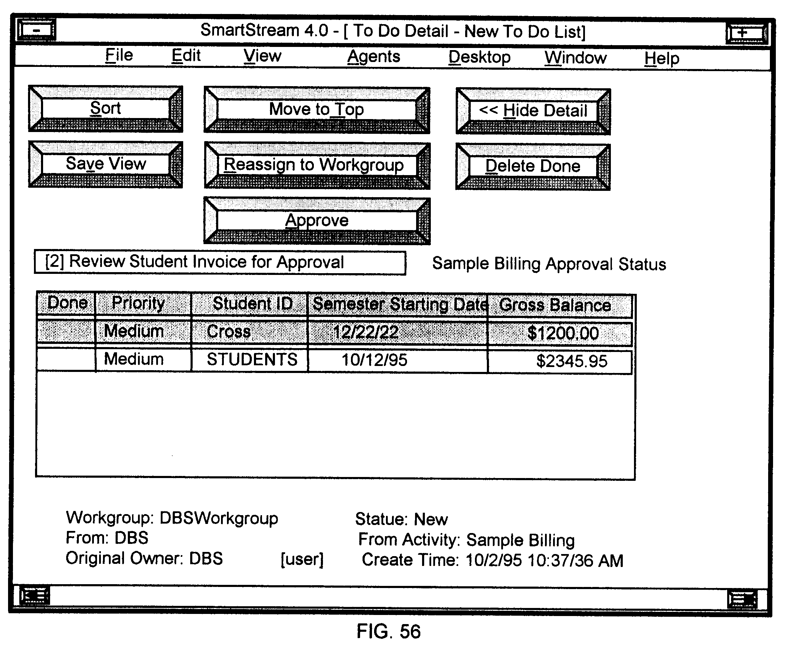

Approval Lists. Adding 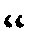 approval lists 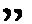 to the present invention adds the following functionality:
- Provide approve and reject as activity actions. This allows the approver to see the object that they are approving. Otherwise, approvers in a work flow use an approval window and have to 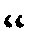 zoom 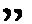 to the actual object.
- Provide a consistent handling of approvals. This ensures that all the approval windows have the same look and feel. It also decreases the development cost of adding approvals to new windows and the maintenance cost of the approval maintenance windows.
- Automatic support for new Approval features as they are added to the platform. These include substitutes, roles, and conditional generation.
- Allow users to approve items directly from the Task Details list (element 5601 of FIG. 56) without actually entering the application activity.

Structures Integration. The present invention may be implemented to support three 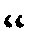 structures 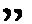 based functions that can be used within workflow definitions. 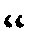 Structures 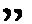 corresponds to heirarchical structured data in a database, such as that built into the SmartStream family of products available from Dun & Bradstreet Software Services, Inc., and is described in further detail in the co-pending U.S. Patent Application filed on May 26, 1995. and entitled 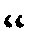 Method and Apparatus for Protecting the Integrity of Structured Data 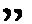 (serial number not yet assigned), which is incorporated herein by reference.

The structures-based functions that may be supported by the present invention are: IsIn(), UpOne(), and UpToLayer(), as described in further detail below.

Three Structures functions are available for work flow assignments. Point, Immediate Ancestor and Ancestor at Layer. To support these functions the Structures product (available from Dun & Bradstreet Software Services, Inc.) is enhanced to allow a work flow assignee to be associated with a point in the databse structure.

The Point function takes as input a structure group, a structure name and a column that is used as a point name. It determines the assignee by getting the work flow assignee at the point given.

The Immediate Ancestor function takes as input a structure group, a structure name and a column that is used as a point name. It determines the assignee by getting the work flow assignee at the point which is the immediate ancestor of the point specified.

The Ancestor at Layer function takes as input a structure group, a structure name, a layer name and a column that is used as a point name. It determines the assignee by getting the work flow assignee at the point which is the first ancestor of the point specified at the indicated layer.

Next Step Processing. In the implementation of the present invention described previously, next step processing requires that the initial values to the next step be provided in the same order as the keys passed to the pamp004_next_step function. In a further embodiment, the next step processing may be changed so the keys from the activity can be provided in any order relative to the keys in the To Do List.

Step Completion. In the embodiment of the present invention described previously, a step is completed when the user enters an activity from the ToDo List and subsequently performs a save or a delete within the activity. In a further embodiment described below, the step will be completed only if the user subsequently performs a save or a delete with the same keys as were passed in with the ToDo.

Conditional Next Step Logic. The workflow engine described previously supports no conditional generation of the next step activity (230 in FIG. 2). In a further embodiment, the workflow engine may allow simple conditional logic based on any column value passed to the trigger event function. Each next step definition (230) will define the conditions for which it is applicable.

Conditional Owner Logic. In the embodiment of the present invention described previously, the workflow engine supports limited conditional generation of the owner based on the next step entity. In a further embodiment of the present invention, the workflow engine will allow conditional assignment based on all the comparison operators using all the column values as data.

Data Values. With the workflow design described previously, the system allows for 16 data values to be passed on to the next step in the workflow. In a further embodiment, the trigger event function will accept up to 32 column values. These values can be used for conditional logic or can be passed on to the next step. Within event_master (see FIG. 14D), a flag may be added to indicate whether or not a column value is a key column.

The design standards may also be changed to recommend that as many values as is possible be included in each call to trigger event. For windows where more that 32 columns are available, the developer preferrably should pick the columns that are most likely to be passed onto other windows or used in workflow conditions for inclusion in the trigger event parameters. Any column value may be passed to the trigger event function even if the value is not a key or does not actually appear on the window.

Existing application windows may continue to work unchanged; however, only those values that are currently explicitly passed may be available for use in workflow conditions. Application developers are encouraged to increase the number of column values provided to the trigger event function for existing windows.

Window Initial Values. The present invention may be implemented to require that application windows that participate in workflows provide a dictionary of what columns each activity can accept as input. The workflow engine may use this dictionary to take care of re-ordering column values so that activities can be connected and parameter ordering is not important. The dictionary may also be used by the workflow workbench user interface to make it easier for the designer to connect the data between activities.

The workflow engine may allow values to be remapped, so that a field with one column id from the source window can be mapped to a different field with a different column id on the destination window.

In order to always save the key values for tracking workflows, the present invention may be designed to require that the columns in event master be marked as key values or non-key values. The key values for an event are the values that uniquely specify the instance of an event. In general these values will be the same as the key values for the window; however, there is no restriction that this must be the case.

Administrative Interface. The present invention may be designed to provide a completely new graphical user interface for defining and describing workflows. This user interface may replace the previous workflow workbench with a new user interface that is more intuitive and which supports specification of conditional next steps, conditional assignments, and approvals.

Mail Integration. The present invention may be designed to support mail integration by creating an "attachment". Mail would be used as the delivery mechanism for To Do messages, but would use the workflow syetem of the present invention as the "forms package".

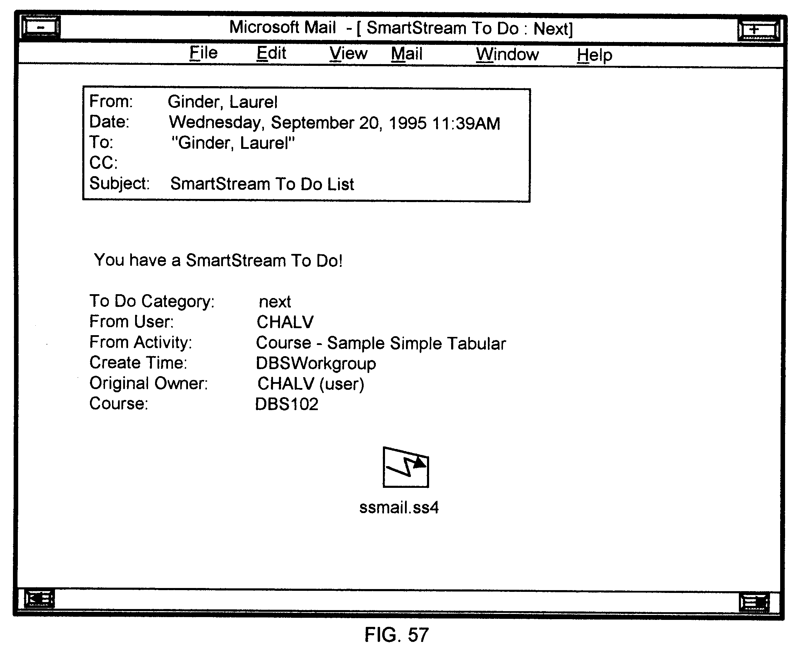

When a user of the present invention receives an E-mail To Do and clicks on the attachment portion, the system would check to see if the present invention was operational. If so, the system would simply send a DDE (Dynamic Data Exchange) message to start the appropriate activity window to process the ToDo. If the present invention was not active, it would be started which would bring up the login box followed by the activity window to process the To Do. When the user terminated the activity window, the present invention would remain operational. FIG. 57 shows a mail-enabled To Do in a user 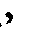 s inbox.

Roles. The present invention may be implemented to provide the ability to define 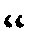 roles 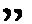 within a company. The workflow designer could then define workflow owners in terms of roles. The workflow engine resolves roles at runtime to determine the real user or group. This functionality allows for easier re-programming when a user leaves the company or changes jobs.

Substitutes. The present invention may be implemented to allow the user or administrator to define a substitute for a user. When a user has a substitute defined for them, all the user's To Do's are sent to the substitute rather than to the specified user. A substitute can only be defined for a user -- it cannot be defined for a workgroup or a role.

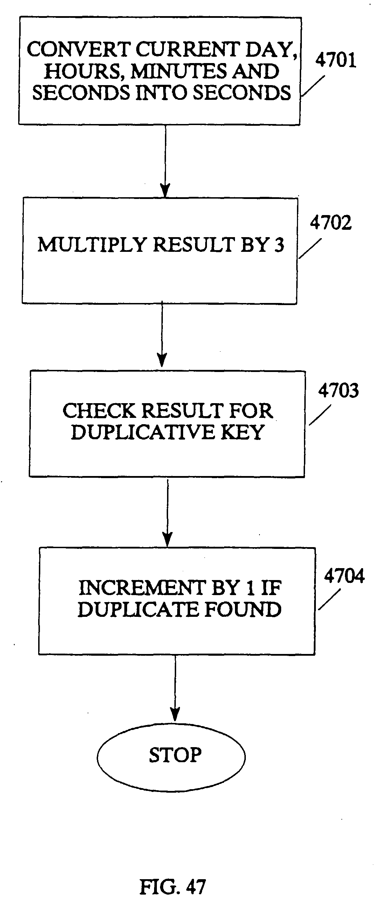

FIG. 1I depicts a functional block diagram of the present invention adapted to implement the features described above. The basic structure of the workflow design that may be utilized with the system of FIG. 1I is similar to that described with respect to FIGS. 1A, 1E, 1F, 1H and 2-52. However, for clarity, new figure reference numerals are used in FIG. 1I -- of course, it will be readily understood that certain components in FIG. 1I generally correspond to like components in FIGS. 1A, 1E, 1F, 1H and 2-52.

Referring to FIG. 1I, the workflow administrator 10001 may use a 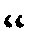 Workflow Workbench 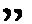 10005 to define the workflow for the present invention. The Workflow Workbench uses the Workflow Meta Data 10010 (activity_master, event_master, etc.) to show what options are available. The workflow definitions created by the workbench 10005 are stored in the database in the Workflow Definition tables 10015 (next_step, next_step_options, etc.).

When a user 10002 performs an action in an activity window 10020 that modifies application data, the application activity uses Application Architecture functions 10025 to call the Workflow API 10030 to trigger an Event 10035 while passing in the relevant data values 10040. The Workflow API 10030 calls the Workflow Engine 10045 which uses the event 10035, the data 10040, the Workflow Definitions 10015, and the Workflow Meta Data 10010 to generate a next step. The next step and the data associated with it are stored on the Workflow Message Queue 10050. The user may see next steps as Tasks on a To Do list 10055. When a user processes a To Do message in the To Do list 10055, the message is deleted or marked as complete on the Message Queue 10050. Additionally if the system is set up to track history a copy of the message is moved to the Workflow Tracking tables 10060 (message queue history).

Applications 10065 not designed for use with the present invention can interface with the workflow system via the Workflow API 10030. The Workflow API 10030 allows such applications 10065 to trigger events 10035, read the To Do's 10055 that are on the message queue 10050, and change the status of To Do's on the message queues 10050.

The Workflow Workbench 10005 may be designed to provide an improved user interface and to support conditional logic and structures integration. The new features being provided may require additional Workflow Meta Data tables 10010 and changes to the existing Workflow Meta Data tables 10010. The Workflow Definitions tables 10015 may also be enhanced to support conditional logic and structures integration.

The Workflow API 10030 may be modified to support new workflow functions and to track changes in the Workflow Definition 10015 and Message Queue tables 10050. The application architecture functions 10025 which interface with the Workflow API 10030 may be designed to be backwards compatible; however, in this case it is advantageous that applications be implemented to provide more data values to these functions.

The Workflow Engine 10045 may be enhanced to resolve conditional logic (described elsewhere) including heirarchical database Structures integration and to deal with the table structures in the Workflow Meta Data 10010, Workflow Definition 10015, and Message Queue tables 10050. The Workflow Engine 10045 may also include logic to resolve roles and substitutes, defined previously.

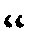 Approvals 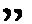 may be built into the workflow. Approvals build on the application specific approval processes that are already in place, and require the application developer to do the following:
1) Add an approval table in the application database. The key of approval table is the application table key, a sequence number, and an owner. The entries with the key matching the key of the application table row would be the approval list for that row.
2) The platform provides approval lists. When an approval is the next step the approval list to be used is passed to the approval window as data. Conditional logic can be supported in the determining of which approval list is to be used. Dynamic generation of the approval list will allow the name of the approval list to be used to be a field on the application window.
3) The platform will also provide a generalized window for tracking approvals. This window will be the management interface into the application provided approval table. The approval tracking window may either be an ancestor window that the applications use to create their own descendant tracking window with the proper keys or may dynamically modifiy itself to use the proper keys and data.

The following table (Table M) illustrates those database tables that may be changed from those tables previously described in order to implement the conditional workflow features of the present invention. The first column describes the table name, the second column describes the family of the table, and the third column summarizes the change to the table.

**Table M**

| **Table** | **Family** | **Change** |
|---|---|---|
| next_step | wact | Addition of forward allowed flag. |
| next_step_options | wact | Modified to support conditional expressions attached to a next step definition. Addition of fields to support structures interface. |
| message_queue_1 | wijt | Normalized with column values in the message_queue_values table. Key changed to be server number and sequence number. The old keys become non-key columns. Addition of columns to support enhanced tracking. |
| message_queue_hist_1 | wijt | Normalized with column values in the message_queue_hist_values table. Key changed to be server number and sequence number. The old keys become non-key columns. Addition of columns to support enhanced tracking. |
| event_master | wact | Normalized with column ids in the event_columns table. |

The following database tables shown in Table N may be added to support conditional workflow. In this case, the third column describes the purpose of the table.

**Table N**

| **Table** | **Family** | **Purpose** |
|---|---|---|
| next_step_conditions | wact | Contains the conditional expression associated with a next step. |
| next_step_parameters | wact | Contains the source activity to destination activity mapping of columns and indicates which columns are displayed. |
| next_step_options_conditions | wact | Contains the conditional expression associated with next step options. |
| message_queue_values | wijt | Contains the column value parameters for a message on the message queue. |
| message_queue_hist_values | wijt | Contains the column value parameters for a message saved on the message queue history table. |
| activity_input_values | wact | Contains a list of the column ids that an activity can take as input. |
| roles | wact | Contains a list of roles and owner names. |
| role_conditions | wact | Contains the conditions for a role. |
| event_columns | wact | Contains the column identifiers for an event. |
| substitutes | wact | Contains a list of temporary substitutes. |
| approval_list_header | wact | Contains the name and type of an approval list. |
| approval_list_detail | wact | Contains the list of approvers on an approval list. |

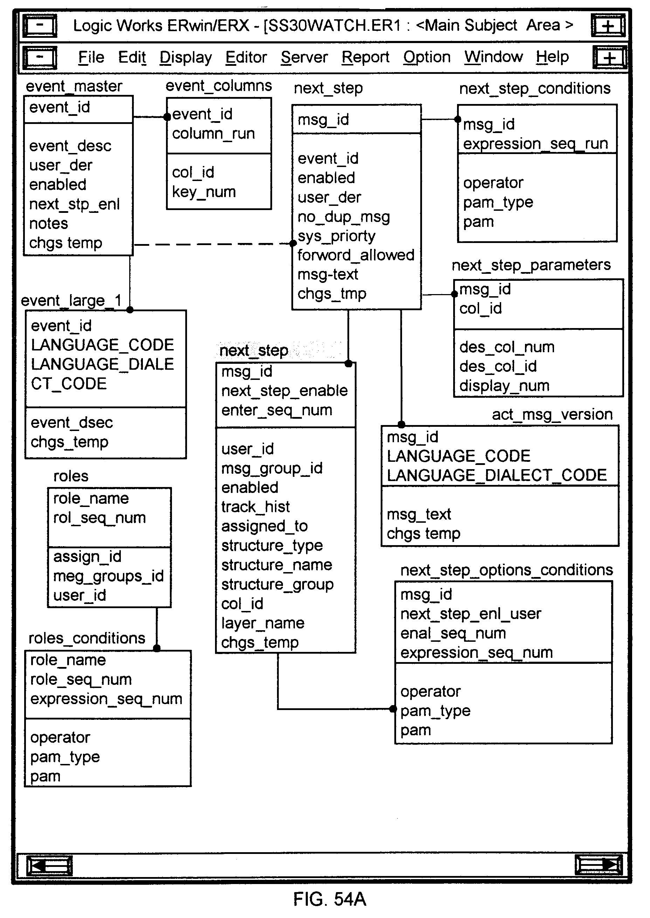

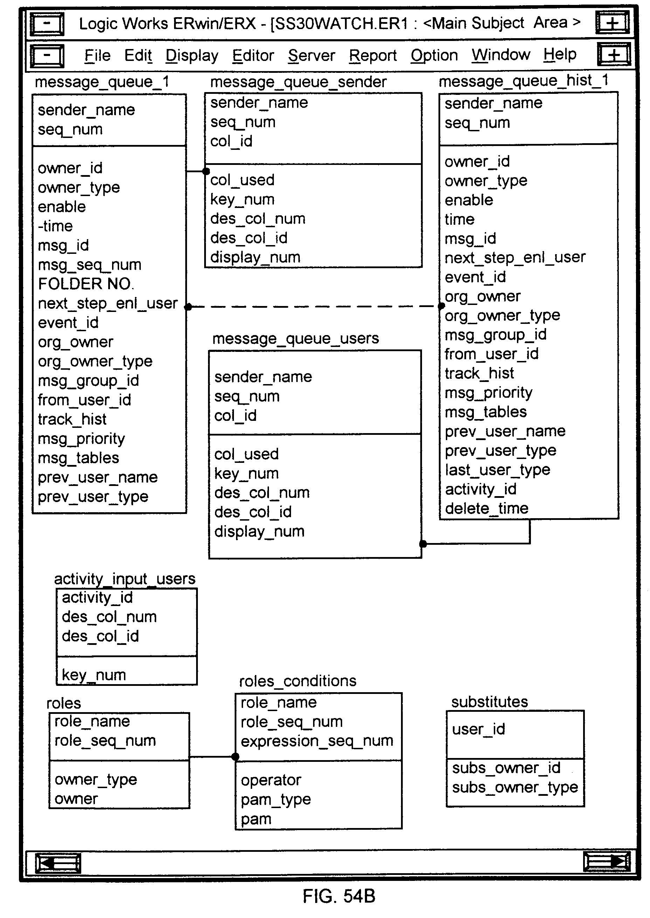

FIG. 54 illustrates an E/R diagram for the tables that have been changed or added to support conditional workflow. This diagram is described in further detail below.

The database tables summarized in the tables above that are either changed or created are described in further detail below. Some of these tables are described in further detail in the appendices to U.S. Patent Application Serial No. 08/213,022, filed March 14, 1994, and U.S. Patent Application Serial No. 08/475,575, filed June 7, 1995, both of which are incorporated herein by reference thereto.
next_step. The next step table is modified with the addition of forward_allowed flag. If this flag is set for a To Do then the target user can forward the To Do to another user.
next_step_options. Conditions may be added to each Next Step Option. Thus an entity_seq_num field will be added to each option as part of a key. The options that have the same msg_id and next_step_entity but with different entity_seq_num values represent different conditions for the same entity. Since the workflow engine must always come up with an assignment for every To Do, the last conditions must represent the "else" condition. The workflow workbench GUI will ensure that this is true.

The assignee in next_step_options may be a structure function. To support structure functions, the following columns are added to this table which are used when the assign_to field indicates a structures function:
- struct_func_type - Indicates which function (UpOne or UpToLayer) is to be performed.
- struct_group - The name of the structure group that the structure is a member of.
- structure_name - Indicates the name of the structure that is to be traversed.
- col_id - Indicates the column value that is used to find the starting point in the structure.
- default_type - Indicates whether the user or workgroup should get the message if the structure function fails.
- layer_name - Holds the layer name parameter to the function if the structure function is UpToLayer().
message_queue_1. The following changes will be made to the message queue:
- The key will be changed to be server_name and seq_num. The server_name will be the name of the server where the message was created. The seq_num column will be a number which uniquely identifies a message within a server. Both values are required as part of the key so that every message has a system-wide unique key for tracking purposes. If a message is reassigned to a user or workgroup on a different server, then server_name column will be the server where the message was first created not the name of the server where the message is stored.
- The create_time, owner_id, and owner_type fields will become non-key columns in this table.
- The message queue will be normalized thus the col_id_x and col_val_x columns from the message_queue table will be moved to the message_queue_columns table. The key to this table will be server_name, seq_num, and col_id.
- The prev_server_num, prev_seq_num, and last_insert_type columns are added to support enhanced tracking. If the message was inserted when not processing a To Do, because a To Do was reassigned, or because a user was moved from one server to another, then the prev_server_num and prev_seq_num indicate the key of the previous message. The last_insert_type will indicate the type of the insert. The type of the insert can be either no previous message, next step, reassign, or user movement.
message_queue_hist_1. The message queue history table may be changed to match the message queue table. Thus the following changes will be made:
- The key will be changed to be server_name and seq_num. The server_name will be the name of the server where the message lived when it was processed. The seq_num field will be a numeric datatype.
- The owner_id, owner_type, actitity_id, msg_id, and delete_time fields will become non-key columns in this table.
- The message queue history table will be normalized thus the col_id_x and col_val_x columns will be moved to the message_queue_hist_columns table.
- The prev_server_num, prev_seq_num, and last_insert_type columns are added to support enhanced tracking. If the message was inserted when not processing a To Do, because a To Do was reassigned, or because a user was moved from one server to another, then the prev_server_num and prev_seq_num indicate the key of the previous message. The last_insert_type will indicate the type of the insert. The type of the insert can be either no previous message, next step, reassign, or user movement.
event_master. The event master table will be normalized -- thus the col_id_x columns will be moved to the event_master_columns table.
next_step_conditions. The next step conditions table will contain the conditional expression associated with a next step. The rows in the next step conditions table with the same msg_id contain the expression definition in postfix format. This table contains the following columns:
- msg_id (primary key) - The msg_id of the next step the condition is associated with.
- express_seq_num (primary key) - The sequence number of the row within the expression. This indicates the order of the operands in postfix notation.
- operator - This indicates the postfix operator. This can be an arithmetic operator (=, !=, >, >=, <, or <=), a string operator (equals, starts with, or contains), the function operator, or the push operator. If the operator is an arithemetic or string operator the function is performed on the two operands on the stack. If the operator is the function operator, the parm_type and parm columns indicate the function definition and the function is performed on the values on the stack. The result of the function is then pushed onto the stack. If the operator is the push operator, the parm_type and parm parameters indicate the constant or column value that is to be pushed onto the stack.
- parm_type - If the operator is push this column indicates what value is to be pushed. It may indicate a constant is to be pushed, a column is to be pushed, the user id is to be pushed or the next step entity is to be pushed.
- parm - If parm_type is constant, this is the value to be pushed. If the parm_type is a column, this contains the column id. If the operator is function, this column contains the function name.
next_ step_parameters. The next step parameters table contains a source activity to destination activity mapping of columns and indicates which columns are displayed on the Task Details GUI described elsewhere. It contains the following columns:
- msg_id (primary key) - The msg_id of the next step the mapping is associated with.
- col_id (primary key) - The col_id column contains the column id of the column provided by the event.
- dest_col_num - The index of the column in the init_values[] array that is passed to the target activity. If the column is displayed but not passed to the target window then this value is 0.
- dest_col_id - The column id of the value from in the destination window.
- display_num - This value indicates the column where the value is displayed on the Task Details GUI.
next_step_options_conditions. The next step options table contains the conditional expression associated with next step options. The key is msg_id, next_step_ent_val, entity_seq_num, and expression_seq_num and the non-key columns are the same as in the next_step_conditions table (operator, parm_type, and parm).
message_queue_values. The message_queue_values table contains the column values that are passed along with the ToDo. These values may include values that are keys to the triggering event, values that are passed on to the target activity, and values that are displayed on the task detail GUI (see FIG. 16L). This table contains the following columns:
- server_number (primary_key) - The server number where the message was generated.
- seq_number (primary key) - The sequence number of the To Do.
- col_id (col_id) - The column id of the value as it is passed in the event.
- col_val - The value of the column.
- key_num - If the column is a key value to the event, then this column contains the number of the key. If the column is not a key value, this column contains 0.
- dest_col_num - If the column is an initial value for the target activity, then this column contains the index of the column in the init values array. If the column is not an initial value, then this column contains 0.
- dest_col_id - This column contains the column id of the column in the target activity init_key_i array.
- display_num - This column contains the column where the value is displayed in the Task Details GUI. If the column is not displayed in the Task Details GUI, then this column contains 0.
message_queue_hist_values. The message_queue_hist_values contains the same columns as the message_queue_values table.
activity_input_values. The activity input values table contains a list of the column ids that an activity can take as input. This table contains the following columns:
- activity_id (primary key) - The activity id of the activity.
- dest_col_num (primary key) - The number of the parameter in the init_values array.
- dest_col_id (primary key) - The column id of the parameter.
- key_flag - A boolean flag indicating whether the column is a key column or not.
For a particular dest_col_num, an activity can accept column ids as input. This feature allows "column synonyms", although they must be separately specified for each window in the system.
roles. The roles table contains a list of roles and owner names. It contains the following columns:
- role_name (primary key) - The name of the role.
- role_seq_num (primary key) - The sequence number of the conditional for the role. Conditions are evaluated in sequence number order and the first condition that is true indicates the value of the role.
- owner_type - The type of the role. This can be either a workgroup, a user, or a function.
- owner - The workgroup, user, or function name the role should map to.
The role table contains support for conditional role generation even though this feature will not be provided until a future release.
role_conditions. The role conditions table contains the conditions associated with a role. It contains the following columns role_name, role_seq_num, and expression_seq_num columns as keys and the operator, parm_type, and parm columns as non-key values. The meaning of these columns in this table is the same as the meanings of these columns in the next_step_conditions or next_step_options_conditions tables.
event_columns. The event columns table contains the column identifiers for an event. It contains the following columns:
- event_id (primary key) - The event identifier.
- column_num (primary key) - The number of the column when passed to the trigger event function or stored procedure.
- col_id - The column identifier of the column value.
- key_num - Indicates what number key the column is for the event. If the column is not a key value then this field contains 0.
substitutes. The substitutes tables contains a list of users who have substitutes defined for them. It contains the following columns:
- user_id - The user_id of the user whose messages will be sent to the substitute.
- subst_owner - The user id or workgroup id of the substitute user or workgroup.
- subst_owner_type - Indicates whether subst_owner is a user or workgroup.
approval_list. The approval list table contains the header information for each approval list. It contains the following columns:
- apprvl_list_id - The name of the approval list.
- apprvl_activity_id - The activity the approval list is defined for.
- notes - Notes that the user can use to describe an approval list.
approval_list_detail. The approval list detail table contains a line item for each approver on the list. It contains the following columns:
- apprvl_list_id - The name of the approval list.
- apprvl_activity_id - The activity the approval list is defined for.
- apprvl_level - The level for this approver on the list.
- apprvl_id - The user ID, workgroup or role of the approver.
- apprvl_type_code - The type of apprvl_id, either user (u), workgroup (g), role (r), or structure function (f).
- structure_function_type - The type of the structure function if apprvl_type_code is (f).
- structure_group_id - The structure group ID used for the structure function if apprvl_type_code is (f).
- structure_name - The structure name used for the structure function if approvl_type_code is (f).
- col_id - The column ID of the column used as the point name input if apprvl_type_code is (f).
- layer_name - The layer name used for the structure function if approvel_type_code is (f) and the structure_function_id indicates Ancestor at Layer.
- default_type - The type of the default assignee to be used when apprvl_type_code is (f) and the structure function fails for some reason.

Almost all the workflow stored procedures and workflow API functions described previously for this invention will preferrably require changes in order to implement the conditional logic embodiment of the present invention because of the change in the message queue key, the increase in the number of column values passed in to 32, the increase in the potential size of all column values to 255 bytes, and the normalization of the message queue, message queue history, and event master tables. The following tables list each stored procedure and workflow API function, indicate whether the external interface to the functions requires changes, and describes what any external or internal changes are necessary.

To minimize the impact of future changes the message queue key will preferrably be returned to the workflow API as a a 100-byte character string. Applications which use the workflow API should therefore not create any dependencies on the internal format of this string.

The following table (Table O) describes the interface changes necessary for the Workflow API functions of the previously described invention (e.g., SmartStream 3.0 available from Dun & Bradstreet Software Services, Inc.).

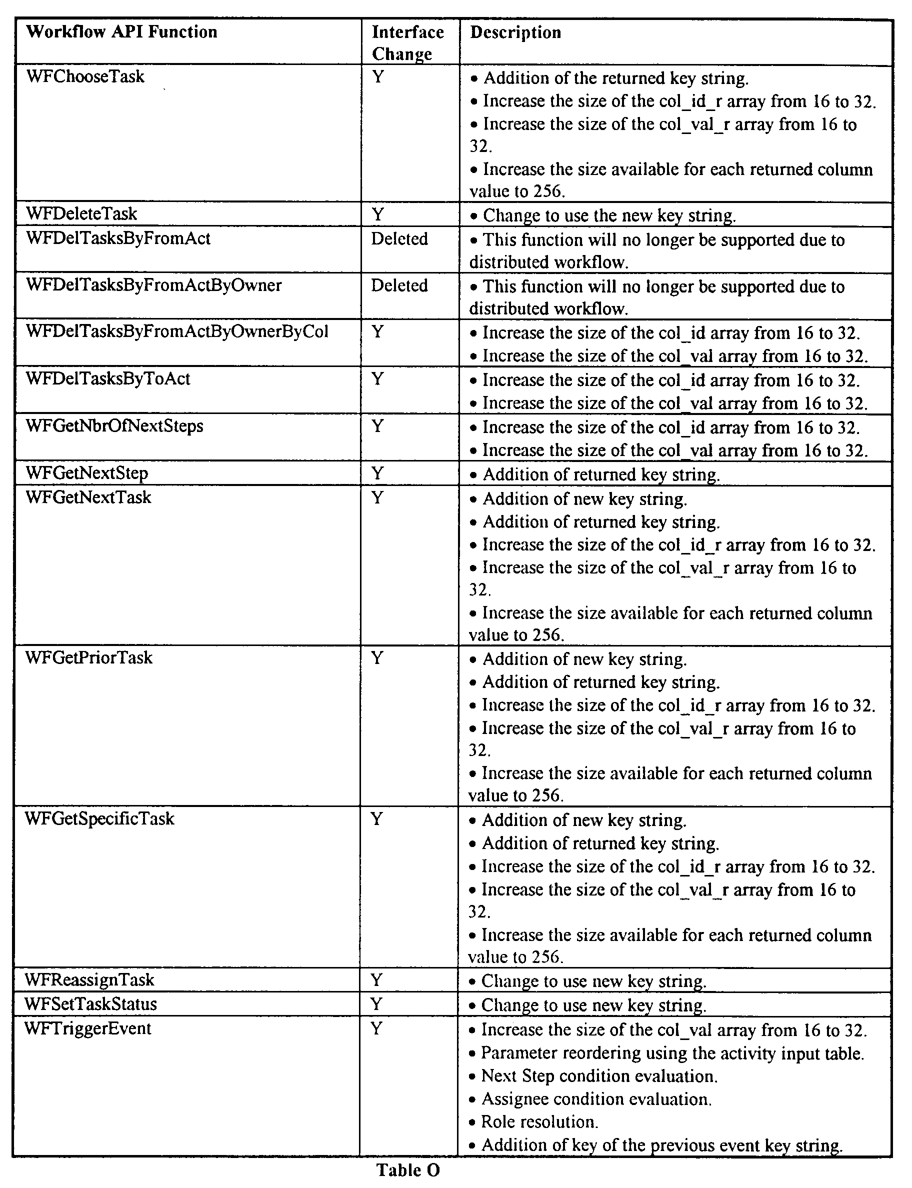

The following table (Table P) describes the interface changes necessary for the stored procedure functions of the previously described invention.

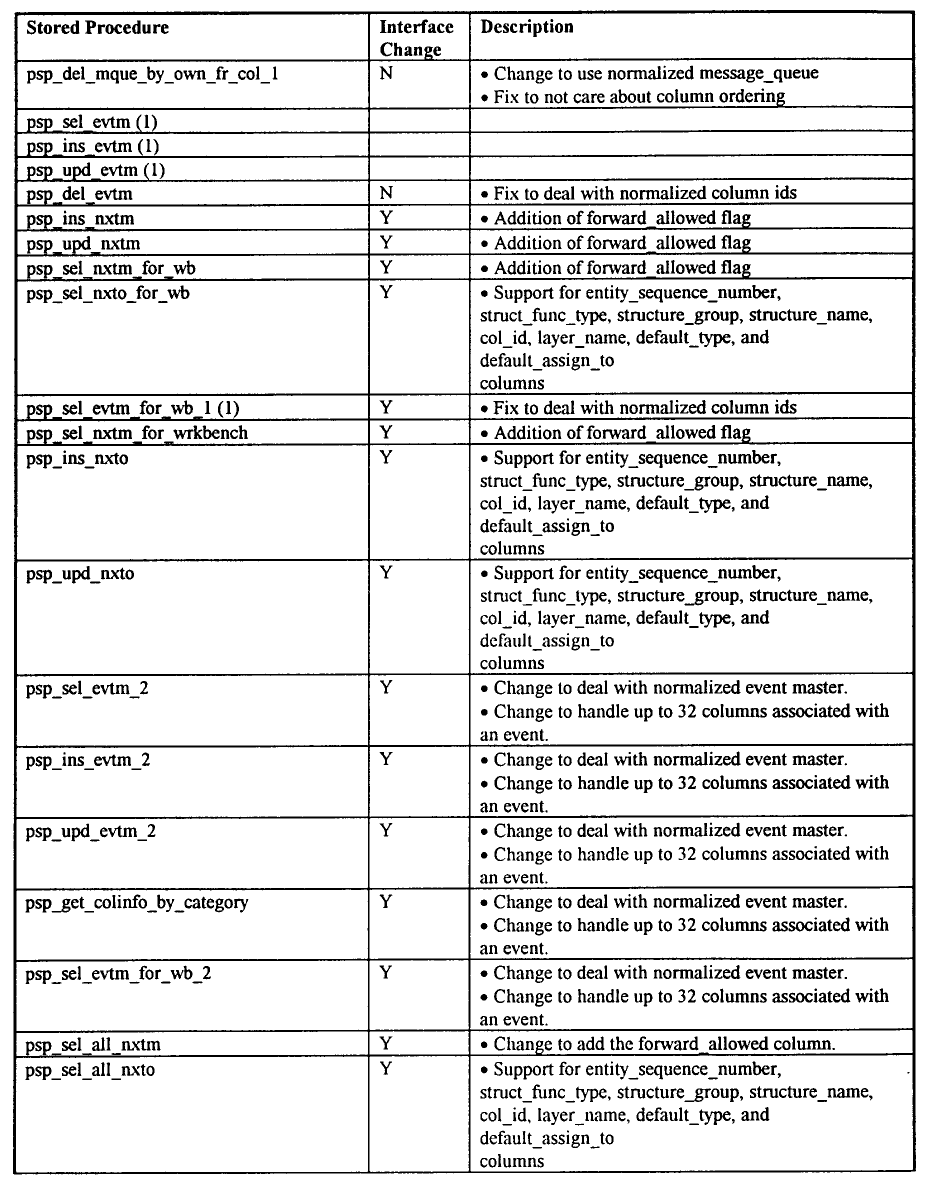

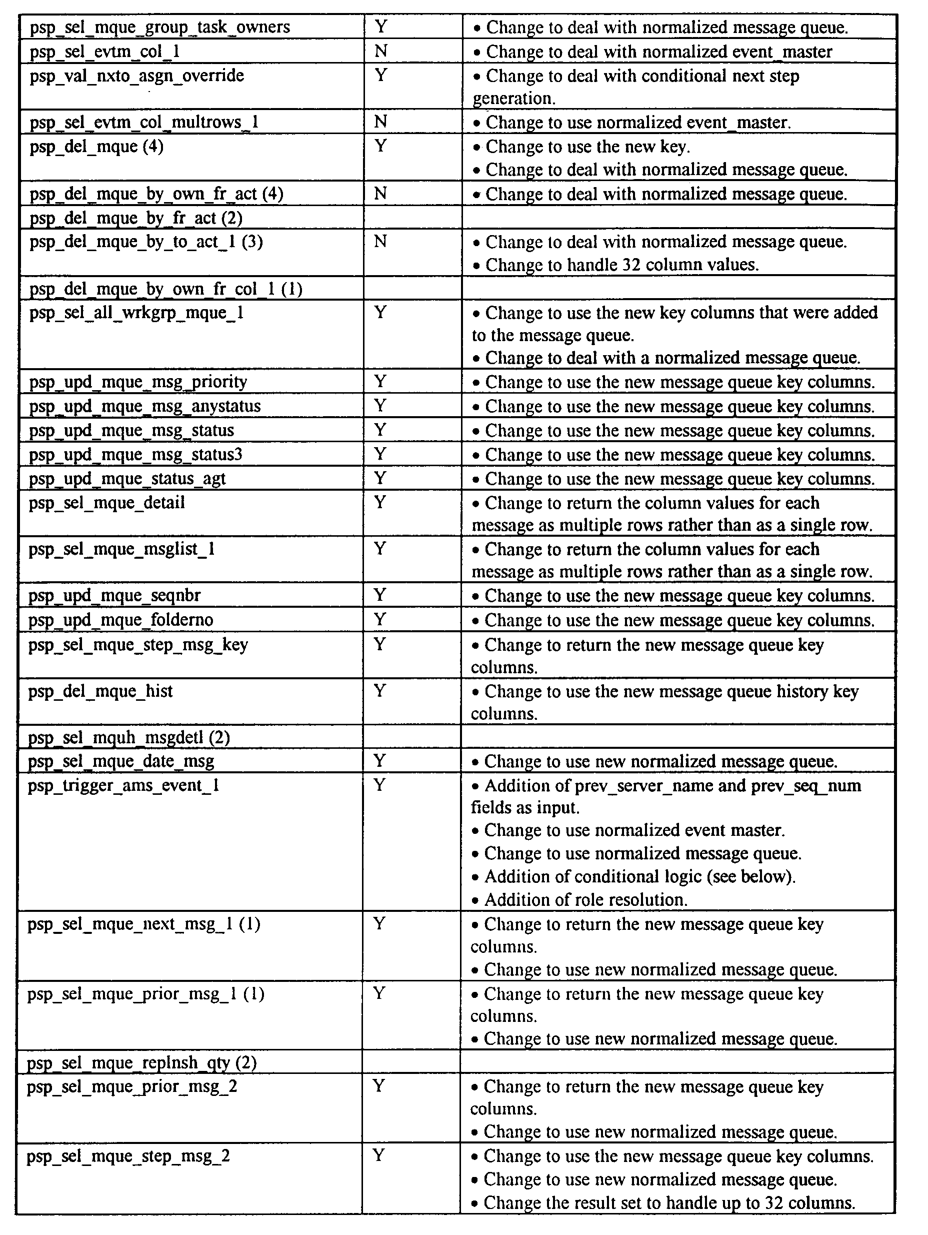

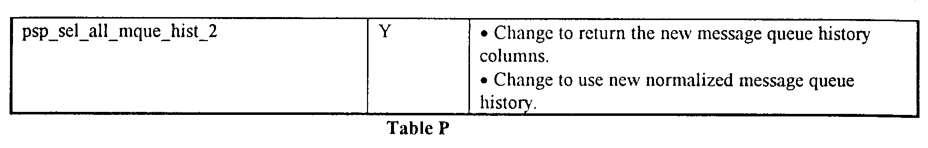

Several footnotes should be considered when reading the above tables. The numbers to the left of the footnotes correspond to same numbers in the above tables:
(1) These stored procedures only deal with 10 columns in a message; therefore, they appear to be obsolete. Thus, they should preferrably be deleted and the windows for which this causes problems should be fixed accordingly.
(2) These stored procedures are no longer supportable with the distributed work flow feature of the present invention.
(3) These stored procedures are still used by the workflow API; however, due to changes to the way the distributed nature of the present invention is handled, applications should preferrably not call them directly.
(4) Callers of these stored procedures must make sure they are operating against the correct message_queue.

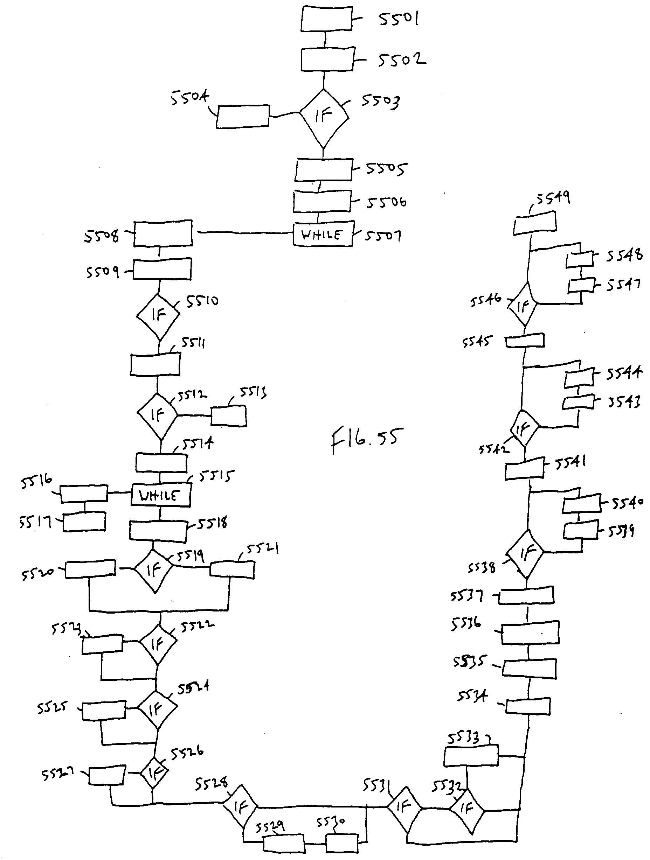

The trigger event stored procedure will additionally require changes to evaluate conditional logic. These changes are described in the following section.
psp_trigger_ams_event Stored Procedure. The following changes will be made to the psp_trigger_ams_event stored procedure:
Activity Input Table - The activity input values table will be used to reduce and order the column values that are included in the generated message.
Next Step condition evaluation - Each next step definition has a conditional attached to it. The next step is only triggered if the condition is true. The workflow engine will have to evaluate the condition to determine if the ToDo should be generated.
Assignee condition evaluation - The Assignee (next step options) of each workflow event will be able to have conditional logic attached to it. The workflow engine will have to evaluate the conditional logic to determine who the Assignee is.
Role resolution - An assignee can now be a role. When an assignee is a role the workflow engine will have to resolve the role.
Substitute processing - If the user has a substitute defined assign change the assignee to the substitute user.
Approvals -- 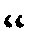 Approvals 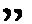 are described in further detail in a later section.
The new algorithm for the psp_trigger_ams_event stored procedure is described below in conjunction with FIG. 55 as follows: 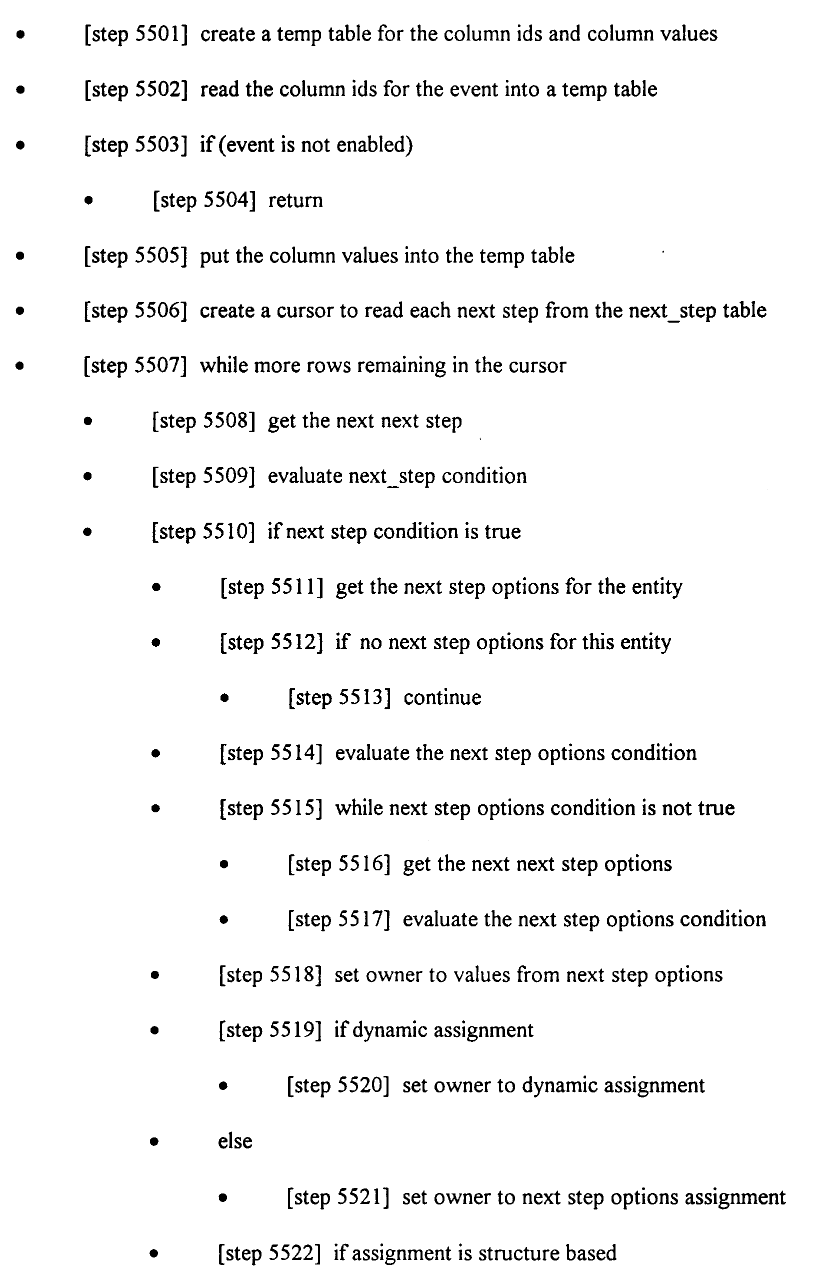 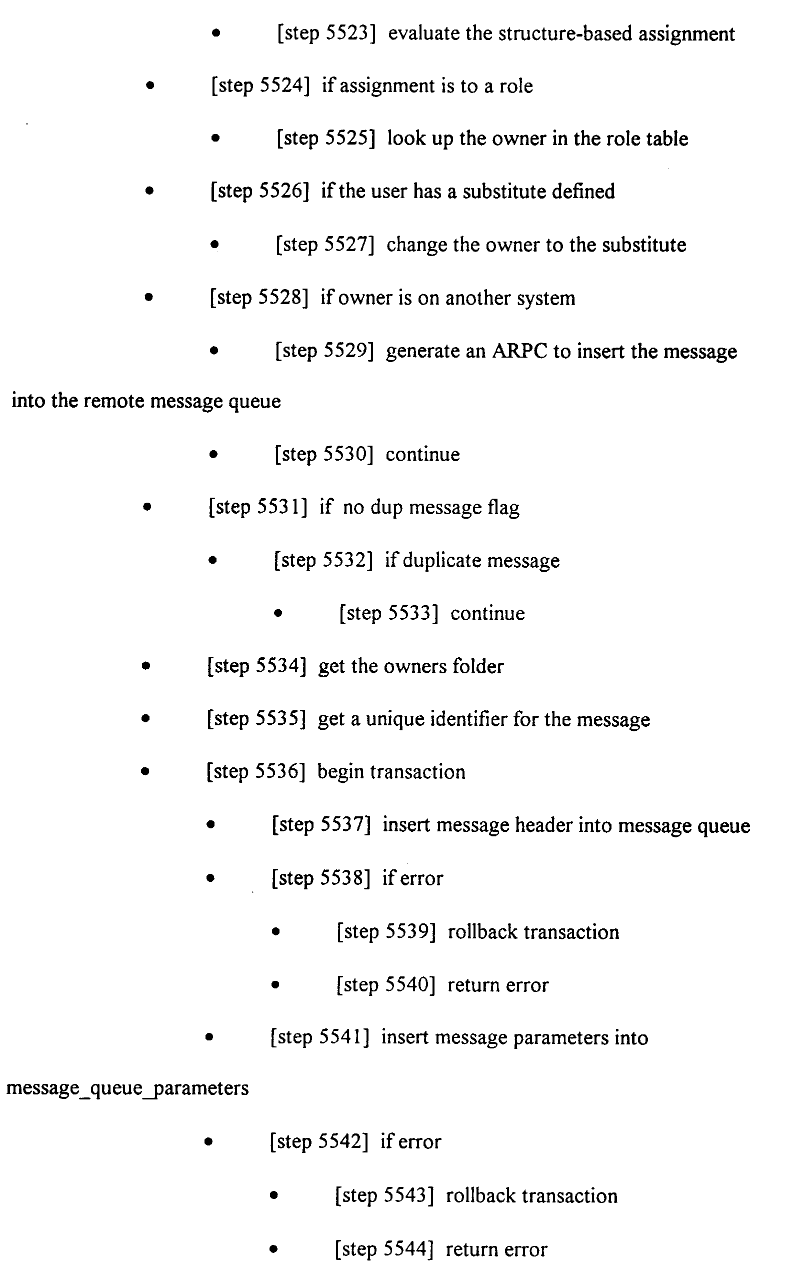 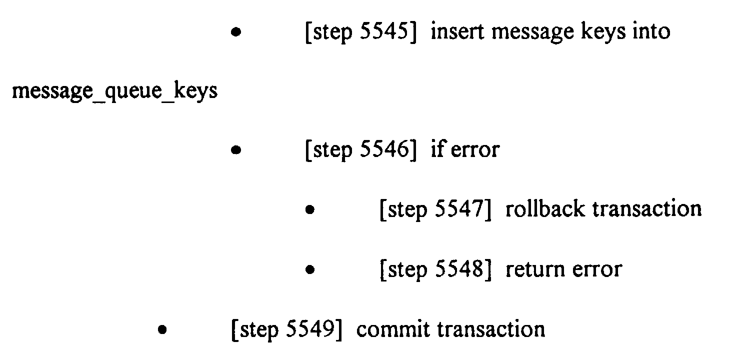 Both next step processing and next owner processing require that conditional expressions be evaluated. One expression evaluation stored procedure may be written to handle all expression evaluation. The trigger event function will put the column values into one temporary table and the expression to be evaluated into another temporary table. The expression evaluation stored procedure will evaluate the expression using these two temporary tables and return a boolean TRUE or FALSE to indicate the value of the expression.
Conditional workflow will preferrably require the following application architecture changes:
Approve, Reject. Approve and Reject are flew actions that are only available for windows that support approvals. Approve and Reject will execute the logic that is currently in the approval windows. These actions are described in further detail in a later section.
Fix step completion bugs. The logic within basic window which controls when a To Do is marked as complete will be fixed so that it only marks the To Do complete when a save or delete is done with the same keys as the keys provided in the initial data coming into the window. This requires resetting the AM_next_msg_flg_i basic window instance variable when the window key values change due to the user typing a new key value.

The administration interface for the present invention may include the following new or modified windows:

Work Flow Workbench. A new graphical-based interface may be implemented for defining next steps and next step options (owner assignment). The graphical interface will preferrably create conditional workflow definitions required by the new table layout. This includes compiling any conditional logic expressions into postfix notation before storing them in the appropriate conditional table. This work flow workbench mapping tool is defined in further detail in a later section.

Approval Tracking. This window may be keyed by the application key. It may display the current status of the approval process for the item shown. It also shows a list of the future approvers. Approvals are described in further detail in a later section.

Approval List Definition. This window allows the administrator to create an approval list. Each list is keyed by the list name and the activity class for which it is applicable. The global activity class (*) means that the approval list can be used for any window in the system that supports approvals. Approvals are described in further detail in a later section.

Role Definition. The Role Definition window is a simple tabular window used to maintain the role table. The key for this window is the role name. The data fields are the owner type (user or workgroup) and the owner.

User Substitute Definition. The Substitute Definition window is a singlerow window that allows a user to define a substitute for himself. The key will always be the user's user_id and will not be able to be modified. The window will display assign_to type and the user or workgroup.

Administrator Substitute. The Administrator Substitute window is a simple tabular window that allows the administrator to change any users substitute. The key is user_id and the data values are assign_to type and user or workgroup.

Activity Input Data. The Activity Input Data window is a keyed tabular window used to maintain the activity_input_data table. The key to the top section is the activity id. The fields shown in the tabular and singlerow portions of the window are parameter number, column id, column description, and key flag.

Events. The event window needs to be changed to support 32 columns within an event. This can either be done by modifying the current window or by changing the window to be a basic tabular.

Applications will have to make the following changes to work properly with the conditional logic features of the present invention:
1) Change any initial data loads that load data into event_master to load data into both event_master and event_columns.
2) Change any initial data loads for the next_step table to load data for the new columns in this table.
3) Change any initial data loads for the next_step_options table to load data for the new columns in this table.
4) Create initial data for the activity_input table to describe the values that an activity can accept as input.
5) Any application that uses the workflow API or which directly calls any workflow stored procedues in the wact or wijt table families will have to be changed to use the new workflow API functions.

Applications will also have to make the following change to allow userss to fully exploit the capabilities of conditional workflow: Change all calls to trigger event functions to include all column values that may be relevant for passing on to other activities or for use in conditional logic.

In order for the present invention to work with Structures, Structures integration requires that all structures that are used within workflows be replicated to all work flow servers in the system. Furthermore, the use of the structure functions as the assign to in next step options requires that structures be enhanced to include work flow assignee fields within the point definition.

### Approvals

### Definitions

**Approval Enabled Activity** - A window that supports user configuration of Approval workflow by calling the new Approval trig_event function and allowing for the possibility that no Approval process was required. The activity is identified to the workflow mapping tool through the new apprvl_enabled_activity table.

**Approval Enabled Event** - An event that allows users to map a workflow using an Approval List for distribution of Next Step messages.

**Approval List** - A list of Users, Workgroups, Roles or structures functions which supports sequential grouping used in an Approval process for an Approval Enabled Activity.

**Approval Tracking/Status** - An application window/table that supports tracking of a single instance of the Approval process and access to Approval comments. Shows Approval level, approver, name and type, Approval Status.

**Substitutes** - A User or Workgroup that will temporarily receive Workflow messages intended for a specified User. This will apply to ALL Workflow not just Approvals.

**Workflow Mapping Tool** - A completely new graphical user interface for defining and describing workflows. It is intuitive and supports specification of conditional Next Steps, conditional assignments and assignment of Approval Lists. It is described in further detail below.

The main goal of the Approvals portion of the present invention is to provide the user 120 with a way to customize the Approval process with the least amount of work required by the applications. A secondary goal is to provide a model, with supporting tools, to standardize the way we do Approvals. This will allow automatic support of new Approval features as they are added to the platform. These include Substitutes, Roles, and conditional generation

Four application windows which use an Approval process have been used as the basis for the design. Currently, each transaction window that supports approvals has:
1) An Approval List table, stored procedures and a maintenance window with a "Copy From" response window.
2) An Approval Substitutes table, stored procedures and a maintenance window.
3) An Approval Tracking/Status table to monitor the approval process of a specific instance, a comments table, stored procedures and a maintenance window.
4) Some mechanism for either approving or rejecting and handling the updates to tracking/status tables.
5) Scripts to read the instance table, generate the appropriate 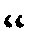 To Do 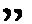 messages and to recognize when the Approval process is complete.

Payment Request and Journal Entry Approvals are very similar in that they both use the common Approval List/Copy From and Substitutes ancestor windows and have an Approval Status table with associated Comments. Purchase Requisitions use a similar format for Lists and Substitutes but have these tables in a different table family than the Status and Comments tables. They also support Approval at both the line and the document level. All three use the Approval Tracking window as the Next Step activity in the Approval process, thus making the object being approved only visible at Approval time through Zoom. Requisitions provides an Approval view on the Requisition maintenance window. ECR/ECN seems the most different from the others with Comments associated with the document being approved rather than the Status table, Approval from the document window and different column names and datatypes for Lists and Substitutes.

To provide 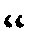 Approval Enabled 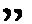 activities, i.e. activities which support user modification of the Approval process through the use of the Workflow Mapping Tool, and to integrate new workflow features in to that process, the following tasks must be accompished:
1.) Provide a mechanism to identify 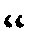 Approval Enabled 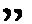 activities and events and their components, e.g. the 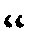 Approving 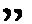 activity. Also, indicate when a 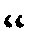 To Do 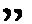 is for an Approval activity.
2) Consolidate multiple application Approval List tables into a single platform table. Add support for structures based functions that can be used within workflow to determine workflow assignees. Structures which have the workflow global dynamic property can be used to determine the assignee within a workflow. Two such functions are provided:
   - Determine the assignee by reading the workflow dynamic properties of the direct ancestor of a point.
   - Determine the assignee by getting the workflow dynamic properties of the ancestor of a point at a given layer.
   - Determine the assignee by getting the workflow dynamic properties of a point.
3) Incorporate Approval List Substitutes into the general workflow Substitutes design. When a user has a substitute defined for them, **all the user's To Do's are sent to the substitute**. A substitute can only be defined for a user -- it cannot be defined for a workgroup or a role. When a substitute is defined, To Do 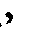 s that are already in the user 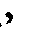 s To Do list are not affected
4) Provide a model window for consistent handling of Approval Status/Tracking. This would make sure that all the Approval Tracking windows have the same look and feel. It would also decrease the development cost of adding Approvals to new windows. The existing application traccking windows can still be used. The GUI is generally consistent.
5) Provide a PowerBuilder object/ancestor to support Approve, Reject and Comments from within an application window which will allow a view of the object being approved. This change would allow the approver to see the object that they are approving. Currently, approvers use the Approval Tracking window and have to Zoom to the actual object. For this release, the view of the actual object will be read-only.
6) Allow users to Approve items directly from the Task Details list without actually entering the application activity.
7). Provide workflow functions which will consolidate code so that an Approval Enabled window can use two functions to do ALL of the work required including
   - Generating rows for the tracking/status instance table for each approver on the user selected approval list
   - Generating To Do 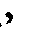 s for the first level of approvers
   - Generating any additional To Do 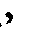 s for Next Steps attached to the Approval enabled event
   - Returning the ID and the type of the approver used or an indicator that no approval process was required

New workflow functions may be written to support Approvals. Both are a variation of pam0011_trig_event(). The first, pam0012_trig_event(), will return a code indicating 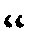 Approval Complete 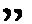 and will require three (3) additional arguments, tracking_SQL_string, approver_used and approver_type_used.

The flow of the new function will be:
- Do the same things that the old trig_event function does PLUS
- If the approval flag is set in a next_step then evaluate the next_step_options conditions to get the Approver ID and approver_type_code.
- If no approval is required, i.e. no list value is present, return 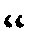 1 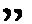 , an indicator that the Approval is complete.
- Otherwise...

Update the approver_used and approver_type_code arguments for return to the caller .
- Using the application window provided string containing svr_db_owner.stored_proc and the formatted key values, insert rows into the Tracking table. Resolve Structures functions to provide the User/Workgroup/Role ID and the Approval Level for each approver. Set the status to 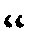 N 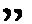 .

The second, pam0013_notify_approvers(), will generate the 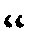 next batch 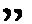 of Approval To Do 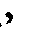 s as specified by the apprvl_level and will require one (1) additional argument, next_approver_SQL_string. It can also be used in the Approval window.

With the prior system, when an approval process is associated with an activity:
- From **dbupdate** event, call **update_insert_tran**() to insert a row into the database for the object to be approved.
- error handling
   call **pam0011_trig_am_event**( 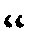 insertevent 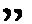 ,.. . . )
   select the owners from the approval list
   build a SQL_string for each approver for the insert stored procedure for the instance table
   insert a row into the instance table for each approver
   call **pam0011_trig_am_event**( 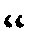 sendapprmsg 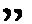 ,....) for each approver in the first batch.
- Using the new functions, call **update_insert_tran**() to insert a row into the database for the object to be approved
   error handling
   complete_var = **pam0012**_**trig_approval_event** ( 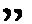 insertevent 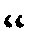 ,.,.,**SQL_string, approver_used, approver_type_code**) where **SQL_string** = am_server_db_owner_g + **insert**_instance_stored_procedure + & instance_keys (formatted for SQL)
   **pam0013_notify_approvers**( 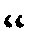 sendmsgappr 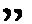 , ., ., ., **SQL_string**, **approval_level**) where **SQL_string** = am_server_db_owner_g + **date**_instance_stored_procedure + & instance-keys (formatted for SQL)
Note: The stored procedures should be written such that the values for the tracking/status table are the last parameters passed in.

The description below provides additional guidance and notes in the implementation of Approvals.

### Approval Table Design

The following tables *change* in the present invention to support Approvals:

### next_step

- The apprvl_ind column indicates whether the next_step is for an Approval. The mapping tool and the workflow engine handle Approvals slightly differently from other To Do 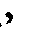 s (see below).

### message_queue_1

- The apprvl_ind column is added to indicate that the To Do is an Approval To Do. The Task Detail window will allow Approval from there if TRUE.

The following tables are *added* :

### apprvl_enabled_activity

The apprvl_enabled_activity table contains the IDs of Activities that are 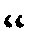 Approval Enabled 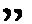 . It contains the following columns:
- activity_id (primary key) - The ID of an activity that has been coded to support customized Approvals.
- apprvl_event_id (primary key) - The ID of an event which can generate an Approval To Do.
- reapprvl_event_id - The ID of an event which will require reapproval because of changes to the object being approved.
- apprvl_activity_id - The ID of the activity where the Approval should be performed, i.e. the Next Step activity.
- task_detail_apprvl_id - The name of the PowerBuilder object that contains the application code to be used by Task Detail to support Appovals for this activity.

### apprvl_list

The apprvl_list table contains Approval List IDs associated with the activities that use them. It contains the following columns:
- apprvl_list_id (primary key) - The ID of an Approval List.
- apprvl_activity_id (primary key) - The ID of an activity that has access to this list for Approvals.
- notes - Text used as needed.

### apprvl_list_detail

The apprvl-list_detail table contains a list of users, groups, roles or structures functions which can be associated with an Approval process. It contains the following columns:
- apprvl_list_id (primary_key) - The ID of the Approval List whose members are defined here.
- apprvl_activity_id (primary key) The activity that has access to this list.
- apprvl_level (primary key) - Indicates the order in which Approvals are performed.
- apprvr_id (primary key) - The user, workgroup or role ID of this approver or the default approver should a structures function fail to be resolved.
- apprvr_type_code (primary key) - Indicates whether approver_id is a user, workgroup, role or structure function.
- structure_function_type - Indicates the type of structure being used.
- structure_group_id - The ID of the structure group being referenced.
- structure_name - The name of the structure being referenced.
- col_id - The column ID of the data being used to resolve this structure function.
- layer_name - The name of the Layer.
- default_type - Indicates whether approver_id is a user, workgroup, role. Relevant when the structure function cannot be resolved and the approver_id is used as a default.

### substitute

The Substitute tables contains a list of users who have substitutes defined for them. It contains the following columns:
- user_id (primary key)- The user_id of the user whose messages will be sent to the substitute.
- substitute_owner_id - The user id or workgroup id of the substitute user or workgroup.
- substitute_owner_type - Indicates whether substitute_id is a user or workgroup.
- active_ind - Indicates whether the substitute is currently being used.
- notes - Text used as needed.

### tracking/status

The data portion of this table will remain constant while the number and datatype of the keys will vary from application to application.
- instance key(s) (primary key)
- apprvl_level (primary key)- Order in which approvals are performed.
- apprvr_id (primary key)- The user, workgroup or role ID of this approver.
- apprvr_type_code (primary key) - User, Workgroup or Role
- apprvl_status_code - N = None (hasn 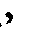 t been sent a message to review yet)
   P = Pending (has been sent a message but has not responded)
   A = Approved
   R = Rejected
- apprvl_status_date - Date of the last status change
- actual_apprvr_id - ID of the user who performed the status update.

### End User Windows

### Activity Window Approve/Reject Standard

The new activity will inherit from the original activity to provide a complete, read-only view of whatever is being Approved. Functionality includes Approve, Reject, Comments, Approval Complete, generation of next level To Do messages and updates to the instance tracking table. The 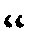 Yellow Sticky 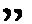 object is moveable so that all portions of the original activity can be seen.

### Task Detail

plt0040_todo needs to be modified so that when the message queue row indicates that the Next Step activity is an Approval, an additional button will be displayed. When rows from the detail list are selected, enable the button. If Approval button clicked, execute the application provided code to update the Approval Tracking, generate trig_events and complete the approval process as needed. A reusable PowerBuilder object will contain the necessary application code.

### User Substitute

The Substitute window allows a user to define a substitute for himself. The key will always be the user's user_id and will not be able to be modified. The User Substitute window and supporting stored procedures will have to make sure that infinite loops within the Substitutes list are not allowed (User a is a substitute for user B who is a substitute for user A). Default workflow should be delivered with the system so that an informational To Do is generated when a user is made a substitute for another user.

### Administration and Tracking Windows

### Approval List Definition

This window allows the administrator to create an Approval List. Each list is keyed by the list name and the activity ID for which it is applicable. A Popmenu and response window support Copy from one List to another.

### Tracking/Status Ancestor

This window is keyed by the application key(s). It shows the current status of the Approval process for the item shown. It also shows a list of the future approvers and allows the current user to Approve or Reject if appropriate. PopMenu and Tool Bar provide Accept, Reject and Zoom to Document actions.

### Administrator Substitute

The Administrator Substitute window is a simple tabular window that allows the administrator to change any users substitute. The key is user_id and the data values are assign_to type and user or workgroup.
Rule: Add, change, delete of Substitutes does NOT impact exisiting workflow.

### Workflow Mapping Tool

When an Approval Enabled activity is mapped, the map knows which events are 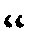 Approval Enabled 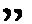 . When the Insert event is chosen from the window 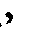 s list of available events, the Approval Activity is presented as a possible next step. When chosen the window 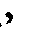 s presentation is slightly different in that Approval Lists are presented for the assignment of To Do messages.

### Application Impact Issues

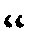 Approval Enabled 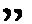 activities must:
1) Have moved Approval Lists and Substitutes to the common Platform tables. Note: Substitutes will now apply to all workflow NOT just Approvals. These tables and their respective maintenance windows will replace the applications' individual implementations. This means that two windows can be dropped for each Approval Enabled activity.
2) Use the new TrigEvent function to manage approval processing and to process "Approval Complete" code, if the user has chosen to NOT approve under certain conditions. This function will return an indicator of 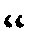 Approval Complete 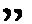 and the ID of the Approver and its type code which was used to generate the Tracking Table rows. The application window will provide a string containing svr_db_owner.stored_proc and the formatted key values to Insert rows into the Tracking table. The workflow engine will provide the User/Workgroup/Role ID and the Approval Level for each approver. Structures functions will be resolved at this time. This means that some code can be removed from an activity window. Each application designer should consider whether it would be useful to store the name of the Approver used.
3) Have written the PowerBuilder function which will process Approvals from the Task Detail window. A model will be provided and an attempt will be made to require the bare minimum of code from the applications. Essentially, a fill-in-the-blanks with code that currently exists in other places.

Other steps which could be taken to move in the direction of an internally consistent Approval process are:
1) Rewrite Tracking/Status windows to use new standard.
2) Use the model for Approve/Reject from the document in addition to the Approve from the Tracking window.

### StreamBuilder Impact Issues

### Approval Activity window

Users who build activities which they wish to 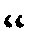 Approval Enable 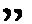 will need a GUI to enter and maintain the apprvl_enabled_activity table. 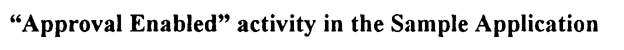 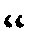 Approval Enable 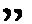 one of the existing Sample Application windows. (psa0800_invoice). Use the new 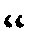 Yellow Sticky 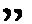 to do the Approval on a read-only view of the original activity using the new model. (psa0810_invoice_approval).

### Approval Tracking Window

Provide a sample of the Approval Tracking/Status implementation using the new Ancestor. (psa0850_invoice_status).

### Task Detail Approval object

Provide a sample of the PowerBuilder function used to Approve from the Task Detail window. (psa0800_invoice_approve).

### Dependencies

1) Structures integration requires that all structures that are used within workflows be replicated to all work flow servers 110 in the system.
2) The use of the UpOne() and UpToLayer() structures functions as the assign to in next step options requires that structures be enhanced include work flow assignee fields within the point definition.
3) Structures integration requires that the structures team provide stored procedures to traverse a structure and to validate workflows set up using structures.

### Workflow Mapping Tool

This Workflow Mapping Tool for the Conditional Workflow System of the present invention is described in further detail below. The new Workflow Mapping Tool, or WMT, sets a new standard for creating and displaying the Conditional Workflows.

The Workflow Workbench of SmartStream 3.0, available from Dun & Bradstreet Software Services, Inc., consists of the Workflow Workbench Definition window and other activity windows such as Activity Definition, Workflow Event Definition, Activity 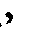 s Workflow Event Definition, and Step and Assignments Definition. All the definition windows are accessible from the Workflow Workbench Definition window. These windows present a loosely integrated methodology for defining workflow objects. A primary function of the present invention WMT is to integrate all the workflow Step definition and management functions in order to improve the functionality and maintainability of the SmartStream transaction based workflows. The WMT, is implemented as a separate application. It, however, is tightly integrated with the SmartStream environment. Users invoke it from the SmartStream window. The Activity Definition, Workflow Event Definition, and the Activity 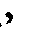 s Workflow Event Definition windows remain within the SmartStream application but are accessible from the WMT via the 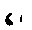 Zoom To 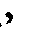 feature.

The purpose of the Workflow Mapping Tool is to provide workflow developers and administrators with an easy to use, graphical mechanism for developing and maintaining business process workflows. The Workflow Mapping Tool provides the interface by which end users configure the workflow data upon which the SmartStream workflow engine operates. In this way, the WMT allows users to graphically represent and manage the workflow data which controls which controls their various workflow enabled business applications. A major component of this purpose is to allow SmartStream users to configure the DBS provided workflows of the SmartStream applications. Additionally, users who develop their own client/server applications can workflow enable such applications by constructing workflow maps for them through the use of the WMT.

The WMT is a client application which can provide a graphical representation of the workflow definition data for a business. The graphical representation is then used as the access handle for configuring the underlying workflow definition. These graphical workflow drawings are referred to as workflow maps (a.k.a. workpages).

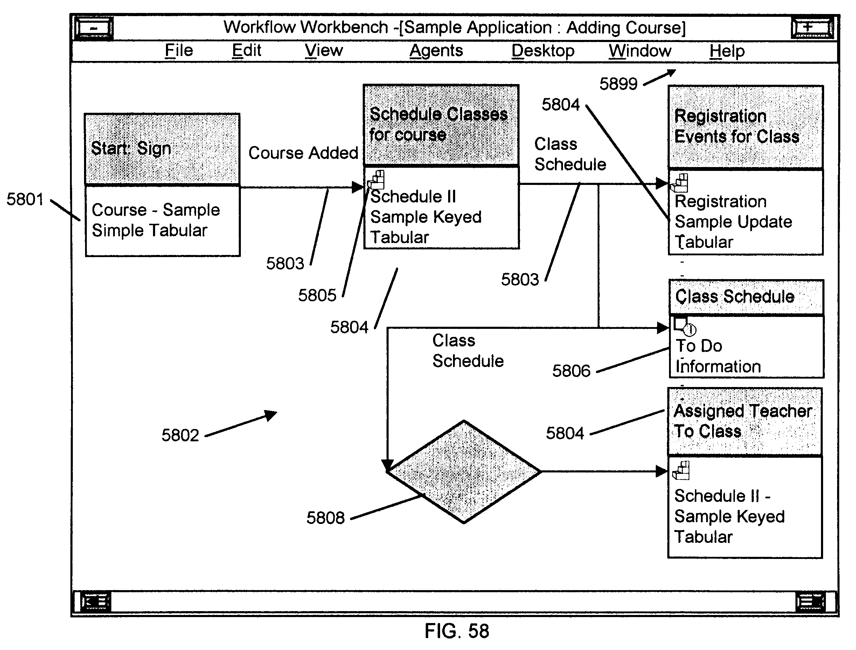

A workflow map, as shown in Figure 58, is essentially a diagram which depicts a 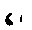 Start Step 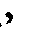 5801 that begins the workflow; and one or more of the resulting workflow events and steps (5802) that comprise a part of the workflow definition. The boxes on the diagram represent the steps in the workflow. The connecting lines represent the workflow events which facilitate a transition to a subsequent step. A workflow map can display all, or just a portion of the workflow data upon which the workflow engine operates.

Workflow Maps are the fundamental window type in the WMT. They are the primary graphical interface object through which the user accesses and controls the data.

The WMT performs two fundamental tasks via the workflow map: it allows users to browse (display) existing information (workflow steps & events) for an established workflow; and it allows users to construct new workflows or to modify the existing ones. Both of these fundamental tasks are commonly performed in any given usage of the workflow mapping tool. Since the WMT is an MDI (Multiple Document Interface) window, it allows the user to operate on several workflow maps at once. Each workflow map is a child window within the WMT.

The primary object depicted on a workflow map is a Workflow STEP. The WMT defines two basic types of workflow steps 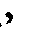 : a 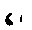 Start Step 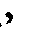 5801; and standard 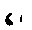 Steps 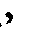 . Standard workflow steps are further broken down into two types: an activity based step, and an information only steps (a.k.a. Informational ToDo 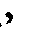 s, Informational steps). In addition to the steps, a workflow map also manages and displays 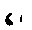 Workflow Events 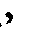 . Workflow Events are represented by the lines 5803 connecting the steps on the diagram.

The WMT allows the user 120 to organize a set of workflow maps into a workbook. Typically, a workflow map represents only a portion of a workflow, and a workbook contains all of the maps for a particular business process.

The 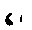 Start Step 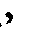 5801 establishes an initial context for a workflow map. The Start Step itself does not represent a specific step in the workflow. Moreover, it is used to represent any one of a set of steps in the system which may be used to arrive at the subsequent steps via one of the Start Step 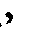 s workflow events. Therefore, the Start Step represents a generalized means by which subsequent steps in the workflow are reached.
Standard workflow steps 5804 represent actual workflow data records in the database. They define subsequent activities to be performed in response to incoming events. They are represented on the workflow maps as (approx.) 1 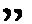 squares with a 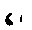 staircase 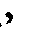 picture 5805 in the center left portion of the square. Each of the workflow steps represents a complete set of workflow data for the step. This workflow data is referred to as the step 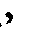 s 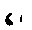 properties 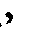 . The graphical representation of a step object provides access to a tabbed dialog box through which the property values are established and maintained. The user can access the properties dialog of any workflow object by one of several methods: Selecting the object and using the 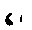 Show Properties 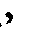 menu selection; Double clicking on the object; or selecting the object and using the 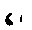 Properties 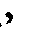 menu function of the right mouse menu. The specifics of each object 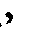 s properties will be discussed later on in this document.
   Standard workflow steps (both activity based and informational steps) may be 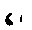 conditional 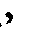 steps. This means that they may have a set of entry conditions associated with them. The entry conditions are a set of expressions that govern whether or not the step will actually be generated (arrived at). A conditional step is represented on the map by a 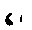 decision 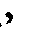 diamond graphic 5808 attached to the immediate left of the step. Steps which have no entry conditions are referred to as unconditional steps, while steps having the entry conditions are referred to as conditional steps.
   Informational Steps 5806 are very similar to the activity based ,workflow steps. They are also represented on the workflow map as a 1 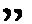 square, however they contain an 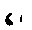 I 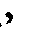 (information) icon. Information steps are essentially a special case of an activity based step whose activity is specified as a standard SmartStream 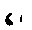 Informational ToDo 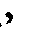 activity. This activity, as defined in SmartStream, has NO output events and is subsequently often used to terminate a particular flow path in a workflow. This is main reason that Informational steps play such a prominent role in workflow definitions, and the reason they exist as a separate objects within the system.
   Workflow Events 5803 are represented by the connecting lines on the workflow map. There are several configurations possible for connecting workflow steps. A single workflow event may connect to one or more subsequent workflow steps. At run-time, a workflow step may generate an specific event form a set of events which it is capable of generating. The WMT can provide a graphical display which shows a flow path for each of the possible events. Since workflows can get arbitrarily complex, a particular map typically depicts a primary flow path of interest in order to avoid graphical clutter.

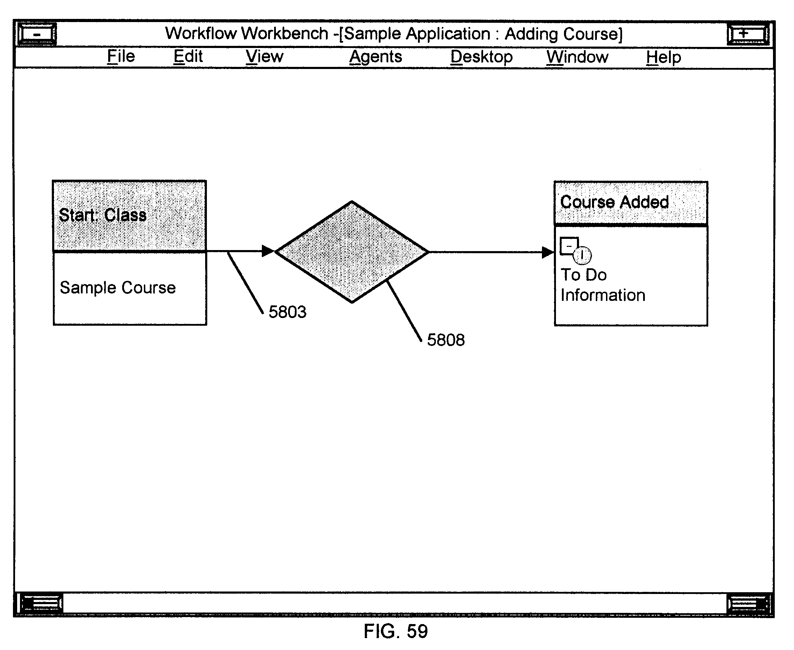

As previously mentioned, there are several configurations possible for connection workflow steps. The first and simplest construct is a set of steps that are connected sequentially. This construct is represented directly by a workflow event line 5803 connecting the two steps. Such a line may connect two steps directly (unconditional step), or it may connect to a conditional step at the left point of the conditional graphic (diamond) (FIG. 59) When an event connects to a conditional step, a run-time evaluation is made by the SmartStream workflow engine (based on the specified conditions) as to whether or not to generate a task for that particular step.

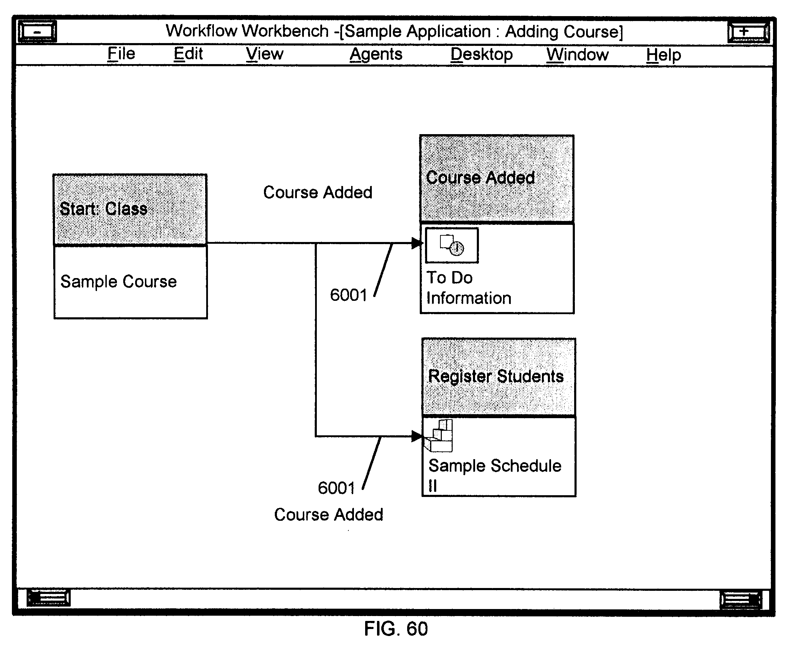

Additionally, steps may be connected in parallel. (FIG. 60) This type of construct indicates that both steps will be evaluated in response to the single instance of the singular workflow event. Like the serial connection, a parallel connection construct may connect to conditional step. When unconditional steps are connected in parallel, the workflow engine will generate tasks for each of the connected steps. This construct therefore allows parallel flow paths 6001 to exist.

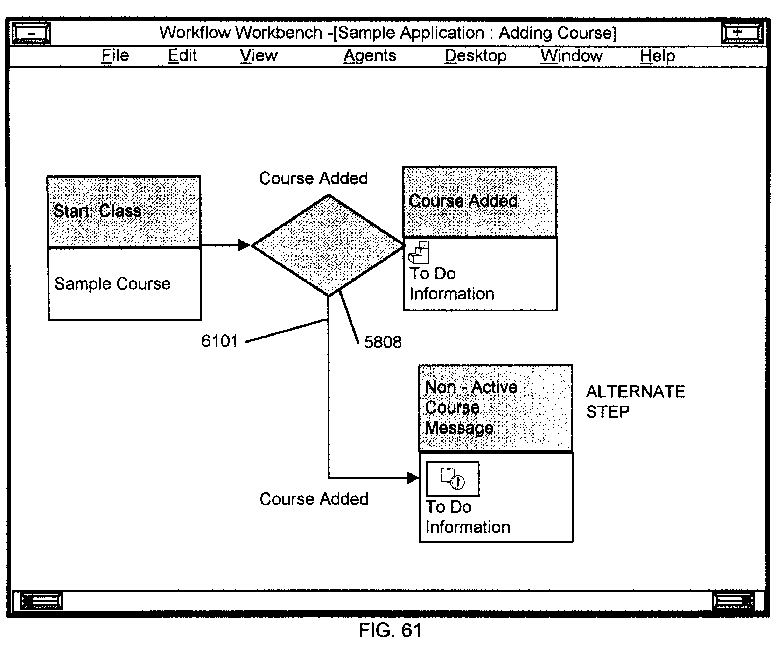

Whenever an events connects to a conditional step, the possibility exists that the conditional expression may evaluate to false. In this case the conditional step will not be executed. If no other steps are connected to the event, the flow will stop. However, a conditional step may have one or more Alternate Steps connected. An alternate steps is connected to the bottom point 6101 of the decision diamond. it (FIG. 61) This connection construct allows the SmartStream workflow engine to continuing evaluating potential target steps to be performed. An alternate step itself may be conditional, and subsequently, it may have it 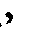 s own alternate steps. When the last step in an alternate step sequence is unconditional, it guarantees that at least one step will result in response to the particular workflow event. All of the lines connecting a sequence of alternate steps represent the same workflow event (i.e.: Alternate steps share the same input events as their parent).

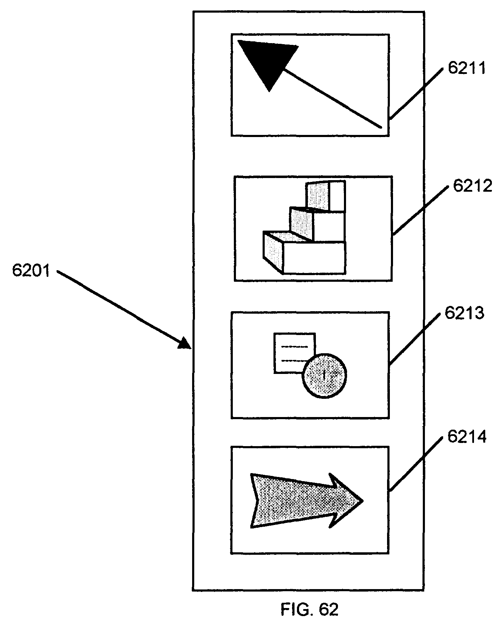

The WMT provides a floating tool pallet 6201 as shown in FIG. 62. The tools on the palette are used to build and modify workflow maps. The following shows the palette tools and their function:

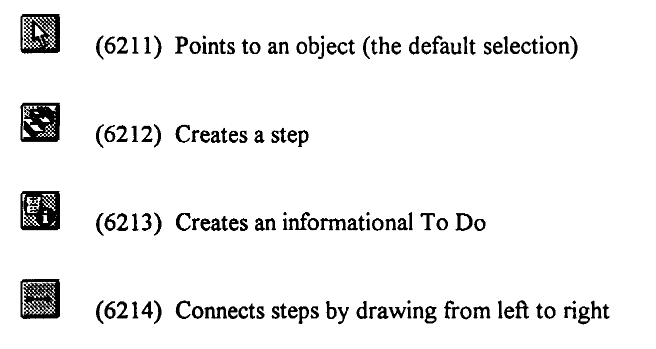

To create new steps, the user selects (picks) one of the middle 2 pallet icons and clicks somewhere on the map window to create a new object of that type on the map. Once created in this manner, the new step is yet undefined as it is not connected to an event. Undefined steps are displayed with a yellow step name region, as opposed to the light blue color of defined (connected) steps.

To complete the step definition, the user must have specified the Step Name and Activity properties for the step (via the step properties dialog), and then use the 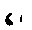 Connection tool 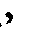 (the 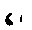 arrow 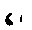 icon on the pallet) to draw a line from the 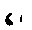 upstream 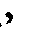 step to the new 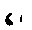 downstream 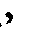 step.

Each mapping tool object ( 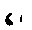 Start Step, 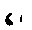 Step 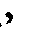 , and 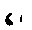 Event 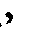 ) has a set of properties associated with the object. These properties control the actual definition of the workflow data for the object, and subsequently it 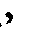 s representation on the map. Additionally, each of these objects has an active right mouse button menu associated with it. The right mouse button menu is typically used to access a common set of functions that apply to the selected object. For example, each object 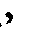 s right mouse menu contains an entry to invoke the 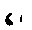 Properties 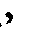 dialog for the object. The tabbed property sheet provides a 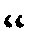 one stop shopping 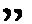 mechanism for managing for the object

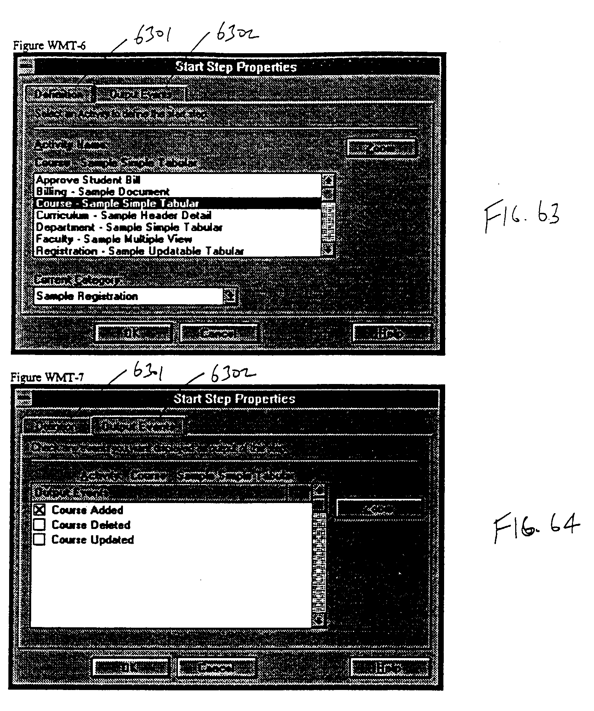

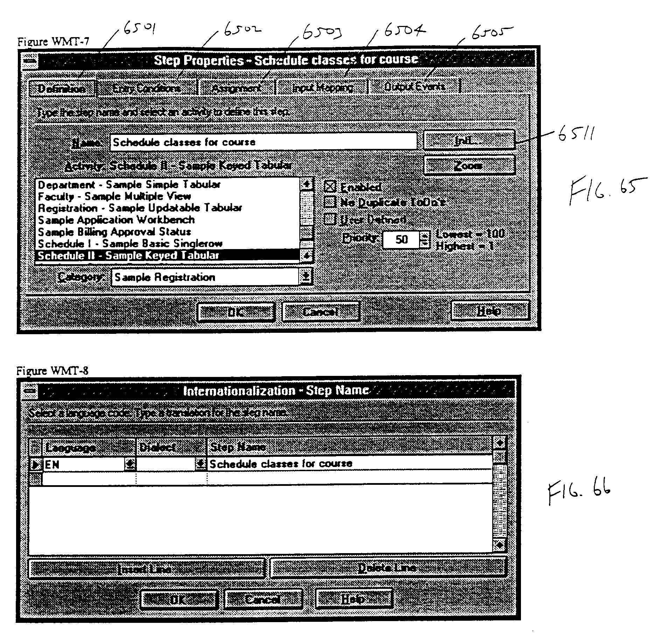

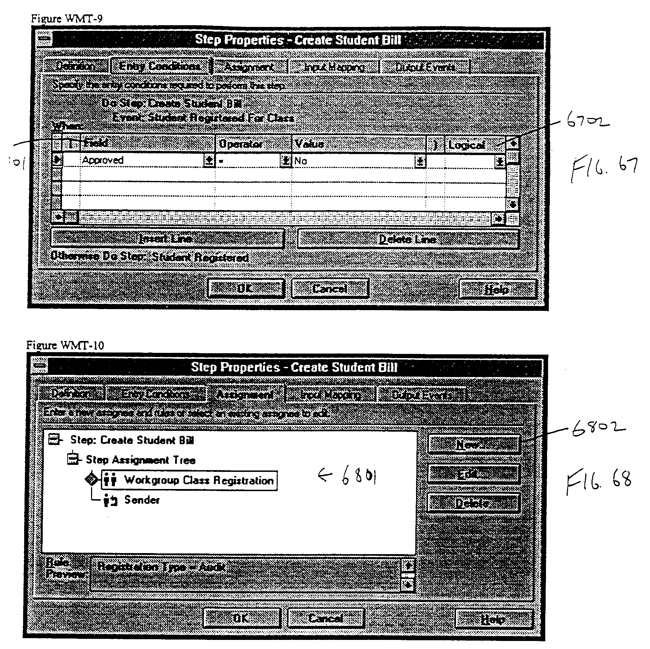

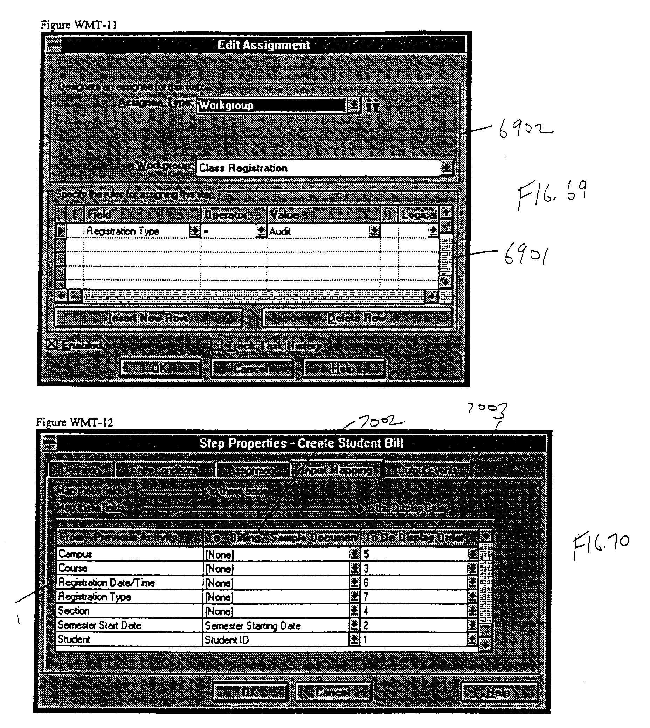

Referring to FIGS. 63 and 64, most of the actual workflow data is managed via the Properties dialog for each of the workflow objects. The Start Step 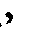 s properties dialog is a subset of a standard workflow step because is actually a generalized workflow step used to provide the starting context (event) information for the map. The property dialog for the Start Step contains only 2 tabs: the 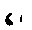 Definition 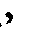 tab 6301 and the 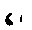 Output Events 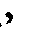 tab 6302, referring to FIG. 63 and FIG. 64 respectively. The Definition tab (FIG. 63) allows the user to select a generalized starting activity (one of the SmartStream, or user defined, activity windows). The 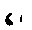 Output Events 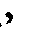 tab (FIG. 64) then displays the list of possible events for the selected activity. The user may select (check) one of more of these to provide a starting context for the map. If the actual workflow has already been defined (i.e.: it already exists within the database), the WMT will automatically display all of the existing steps connected to each of the selected output events. If there are no defined steps for the selected event (i.e.: no workflow exists), the WMT will display an unconnected event coming out of the Start Step. (Unconnected events display a circle connector at the right end instead of an arrowhead.) Since the output events property is shared by the starting step and all other workflow steps, this methodology affords the user a mechanism for browsing any existing workflow

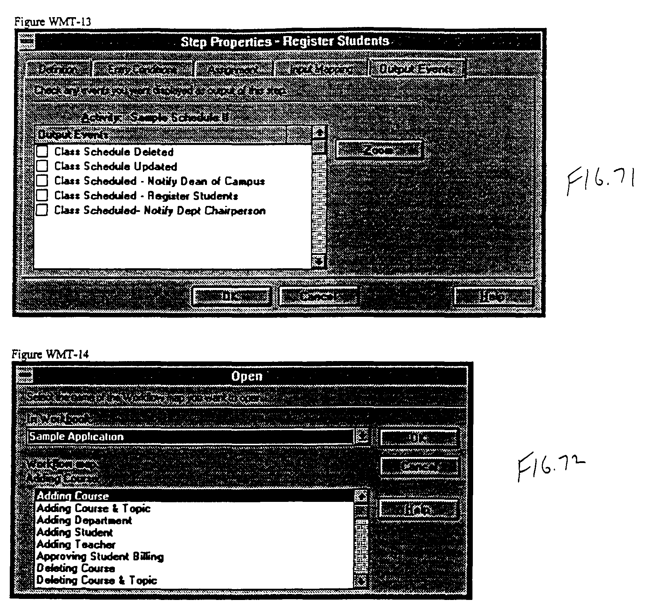

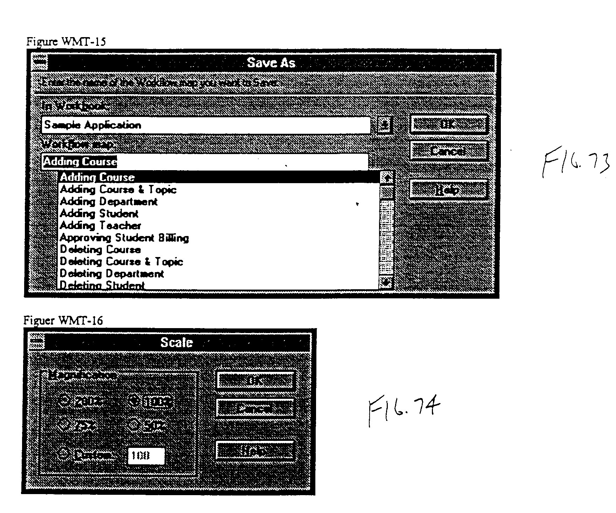

Referring to FIG. 65, standard workflow steps (both activity based and informational) also have a properties dialog box. This dialog contains the following 5 tabs: 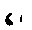 Definition 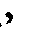 6501; 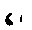 Entry Conditions 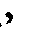 6502; 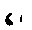 Assignment 6503; Input Mapping 6504; and 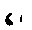 Output Events 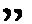 6505.
The definitions tab 6501 allows the user to specify the Name of the workflow step; it 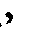 s priority; and it 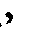 s 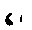 enabled 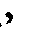 status. The 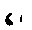 Intl... 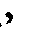 button 6511 invokes the dialog shown in FIG. 66. It allows the user to specify translated (e.g.: French) versions of the step 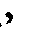 s name.
Referring to FIG. 67, the entry conditions tab 6502 allow the user to craft a conditional expression based on the data columns which are passed with the steps incoming event. The conditional expression may a compound one (a set of expressions 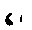 AND 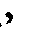 ed or 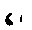 OR 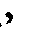 d together). If the conditional grid is left blank, then the step is defined as being 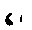 unconditional 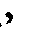 . This tab will not be active is the step is undefined (unconnected), as there is no 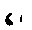 incoming 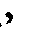 event data upon which to base a conditional expression.
There is only one set of entry conditions allowed for a step. These conditional expressions are one of the most important features in the Conditional Workflow system.
The entry conditions dialog applies the 32 column values from the incoming Event constructing these expressions. These values are accessible from the dropdowns of the 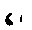 Field 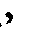 column 6701 of FIG. 67. The Operator set is dependent on the type of the data selected in the 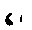 Field 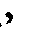 column. For example, if the data type of the 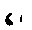 field is a integer, the Operator may be equal, greater, less, and etc. The 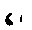 Logical 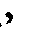 column 6702 contains the boolean operators like AND, OR, and NOT to aggregate expressions into a larger logic construct. If the overall expressions are TRUE, the designated Next Step will be executed. Otherwise the Alternate Next Step will take place. Alternate Steps are optional.
The assignments tab (FIG. 68) allows the user to control which SmartStream user is responsible for performing this steps activity when the step happens. Such assignments may be conditionally computed and are the result of the evaluation of an assignment decision tree by the workflow engine. The assignments table shows a decision tree 6801 as represented by the decision diamond with it 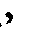 s starting input at the top and the TRUE evaluation (assignment) shown at the right, the FALSE evaluation exits at the bottom and either enters a new decision diamond (conditional assignment), or encounters a 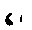 default 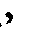 (unconditional) assignment. The default assignment is always the last one in the tree and is unconditional. It may not be removed. It's value (the actual assignee) may be changed. Unconditional assignments are added and removed by the New/Delete buttons to the right of the tree. They are always inserted just above the currently selected node. The 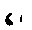 New... 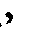 button 6802 invokes the dialog box shown in FIG. 69 which allows the user to specify the conditions 6901 (see the discussion of the Entry Conditions TAB), and the assignee type 6902.
   The Input Mapping Tab (FIG. 70) allows the user to manage the mapping of the incoming (event) data into the steps activity window fields. The leftmost column 7001 is fixed and displays the data columns that are bound to the event. The middle column 7002 displays the fields which are to receive (as initial values) the data from corresponding event column. The third column 7003 manages the display order of the event data on the SmartStream Task Details (synopsis) window.
   The 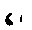 Output Events 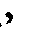 tab (FIG. 71) is used to control the visible navigation of the map through the selection of specific output events for the specified activity. It controls the visible portion of the map and does not impact the actual workflow itself. It functions exactly as the 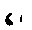 Output Events 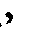 tab of the Start Step does. Specifically in the way that it automatically displays all of the already exiting selected step for a checked event.
   Users create new steps by selecting the appropriate icon from the tool palette (FIG. 62). They may select a standard step, or an informational step. Users connect new steps by using the connection tool on the tool palette (e.g., the arrow 6211).
   There are two ways in which steps may be removed from the workflow map. The first is to simply remove the graphical picture from the map. This operation is referred to a REMOVING a step from the map. This operation does not affect the underlying workflow data. Indeed, the step remains as a part of the actual workflow. It is only the current visual picture that is altered. The second means of 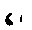 removing steps from a workflow map is to delete them. The delete operation is described below.
   Steps may be deleted by selecting the step and using the menu bar delete, or the right mouse menu 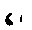 Delete From Workflow 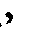 selection. This action is fundamentally different from the 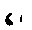 Remove From Workflow MAP 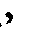 operation discussed below. Deleting a step from a workflow definition implies removing it from the workflow map.
   The visual representation of the map may be altered in two ways. First, by manipulating the scale factor at which the map is drawn. Refer to the 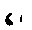 Scale 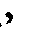 menu selection under the 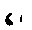 View 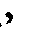 menu. The second method of managing the visual representation is throughout selectively removing workflow steps from the map. This procedure does not delete such steps from the workflow definition (from the database). It simply removes them from the current rendering of the map (presumably because they are un-important to the primary flow path being displayed).
   A WorkBook is a collection of workflow maps. There are no restrictions on placing the workflow maps into workbook containers however it is recommended that related maps be placed into a common workbook.
   Unlike an existing Workflow Workbench map that may start from any step activities in the flow, a WMT workflow map usually depicts a business process like 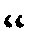 Loan Application. 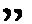 A business process may contain many step activities that are insignificant to the entire flow. It is unnecessary to build workflows for all the step activities in the flow. This is a major difference between the WMT and the previous Workflow Workbench maps.
   Users can drag an object from the Palette and drop it on a map infers creating the object. Since the WMT is an OLE Server, drag & drop will result in the WMT objects to be copied or moved to the other OLE containers.
   The context-sensitive Right Mouse Popup menu is available for all the WMT objects. The popup menu contains frequently used commands and access to the property sheet of the object. The right mouse will also act like an implicit select. For example, if there is no object selected, the right-mouse will select the pointing object and display the popup menu. . For novice users the Right Mouse Menu also provides a list of suggested commands for the object. Depending on the state of an object, the unavailable commands will be grayed.
   The WMT is an OLE Server so that a workflow map, can be linked or embedded into another application 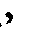 s container window.

The various items on the horizontal menu 5899 shown in FIG. 58 are described in further detail below.

### File Menu

- New
   This command creates a new Workflow Map with the 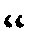 Untitled 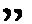 name. A new workflow map will contain a Starting Activity object on the left-top corner of the map.
- **Open...**
   This command displays a dialog box for selecting workflow maps (by workbook container) (see FIG. 72).
- **Close**
   This command closes the active workflow map. If the map has modifications, a warning message will be displayed.
- **Save**
   Saves the current workflow map..
- **SaveAs...**
   This command saves the current Workflow Map using a new name. The Workflow Map name is a 30 characters string. See FIG. 73.
- **Exit**
   Exit the Workflow Mapping Tool program. This selection will prompt user to save the modifications if exist.

### Edit Menu

The Edit Menu provides a set of commands to manipulate the workflow objects.
- **Remove From Workflow Map Only**
   This command deletes selected objects from a workflow map. It does not remove any of the underlying data from the database.
- **Delete From Workflow**
   WMT deletes all the graphical data and workflow data that resides on the **next_step** and its normalized tables. If the deleted objects contained multiple connected Next Steps, WMT deletes only the first level Next Step objects' data. The Next Step objects that directly connected to the deleted objects will be marked invalid. Users can defect the difference visually of an invalid object. The activity_master and event_master tables remain intact in this operation.
- **Select All**
   This command selects all the objects on a workflow map. Many of the Edit commands apply only to a single selection. The 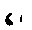 Select All 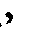 command however is very convenient for moving the entire picture around on map.

### View Menu

- **Scale**
   This command invokes the dialog box shown in FIG. 74 which allow users to scale a workflow map with the specified factor.
- **Grid Visible**
   Grid is a workpage's property. If user selects this option, a check mark will display at the menu.
- **Snap to Grid**
   The newly created objects will be snapped to the closest grid on the workflow map. If user selects this option, a check mark will be displayed at the menu
- **Tool Palette**
   Tool Palette is a workpage's property. Tool Palette will not display if there is no open workflow map. Since the Workflow Mapping Tool which is a MDI window supports only one type of document, the Tool Palette will be shared among all the WMT 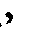 s child windows.
   User can turn on or off the Tool Palette at the workflow map level. If user selects this option, a check mark will display at the menu. This selection is persistent with the workflow map.
- **Tool Bar**
   The Tool Bar exists both in the mainframe and map windows. In the mainframe window the Tool Bar contains only the New and Open buttons. All other buttons pertain to the map window are dimmed. In the map window the Tool Bar buttons include Print, Cut, Paste, Alignments and etc.
   User can turn on or off the Tool Bar. If selected, a check mark will display at the menu. This selection is persistent with the WMT.
- **Status Bar**
   The Status Bar exists both in the mainframe and map windows. User can turn on or off the Tool Bar. If selected, a check mark will display at the menu. This selection is persistent with the WMT.

### Layout Menu

This Menu provides a set of commands that are purely graphical. None of these operations will affect the workflow data on the database.
- **Align**
   Various align methods are provided in the pop menu. Users may align objects based on the Tops, Bottoms, Left Sides, and Right Sides of the objects.
- **Align To Grid**
   This command allows the selected objects be snapped to the closest grid line.

What has been described above are preferred embodiments of the present invention. It is of course not possible to describe every conceivable combination of components or methodologies for purposes of describing the present invention, but one of ordinary skill in the art will recognize that many further combinations and permutations of the present invention are possible. All such possible modifications are to be included within the scope of the claimed invention, as defined by the appended claims below.

## Claims

1. A multi-user computer system operative to control the flow of data between a plurality of users of the computer system in connection with the performance of activities by the plurality of users, wherein the activities generate or use the data, the system comprising:
means for receiving first user information input in connection with a first activity;
means for defining a plurality of activities performable by a plurality of users in connection with the performance of the work flow of a particular application;
means for evaluating the first user information; means responsive to the evaluating means for generating a conditional signal; and
means responsive to the conditional signal for routing work flow to another user, wherein the means further includes:
means responsive to a first state of the condition signal for routing the work flow to a second user for performance of a second activity; and
means responsive to a second state of the condition signal for routing the work flow to a third user for performance of a third activity.

2. The system as defined in claim 1, wherein the second user and the third user are identical.

3. The system as defined in claim 1, wherein the second activity is identical to the third activity.

4. The system as defined in claim 1, wherein the first user information input comprises execution of a first activity in the work flow of a selected program.

5. The system as defined in claim 1, wherein the defining means includes at least one table listing a plurality of activities required for execution of a selected work flow application.

6. The system as defined in claim 5, wherein the defining means further includes data defining a sequence for performing the plurality of activities.

7. The system as defined in claim 6, wherein the sequence of the second activity is conditioned upon performance of the first activity.

8. The system as defined in claim 1, wherein the defining means further includes data defining a selected one of the users who must perform at least one of the plurality of activities.

9. The system as defined in claim 8, wherein the selection of an activity for performance by the second user is conditioned upon the performance of the first activity by the first user.

10. The system as defined in claim 8, wherein the at least one activity is performable by more than one user.

11. The system as defined in claim 10, wherein the second and third user alternatively perform the second activity, only after the first user has performed the first activity in the work flow application.

12. The system as defined in claim 11, wherein the defining means is responsive to the performance of the second activity to inhibit repeated performance of the second activity.

13. The system as defined in claim 6, wherein the defining means includes condition data defining the conditions upon which selected activities among the plurality of activities are performed in connection with the work flow of a particular application.

14. The system as defined in claim 13, wherein the condition data defines that the second activity is performable only after the first activity has been performed.

15. The system as defined in claim 13, wherein the condition data defines that the third activity is performable only after the first activity has been performed, but not after the second activity has been performed.

16. The system as defined in claim 13, wherein the condition data defines that the third activity is performable only after the first activity and the second activity have been performed.

17. The system as defined in claim 13, wherein the condition data defines that the second activity is performable only after the first activity has been performed and a subsequent activity has been performed by the third user.

18. The system as defined in claim 6, wherein the defining means includes condition data defining the conditions upon which selected users among the plurality of users may perform selected activities among the plurality of activities that may be performed in connection with the work flow of a particular application.

19. The system as defined in claim 18, wherein the condition data defines that the second activity is performable by the second user only after the first user has performed the first activity.

20. The system as defined in claim 18, wherein the condition data defines that the third activity is performable by the third user only after the first user has performed the first activity and the second activity has been performed.

21. The system as defined in claim 1, wherein the evaluating means is operative to evaluate the defining means.

22. The system as defined in claim 1, wherein the condition signal is indicative of a plurality of next step activities.

23. The system as defined in claim 22, further comprising means responsive to the performance of the first activity by the first user, for activating the condition signal to indicate that both the second activity and the third activity may then be performed.

24. The system as defined in claim 22, further comprising means responsive to the performance of the first activity by the first user, for activating the condition signal to indicate that the second activity may then be performed by the second user.

25. The system as defined in claim 24, wherein the activating means is further operative to activate the condition signal to indicates that the third activity may then be performed by either the second user or the third user.

26. The system as defined in claim 1, wherein the routing means is operative to inhibit performance of a selected activity in a work flow application, until all prerequisite activities have been performed.

27. A computer readable storage medium containing program code for controlling the operation of the system defined in claim 1.
